# EUROPÄISCHE PATENTSCHRIFT

(11) **EP 4 174 703 B1**
(45) Veröffentlichungstag und Bekanntmachung des Hinweises auf die Patenterteilung: **18.09.2024**
(21) Anmeldenummer: 22201575.2
(22) Anmeldetag: 14.10.2022
(51) Int. Cl.: G06F 21/62

(54) **WIEDERHERSTELLEN EINES KRYPTOGRAFISCHEN SCHLÜSSELS**
RECOVERING CRYPTOGRAPHIC KEY
RÉCUPÉRATION DE CLÉ CRYPTOGRAPHIQUE

(30) Priorität: 27.10.2021 DE 102021127976
(43) Veröffentlichungstag der Anmeldung: 03.05.2023
(73) Patentinhaber: Bundesdruckerei GmbH, 10969 Berlin (DE)
(72) Erfinder: RÜCKRIEMEN, Jörg, verstorben (DE)
(74) Vertreter: Richardt Patentanwälte PartG mbB

(56) Entgegenhaltungen:
- EP-A1- 1 662 699
- GB-A- 2 446 173
- US-A1- 2010 217 987

## Beschreibung

Die Erfindung betrifft ein Verfahren zum Wiederherstellen eines kryptografischen Schlüssels zum Entschlüsseln eines verschlüsselten digitalen Dokuments sowie ein Ausstellercomputersystem und ein System zum Wiederherstellen des kryptografischen Schlüssels.

Physische Dokumente, wie beispielsweise Zeugnisse, umfassen einen Dokumentenkörper, beispielsweise aus Papier, auf welchem sie ausgestellt werden, d.h., welcher mit den Daten des Dokuments beschriftet ist. Allerdings können solche Dokumente, etwa mit modernen Bildbearbeitungsprogrammen und Farbdruckern, leicht gefälscht werden. Insbesondere stellt sich die Problematik fehlender Fälschungssicherheit, wenn zusätzlich zu einem Original des Dokuments weitere Ausfertigungen wie etwa Abschriften, Zweitschriften und Kopien benötigt werden. Ferner stellt sich im Falle von Dokumenten mit beschrifteten Dokumentenkörpern die Schwierigkeit, dass diese bzw. deren Daten, nicht direkt in eine elektronische Datenverarbeitung integriert werden können. Werden die Daten der Dokumente bzw. deren Beschriftung einfach nur eingescannt, ergibt sich beispielsweise wiederum die Problematik fehlender Fälschungssicherheit, da die eingescannten Daten leicht verändert werden können. Zudem kann es im Zuge des Scannens zu Fehlern kommen.

Wird ein digitales Dokument ausgestellt, stellt sich die Problematik eines sicheren Bereitstellens dieses Dokuments. Werden zur Absicherung kryptografische Schlüssel verwendet, hängt der Zugriff auf das digitale Dokument von einem Zugriff auf einen entsprechenden kryptografischen Schlüssel ab. Geht der entsprechende kryptografische Schlüssel verloren oder wird dieser beschädigt, kann nicht mehr auf das digitale Dokument zugegriffen werden.

Die US 2010/217987 A1 beschreibt ein Dokumentensicherheits-Managementsystem zur sicheren Verwaltung von Dokumenten für Nutzer. Das Dokumentenverwaltungssystem umfasst einen Dokumentenspeicher, der eine Einrichtung zum Speichern von Datendateien bereitstellt, die die Dokumente darstellen. Ein Schlüsselspeicher speichert einen öffentlichen Schlüssel eines oder mehrerer Verschlüsselungsschlüsselpaare, wobei jedes der Verschlüsselungsschlüsselpaare einem der Dokumente zugeordnet ist, die in dem Dokumentenspeicher gespeichert sind. Jedes in dem Dokumentenspeicher gespeicherte Dokument ist mit dem öffentlichen Schlüssel des Verschlüsselungsschlüsselpaars verschlüsselt, das dem Dokument zugeordnet ist. Eine Vielzahl von Client-Terminals sind betreibbar, um die Dokumente zu speichern und aus dem Dokumentenspeicher zur Verarbeitung durch einen Nutzer abzurufen. Jeder Nutzer ist im Besitz eines digitalen Zertifikats, das ein Zertifikatsschlüsselpaar umfasst. Der Schlüsselspeicher enthält den privaten Schlüssel des Verschlüsselungsschlüsselpaars, der mit dem öffentlichen Schlüssel des dem Nutzer zugeordneten Zertifikatsschlüsselpaars verschlüsselt ist. Das Client-Endgerät ist mit dem privaten Schlüssel des Zertifikatschlüsselpaars im Besitz eines Nutzers betreibbar. Das Client-Endgerät dient dazu, den privaten Schlüssel des Verschlüsselungsschlüsselpaars unter Verwendung des privaten Schlüssels des Zertifikatsschlüsselpaars eines Nutzers zu entschlüsseln und das verschlüsselte Dokument aus dem Dokumentenspeicher abzurufen und das Dokument unter Verwendung des entschlüsselten privaten Schlüssels des Verschlüsselungsschlüsselpaar zu entschlüsseln.

Die GB 2 446 173 A beschreibt ein Schlüsselverwaltungsverfahren zur Datensicherung. Von einer Datenübertragungsvorrichtung zur Sicherung empfangene Daten werden unter Verwendung eines Verschlüsselungsschlüssels verschlüsselt und zusammen mit einer verschlüsselten Kopie des Entschlüsselungsschlüssels, der zum Entschlüsseln der Daten erforderlich ist, auf einem entfernbaren Datenspeicherelement gespeichert. Der Entschlüsselungsschlüssel wird unter Verwendung eines öffentlichen Schlüssels verschlüsselt, der von einem vertrauenswürdigen Dritten erzeugt wird. Wenn ein Nutzer auf die gesicherten Daten zugreifen möchte, wird der verschlüsselte Entschlüsselungsschlüssel dem vertrauenswürdigen Dritten zur Entschlüsselung bereitgestellt. Die vertrauenswürdige dritte Partei verifiziert den Nutzer, entschlüsselt den verschlüsselten Entschlüsselungsschlüssel unter Verwendung des entsprechenden privaten Schlüssels des öffentlichen Schlüssels und stellt dem Nutzer den Entschlüsselungsschlüssel bereit. Der Entschlüsselungsschlüssel wird dann verwendet, um die verschlüsselten gesicherten Daten zu entschlüsseln.

Der Erfindung liegt demgegenüber die Aufgabe zugrunde, ein effizientes und sicheres Verfahren zum Wiederherstellen eines kryptografischen Schlüssels zum Entschlüsseln eines verschlüsselten digitalen Dokuments zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Wiederherstellen eines ersten kryptografischen Schlüssels zum Entschlüsseln eines verschlüsselten digitalen Dokuments durch ein Ausstellercomputersystem eines Ausstellers des digitalen Dokuments.

Das digitale Dokument, bei welchem es sich um eine digitale Kopie von Daten des physischen Dokuments handelt, ist in verschlüsselter Form unter einem ersten anonymisierten Dateinamen auf einem Server gespeichert. Auf dem Server ist ferner eine erste Kopie des ersten kryptografischen Schlüssels in verschlüsselter Form unter einem zweiten anonymisierten Dateinamen gespeichert ist. Das verschlüsselte digitale Dokument ist unter Verwendung des ersten kryptografischen Schlüssels entschlüsselbar. Die erste Kopie des ersten kryptografischen Schlüssels ist mit einem zweiten öffentlichen kryptografischen Schlüssel eines dem Aussteller des digitalen Dokuments zugeordneten zweiten asymmetrischen Schlüsselpaars verschlüsselt.

Der zweite anonymisierte Dateiname ist unter Verwendung einer Kombination von personenbezogenen Attributen des Inhabers des digitalen Dokuments berechnet, auf die eine Einwegfunktion angewendet ist.

In einem geschützten Speicherbereich eines Speichers des Ausstellercomputersystems ist ein zweiter privater kryptografischer Schlüssel des zweiten asymmetrischen Schlüsselpaars des Ausstellers gespeichert.

Das Verfahren umfasst:
- Bestimmen des zweiten anonymisierten Dateinamens unter Verwendung der Kombination von personenbezogenen Attributen des Inhabers des digitalen Dokuments durch das Ausstellercomputersystem,
- Aufbauen einer ersten Verbindung über ein Netzwerk zwischen dem Ausstellercomputersystem und dem Server,
- Senden einer Leseanfrage zum Lesen der verschlüsselten ersten Kopie des ersten kryptografischen Schlüssels von dem Ausstellercomputersystem über die erste Verbindung an den Server, wobei die Leseanfrage den bestimmten zweiten anonymisierten Dateinamen zum Identifizieren der verschlüsselten ersten Kopie des ersten kryptografischen Schlüssels auf dem Server umfasst,
- in Antwort auf das Senden der Leseanfrage, Empfangen der verschlüsselten ersten Kopie des ersten kryptografischen Schlüssels durch das Ausstellercomputersystem von dem Server über die erste Verbindung,
- Entschlüsseln der verschlüsselten ersten Kopie des ersten kryptografischen Schlüssels durch das Ausstellercomputersystem unter Verwendung des zweiten privaten kryptografischen Schlüssels.

Ausführungsformen können den Vorteil haben, dass ein sicheres Verfahren zum Wiederherstellen eines kryptografischen Schlüssels, mit welchen ein auf einem Server bereitgestelltes digitales Dokument entschlüsselt werden kann, bereitgestellt wird. Dadurch, dass das digitale Dokument auf dem Server in verschlüsselter Form unter einem anonymisierten Dateinamen abgespeichert bereitgestellt wird, kann sichergestellt werden, dass ein Zugriff auf die Daten des digitalen Dokuments ausschließlich unter Kenntnis des entsprechenden anonymisierten Dateinamens sowie des entsprechenden kryptografischen Schlüssels möglich ist. Der entsprechende anonymisierte Dateiname sowie der kryptografische Schlüssel werden beispielsweise in Form einer Beschriftung eines Dokumentenkörpers des physischen Dokuments bereitgestellt. Sollte das entsprechende physische Dokument aber beispielsweise verloren gehen, so wird eine Möglichkeit für eine Wiederherstellung des Zugriffs auf das digitale Dokument bzw. die von dem digitalen Dokument bereitgestellten Daten benötigt. Bei den entsprechenden digitalen Daten des digitalen Dokuments handelt es sich um digitale Kopien der Daten des physischen Dokuments. Somit kann durch eine Wiederherstellung des Zugriffs auf das digitale Dokument ein Zugriff auf die Daten des physischen Dokuments bereitgestellt werden. Ohne den anonymisierten Dateinamen und den kryptografischen Schlüssel zum Entschlüsseln des digitalen Dokuments ist der Zugriff auf die Daten des digitalen Dokuments nicht möglich.

Bei dem ersten und zweiten anonymisierten Dateinamen kann es sich beispielsweise um unterschiedliche Dateinamen handeln. Beispielsweise handelt es sich bei dem ersten und zweiten anonymisierten Dateinamen um identische Dateinamen. In diesem Fall sind beispielsweise die Daten des physischen Dokuments zusammen mit der ersten Kopie des ersten kryptografischen Schlüssels auf dem Server gespeichert. Bei dem ersten und oder dem zweiten anonymisierten Dateinamen handelt es sich beispielsweise um einen ableitbaren Dateinamen, insbesondere einen unter Verwendung einer Einwegfunktion ableitbaren Dateinamen. Bei dem ersten und oder dem zweiten anonymisierten Dateinamen handelt es sich beispielsweise um einen nicht ableitbaren Dateinamen, wie etwa eine Zufallszahl.

Umfasst ein anonymisierter Dateiname eine Kombination von personenbezogenen Attributen des Inhabers des digitalen Dokuments, auf welche eine Einwegfunktion angewendet ist, so wird ein Ausstellercomputersystem dazu in die Lage versetzt, den anonymisierten Dateinamen zu rekonstruieren, wenn diesem die personenbezogenen Attribute des Inhabers des digitalen Dokuments vorliegen. Beispielsweise empfängt das Ausstellercomputersystem die entsprechenden personenbezogenen Attribute von dem Inhaber des digitalen Dokuments. Beispielsweise werden in dem Ausstellercomputersystem die entsprechenden personenbezogenen Attribute von dem Inhaber des digitalen Dokuments als Bestandteil einer Wiederherstellungsanfrage und/oder einer Verlustmeldung über einen Verlust des physischen Dokuments zur Verfügung gestellt. Gegebenenfalls kann der Aussteller des physischen Dokuments die Kombination aus personenbezogenen Attributen um ein Geheimnis des Ausstellers ergänzen sowie weitere für die Berechnung des anonymisierten Dateinamens notwendigen Daten. Bei den entsprechenden weiteren Daten kann es sich beispielsweise um einen Dokumenten-ID-Wert, einer Aussteller-ID und/oder einer Gabe eines Aufstellungszeitraums, in welchem das physische Dokument und/oder das digitale Dokument ausgestellt wurde, handeln. Das Ausstellercomputersystem baut eine Verbindung über das Netzwerk zu dem Server auf, auf welchem das digitale Dokument gespeichert ist. Bei der Verbindung kann es sich beispielsweise um eine verschlüsselte Verbindung handelt, insbesondere eine Ende-zu-Ende verschlüsselte Verbindung. Über die entsprechende Verbindung kann das Ausstellercomputersystem eine Leseanfrage zum Lesen einer verschlüsselten Kopie des kryptografischen Schlüssels senden, welche zusammen mit dem digitalen Dokument auf dem Server gespeichert ist. Somit kann durch den Server die zweite für den Zugriff auf die Daten des digitalen Dokuments notwendige Information in Form der Kopie des kryptografischen Schlüssels bereitgestellt werden. Die entsprechende Kopie des kryptografischen Schlüssels ist mit einem öffentlichen Schlüssel des Ausstellercomputersystems verschlüsselt. Somit kann sichergestellt werden, dass ausschließlich das Ausstellercomputersystem, welcher sich im Besitz des privaten kryptografischen Schlüssels zum Entschlüsseln der Kopie des kryptografischen Schlüssels befindet, dazu in die Lage versetzt ist, den entsprechenden kryptografischen Schlüssel zu verwenden. Nur das Ausstellercomputersystem kann den verschlüsselten kryptografischen Schlüssel entschlüsseln und diesen mithin nutzen. Für den Zugriff auf die Kopie des kryptografischen Schlüssels ist ferner der zweite anonymisierte Dateiname notwendig, welchen das Ausstellercomputersystem bestimmt hat. Unter Verwendung des bestimmten zweiten anonymisierten Dateinamens kann das Ausstellercomputersystem eine Leseanfrage nach der Kopie das kryptografischen Schlüssels erstellen, anhand derer der Server die auszulesende Kopie des kryptografischen Schlüssels identifizieren kann. In Antwort auf eine entsprechende Leseanfrage empfängt das Ausstellercomputersystem die verschlüsselte Kopie des kryptografischen Schlüssels, welche das Ausstellercomputersystem unter Verwendung seines privaten kryptografischen Schlüssels entschlüsselt. Somit kann sichergestellt werden, dass ausschließlich das Ausstellercomputersystem dazu in die Lage versetzt ist, in den Besitz der entschlüsselten Kopie des fotografischen Schlüssels zu gelangen.

Ausführungsformen können den Vorteil haben, dass einem Nutzer eines physischen Dokuments zusätzlich zu einem physischen Dokument auf sichere Weise eine digitale Kopie der Daten des entsprechenden physischen Dokuments, d.h. ein digitales Dokument, bereitgestellt werden kann. Bei der digitalen Kopie handelt es sich beispielsweise um ein signiertes Dokument, etwa ein signiertes PDF-Dokument. Durch die Verschlüsslung des digitalen Dokuments können dessen Daten, insbesondere personenbezogene Daten, gegen unberechtigte Zugriffe geschützt werden. Da das digitale Dokument zudem unter einem anonymisierten Dateinamen gespeichert ist, kann auch anhand des Dateinamens nicht auf dessen Inhalt, insbesondere nicht auf von dem digitalen Dokument umfasste personenbezogene Daten geschlossen werden. Zudem wird die digitale Kopie in einer unkomplizierten Weise bereitgestellt, für welche ein Nutzer beispielsweise nur einen minimalen Umfang an Hardware und Software benötigt. Beispielsweise kann zum Bereitstellen des digitalen Dokuments das physische Dokument und Nutzercomputersystem mit einer Zugriffsmöglichkeit auf den Server über ein Netzwerk, beispielsweise mittels HTTPS. Beispielsweise kann das digitale Dokument in einem öffentlich erreichbaren Portal zum Abrufen durch den Nutzer des physischen Dokuments abgelegt werden. Somit kann es beispielsweise jedem Inhaber eines physischen Dokuments, wie etwa einem Papierzeugnisses, ermöglicht werden, dieses in ein digitales Dokument umzuwandeln bzw. Zugriff auf eine digitale Kopie des entsprechenden physischen Dokuments in Form eines digitalen Dokuments zu erlangen, ohne spezielle Software installieren zu müssen.

Da für eine Entschlüsselung des digitalen Dokuments ein kryptografischer Schlüssel notwendig ist, welcher in Form einer Beschriftung eines entsprechenden physischen Dokuments bereitgestellt wird, setzt eine Entschlüsselung des digitalen Dokuments dem Besitz des physischen Dokuments voraus. Somit kann sichergestellt werden, dass für eine Bereitstellung des digitalen Dokuments ein Besitz des physischen Dokuments Voraussetzung ist. Zugleich kann so sichergestellt werden, dass die Daten des digitalen Dokuments nur für den Besitzer des physischen Dokuments entschlüsselbar und damit lesbar sind. Somit können insbesondere personenbezogene Daten des Dokumenteninhabers des digitalen Dokuments, bei welchem es sich beispielsweise um den Nutzer des physischen Dokuments handelt, effektiv vor unerlaubten Zugriffen geschützt werden. Das digitale Dokument wird in verschlüsselter Form auf einem Server bereitgestellt. Aufgrund der Verschlüsselung sind die Daten des digitalen Dokuments auf dem Server vor unberechtigten Zugriffen geschützt. Ferner ist für einen Zugriff auf das digitale Dokument eine Kenntnis des Dateinamens, unter welchem das digitale Dokument auf dem Server gespeichert ist, notwendig. In diesem Dateinamen handelt es sich um einen anonymisierten Dateinamen. Unter einem anonymisierten Dateinamen ist ein Dateiname zu verstehen, welcher keine Daten des Dokuments in Klartext umfasst. Insbesondere umfasst der Dateiname keine personenbezogenen Daten des Inhabers des digitalen Dokuments in Klartext. Bei dem anonymisierten Dateinamen kann es sich beispielsweise um einen Zufallswert oder um Daten des digitalen Dokuments handeln, auf welche eine Einwegfunktion angewendet wurde.

Somit werden zur Absicherung von Zugriffen auf das digitale Dokument zwei Absicherungsmechanismen implementiert: Zum einen ist für einen Zugriff auf das digitale Dokument eine Kenntnis des anonymisierten Dateinamens, unter welchem das entsprechende digitale Dokument auf dem Server gespeichert ist, notwendig. Dieser Dateinamen ist notwendig, um das digitale Dokument zu identifizieren. Ist das entsprechende digitale Dokument identifiziert, ist weiterhin eine Kenntnis des kryptografischen Schlüssels notwendig, mit welchem die verschlüsselten Daten des digitalen Dokuments entschlüsselt werden können. Erst bei Kenntnis des anonymisierten Dateinamens in Kombination mit dem kryptografischen Schlüssel ist ein Zugriff auf das digitale Dokument möglich.

Ausführungsformen erlauben es mithin, ein physisches Dokument auszustellen und dem Empfänger des entsprechenden physischen Dokuments sogleich in sicherer Form einen Zugriff auf eine digitale Kopie der Daten eines physischen Dokuments, d.h. ein digitales Dokument, unter Verwendung eines Nutzercomputersystems zu gewähren. Bei diesen Daten handelt es sich beispielsweise um Daten desselben oder Daten eines anderen physischen Dokuments.

Das Nutzercomputersystem empfängt die für einen Zugriff auf das digitale Dokument notwendigen Informationen, welche das physische Dokument bereitstellt. Die entsprechenden Informationen umfassen beispielsweise den anonymisierten Dateinamen des digitalen Dokuments bzw. des physischen Dokuments sowie den kryptografischen Schlüssel zum Entschlüsseln des digitalen Dokuments. Das Nutzercomputersystem baut eine Verbindung zu dem Server über ein Netzwerk auf. Zum Adressieren des Servers kann das Nutzercomputersystem beispielweise Adressdaten verwenden, welche ebenfalls von dem physischen Dokument, etwa in Form einer Beschriftung, bereitgestellt werden. Im Zuge des Aufbaus in der Verbindung zwischen dem Nutzercomputersystem und dem Server kann beispielsweise eine Verschlüsselung implementiert werden. Hierzu kann beispielsweise ein Sitzungsschlüssel, etwa ein symmetrischer kryptografischer Sitzungsschlüssel ausgehandelt werden, mit welchem die Kommunikation zwischen Nutzercomputersystem und dem Server verschlüsselt wird. Insbesondere kann eine Ende-zu-Ende-Verschlüsselung zwischen Nutzercomputersystems und dem Server implementiert werden.

Das Nutzercomputersystem sendet eine Leseanfrage über die Verbindung an den Server. Zum Identifizieren des digitalen Dokuments umfasst die Leseanfrage den anonymisierten Dateinamen des digitalen Dokuments. Anhand des anonymisierten Dateinamens des digitalen Dokuments wird der Server in die Lage versetzt, das gewünschte digitale Dokument zu identifizieren und zum Lesen bereitzustellen. Eine Leseberechtigung wird seitens des Nutzercomputersystems beispielsweise durch die Kenntnis des anonymisierten Dateinamens nachgewiesen. Das identifizierte digitale Dokument wird von dem Server in Antwort auf die Leseanfrage an das Nutzerdokument über das Netzwerk zurückgesendet. Das Nutzercomputersystem empfängt das digitale Dokument und stellt dieses in entschlüsselter Form bereit. Die Entschlüsselung des digitalen Dokuments erfolgt unter Verwendung des kryptografischen Schlüssels, welche das physische Dokument bereitstellt. Hierbei kann nun die Entschlüsselung des verschlüsselten digitalen Dokuments entweder auf dem Nutzercomputersystem erfolgen, welches das verschlüsselte digitale Dokument sowie den für die Entschlüsselung notwendigen kryptografischen Schlüssel empfangen hat oder auf dem Server. Für eine Entschlüsselung auf dem Server stellt das Nutzercomputersystem den Server den zur Entschlüsselung notwendigen kryptografischen Schlüssel temporär zur Verfügung. Hierzu handelt es sich bei der Netzwerkverbindung zwischen dem Nutzercomputersystem und dem Server beispielsweise um eine Verschlüsselung der Netzwerkverbindung. Insbesondere eine Ende-zu-Ende-Verschlüsselung kann sicherstellen, dass sowohl der zur Entschlüsselung verwendete kryptografische Schlüssel als auch das entschlüsselte digitale Dokument bei Übertragungen zwischen Nutzercomputersystem und Server vor unerlaubten Zugriffen geschützt sind.

Ausführungsformen können ferner den Vorteil haben, dass der anonymisierte Dateiname ebenso wie der kryptografische Schlüssel in Form einer Beschriftung des Dokumentenkörpers des physischen Dokuments bereitgestellt wird. Mit anderen Worten werden die entsprechenden Informationen in physischer Form, insbesondere nicht in elektronischer bzw. in digitaler Form, bereitgestellt. Für eine Nutzung durch das Nutzercomputersystem ist eine Überführung der entsprechenden Informationen von der physischen in die digitale Welt notwendig. Mit anderen Worten liegt ein Bruch des Übertragungsmediums vor. Dieser Bruch des Übertragungsmediums ermöglicht eine zusätzliche Sicherheit der entsprechenden Informationen, da diese den physischen Dokumenten nicht ohne Weiteres entnehmbar sind. So muss das physische Dokument vorliegen und die Beschriftung muss klar erkennbar sein. Ist das physische Dokument vor unberechtigter Einsichtnahme geschützt, so sind die entsprechenden Informationen sicher. Anders als im Falle einer elektronischen Speicherung der entsprechenden Informationen ist es im Falle des physischen Dokuments nicht möglich, sich extern über eine Kommunikationsverbindung, kabelgebunden oder kabellos, unbemerkt und unerlaubt Zugriff auf die entsprechenden Informationen zu verschaffen. Das Nutzercomputersystem kann die Daten des physischen Dokuments beispielsweise mittels einer Nutzereingabe oder mittels einer Erfassung unter Verwendung eines optoelektronischen Sensors des Nutzercomputersystem.

Nach Ausführungsformen können beispielsweise unterschiedliche Zugriffsverfahren implementiert werden. Ein Empfänger des physischen Dokuments, etwa ein Student im Falle eines Hochschulzeugnisses oder ein Schüler im Falle eines Schulzeugnisses, kann sich das digitale Dokument unter Verwendung des anonymisierten Dateinamens und des zugehörigen kryptografischen Schlüssels herunterladen. Hierzu tippt der Empfänger die entsprechenden daten beispielsweise ab oder scannt diese unter Verwendung eines optoelektronischen Sensors ein. Um ein Abtippen zu erleichtern, sind der anonymisierte Dateiname und der kryptografische Schlüssel beispielsweise jeweils acht Zeichen lang, sodass 16 Zeichen abzutippen sind. Die zugehörige Schnittstelle zum Eingeben des anonymisierten Dateinamens und des kryptografischen Schlüssels steht beispielsweise jedem, etwa über das Internet, offen. Beispielsweise darf diese Schnittstelle nicht durch Wissen der Schülerdaten kompromittierbar sein. Beispielswiese können zusätzliche Einschränkungen zum Schutz gegen automatisierte Abfragen implementiert werden.

Ein Aussteller des physischen Dokuments, etwa eine Universität im Falle eines Hochschulzeugnisses oder eine Schule im Falle eines Schulzeugnisses, kann beispielsweise dazu in die Lage versetzt sein, auch ohne Vorlage des physischen Dokuments Zugriff auf das digitale Dokument zu erhalten. Zu diesem Zweck ist das digitale Dokument beispielsweise in einem Datencontainer gespeichert, dessen Name aus Schülerdaten ableitbar ist. Der Aussteller kann den Namen des Datencontainers beispielsweise unter Verwendung der Schülerdaten ableiten, etwa indem er eine Hashfunktion auf diese anwendet. Der Server überprüft beispielsweise, ob der aufgefundene Datencontainer ein von dem anfragenden Aussteller, d.h. beispielsweise von der entsprechenden Universität bzw. Schule, ausgestelltes digitales Dokument umfasst. Wenn dies der Fall ist, sendet der Server das aufgefundene digitale Dokument beispielsweis an den anfragenden Aussteller. So kriegt beispielswiese jeder Ausstellerjeweils nur die eigenen verschlüsselten digitalen Dokumente zu sehen. Beispielsweis umfasst der Server zwar in verschlüsselter Form sämtlicher kryptografischer Schlüssel zum Entschlüsseln der digitalen Dokumente, kennt aber keine kryptografischen Schlüssel zum Entschlüsseln derselben.

Bei einer Beschriftung des Dokumentenkörpers handelt es sich um eine optisch erfassbare Veränderung des Dokumentenkörpers, in welcher Informationen codiert sind. Die entsprechenden Informationen können beispielsweise in alphanumerischer Form und/oder in geometrischer Form codiert sein. Beispielsweise können sie in eindimensionaler oder zweidimensionaler geometrischer Form codiert sein. Die Beschriftung kann beispielsweise auf den Dokumentenkörper aufgedruckt sein, in Form von Erhebungen auf diesen aufgebracht und/oder in diesen eingebracht sein. Eingebracht sein können die entsprechenden Informationen beispielsweis mittels Prägens, Schneidens und/oder Fräsens. Beispielsweise kann für ein Schneiden ein Laserverfahren zur Anwendung kommen. Die Beschriftungen Ausnehmungen aus dem Dokumentenkörper können in dieser Ausnehmung beispielsweise verfüllt und/oder versiegelt sein.

Dokumente, wie etwa Zeugnisse werden meist in Papierform ausgegeben. Eine digitale Kopie eines solchen Dokuments, etwa mit einer digitalen Signatur zur Authentizitätssicherung der von dem digitalen Dokument umfassten Daten, kann beispielsweise in Form eines PDF erzeugt werden. Allerdings umfassen Dateien im Format einer Seitenbeschreibungssprache, wie etwa eine PDF-Datei, die Beschriftung eines Dokuments, wie etwa aufgedruckte Dokumentendaten nicht in maschinenlesbarer Form. Um eine Maschinenlesbarkeit des digitalen Dokuments, d.h., ein automatisiertes Erfassen und Verarbeiten der Daten ohne eine zusätzliche Umwandlung, sicherzustellen, kann das digitale Dokument die Daten des physischen Dokuments zusätzlich in einem maschinenlesbaren Format, wie etwa einer Auszeichnungssprache, umfassen. Die Daten des physischen Dokuments werden beispielsweise als Attachment in maschinenlesbarer Form in das digitale Dokument eingebracht werden, etwa als Attachment nach PDF/A-3 Standard.

Es kann beispielsweise jedem Inhaber eines physischen Dokuments, wie etwa einem Papierzeugnisses, ermöglicht werden, dieses in ein digitales Dokument umzuwandeln bzw. Zugriff auf eine digitale Kopie des entsprechenden physischen Dokuments in Form eines digitalen Dokuments zu erlangen, ohne spezielle Software installieren zu müssen. Für den Inhaber eines physischen Dokuments kann somit ein sanfter Übergang von der Nutzung des physischen Dokuments zur Nutzung eines digitalen Dokuments ermöglicht werden. Dabei können insbesondere personenbezogene Daten, welche das digitale Dokument umfasst, vor unberechtigten Zugriffen geschützt werden. Eine sichere Übertragung des digitalen Dokuments kann zusätzlich unter Verwendung eines verschlüsselten Kanals bzw. einer verschlüsselten Kommunikationsverbindung gewährleistet werden. Personenbezogene Daten sind insbesondere Daten bzw. Attribute, welche eine Identifikation einer Person ermöglichen oder einer Person zuordenbar sind, auf welche die personenbezogene Sensordaten bezogen sind. Personenbezogene Daten umfassen insbesondere Vornamen, Name, Geburtsdaten, Geburtsorte, Anschriften, Telefonnummern, E-Mailaddressen, physische Attribute, Zeugnisnoten, Ausweisnummern, Passnummern, etc. Somit kann beispielsweise ein effektiver und effizienter Datenschutz für die digitalen Dokumente gewährleistet werden.

Es ist beispielsweise keine rechtliche Vorabanerkennung des digitalen Dokuments, wie etwa einem Zeugnis nötig, da weiterhin das zugrundliegende physische Dokument, wie etwa ein Papierzeugnis, ausgegeben wird.

Für ein gegebenes physisches Dokument wird beispielsweise eine digitale Kopie, etwa ein PDF-Dokument, gegebenenfalls erweitert um einen Datensatz mit den Daten in einem maschinenlesbaren Format, erzeugt. Zusätzlich werden ein anonymisierter Dateiname und ein kryptografischer Schlüssel erzeugt, etwa in Form zweier Zufallswerte wie zum Beispiel zweier Zufallszahlen. Anonymisierter Dateiname und ein kryptografischer Schlüssel werden als Beschriftung auf das Dokument physische Dokument aufgebracht. Danach wird das digitale Dokument beispielsweise digital signiert. Das signierte digitale Dokument wird unter Verwendung des kryptografischen Schlüssels beispielsweise mittels eines symmetrischen Schlüsselverfahrens, wie etwa AES-256 verschlüsselt. Das verschlüsselte digitale Dokument kann unter dem anonymisierten Dateinamen in einem öffentlich erreichbaren Portal abgelegt werden. Der Besitzer des physischen Dokuments kann das digitale Dokument von dem Portal unter Verwendung des anonymisierten Dateinamens und des kryptografischen Schlüssels herunterladen. Beispielsweise kann das Portal unter Verwendung eines Browsers mit einem Nutzercomputersystem aufgerufen werden. In dem Broser wird eine beispielsweise eine Webseite des Portals mit eine GUI bereitgestellt, welche Eingabefelder zur Eingabe des anonymisierten Dateinamens und des kryptografischen Schlüssels umfasst. Die Übertragung des auf dem Portal unter Verwendung des kryptografischen Schlüssels entschlüsselten digitalen Dokuments erfolgt beispielsweise über eine verschlüssele Verbindung, wie etwa HTTPS.

Zur Verkürzung der Länge des anonymisierten Dateinamens wird das digitale Dokument auf dem Server mit dem Portal beispielsweise in einem Verzeichnis mit dem Namen des Ausstellers des Dokuments, etwa einer Schule im Fall eines Zeugnisses, und einem Unterverzeichnis des Ausstellungszeitraums, in welchem das physische Dokument ausgestellt wurde, wie etwa einem Abschlussjahres, abgelegt. Zum Abrufen des digitalen Dokuments muss der Nutzer beispielsweise zunächst den Aussteller und den Ausstellungszeitraum auswählen und anschließend den anonymisierten Dateinamen und den kryptografischen Schlüssel eingeben.

Zur Vermeidung einer Übertragung des unverschlüsselten digitalen Dokuments über ein öffentliches Netzwerk, wie das Internet, kann eine Entschlüsselung des digitalen Dokuments lokal auf dem Nutzercomputersystem erfolgen. Das unter Verwendung des anonymisierten Dateinamens auf dem Server ausgewählte Dokument wird verschlüsselt an das Nutzercomputersystem übertragen. Hierzu muss der Nutzer dem Server beispielsweise nur den anonymisierten Dateinamen bereitstellen.

Unter einem "Dokument" wird insbesondere eine Urkunde, ein Zeugnis, oder ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder ein Firmenausweis, oder ein anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem Dokument um ein Machine-Readable Travel Document, wie beispielsweise von der Internationalen Luftfahrtbehörde (ICAO) und/oder dem BSI standardisiert, handeln.

Unter einem "digitalen" Dokument wird ein Datenkonstrukt zur elektronischen Datenverarbeitung verstanden, welches dieselben Daten wie ein zuvor definiertes Dokument, jedoch keinen fest zugeordneten physischen Dokumentenkörper umfasst. Ein digitales Dokument, auch als elektronisches Dokument bezeichnet, kann somit beispielsweise einen Text, eine Zahlentabelle, ein Bild oder eine Folge oder Kombination von Texten, Tabellen oder Bildern umfassen, welche durch Digitalisieren, d.h. eine Umwandlung in einen Binärcode, in Dateiform angelegt oder überführt wurden. Insbesondere ist die Gültigkeit eines solchen Dokuments unabhängig von dem Vorhandensein eines fest zugeordneten Dokumentenkörpers. Bei einem "digitalen" Dokument kann es sich um eine elektronische Datei eines beliebigen Dateiformats handeln, insbesondere eine nicht ausführbare Text- oder Tabellendatei. Ferner kann es sich bei einem digitalen Dokument beispielsweise auch um eine Videodatei, eine Lieddatei, ein Programmcode, eine ausführbare Datei, ein Archiv oder Ähnliches handeln.

Eine Urkunde ist eine Erklärung in Text- oder Schriftform, welche einen bestimmten Tatbestand bzw. Sachverhalt fixiert. Zudem kann die Urkunde den Aussteller der Urkunde identifizieren. Bei einem Zeugnis kann es sich beispielsweise um Schul- oder Universitätszeugnisse, Bescheinigungen über eine erfolgreiche Teilnahme an Fortbildungen bzw. Kursen, Vorlesungsscheine, Praktikumsbescheinigungen oder Arbeitszeugnisse handeln.

Bei einem Zeugnis kann es sich beispielsweise um ein IHK-Prüfungszeugnis handeln, das eine Urkunde ist, die einem erfolgreichen Absolventen nach bestandener Abschlussprüfung vor der Industrie- und Handelskammer (IHK) in einem anerkannten Ausbildungsberuf oder einer Aufstiegsfortbildung ausgehändigt wird. Ein IHK-Zeugnis umfasst beispielsweise Angaben über den erlernten Beruf, d.h. eine Berufsbezeichnung, und die bestandene Abschlussprüfung. Das Zeugnis kann in einem einheitlichen Layout erscheinen und die Berufsbezeichnung sowie Fachrichtung oder Schwerpunkt enthalten. Das Gesamtergebnis mit Note und Punktzahl steht oberhalb der einzelnen Prüfungsergebnisse. Auf Antrag des Prüfungsteilnehmers kann eine Berufsschulnote unterhalb der einzelnen Prüfungsergebnisse ausgewiesen sein.

Darüber hinaus kann es sich bei einem Dokument beispielsweise auch um einen Facharbeiterbrief, Gesellenbrief, Meisterbrief, eine Bachelor-Urkunde, Master-Urkunde, Magisterurkunde, Diplomurkunde, Promotionsurkunde oder Approbationsurkunde handeln.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einer "Schnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein digitales privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Unter einem "Speicher" werden hier sowohl flüchtige als auch nichtflüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehen. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des Sicherheitsmoduls möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Eine "Public-Key-Infrastructure" (PKI) stellt ein System dar zum Ausstellen, Verteilen und Prüfen digitaler Zertifikate. Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Unter einem "Zertifikat" wird hier ein digitales Zertifikat verstanden, welches auch als Public-Key-Zertifikat bezeichnet wird. Durch solche Zertifikate basierend auf asymmetrischen Schlüsselpaaren wird eine so genannte Public-Key-Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Beispielsweise kann das Zertifikat dem Standard X.509 oder einem anderen Standard entsprechen.

Digitale Zertifikate sind bei der Absicherung elektronischer Kommunikation durch asymmetrische kryptografische Verfahren ein bewährtes Mittel, um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt, um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte weitergegeben werden darf, sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Die Erstellung einer digitalen Signatur, im Folgenden auch lediglich als "Signatur" bezeichnet, ist ein kryptografisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem privaten Schlüssel eines einem Zertifikat zugeordneten kryptografischen Schlüsselpaares verschlüsselter Hashwert. Die Besonderheit einer solchen Signatur besteht darin, dass deren Urheberschaft und Zugehörigkeit zu einer bestimmten Person oder Instanz durch jeden Dritten geprüft werden kann.

Unter einer digitalen Signatur wird hier auch ein digitales Siegel verstanden, welches nicht einer natürlichen Person, sondern einer juristischen Person zugeordnet ist. Ein digitales Siegel dient somit nicht der Abgabe einer Willenserklärung einer einzelnen Person, sondern einer Institution als Herkunftsnachweis. Es kann somit den Ursprung und die Unversehrtheit digitaler Dokumente sicherstellen und nachweisen, dass diese von einer bestimmten juristischen Person stammen.

Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptografischen Schlüsseln, wobei ein erster der symmetrischen Schlüssel zum Verschlüsseln von Nachrichten und ein zweiter der symmetrischen Schlüssel zum Authentifizieren des Senders der Nachricht dient.

Nach Ausführungsformen umfasst das digitale Dokument zwei digitale Kopien der Daten des physischen Dokuments, d.h. einen ersten Datensatz mit einer ersten digitalen Kopie der Daten des physischen Dokuments und einen zweiten Datensatz mit einer zweiten digitalen Kopie der Daten des physischen Dokuments. Bei dem ersten Datensatz handelt es sich beispielsweise um einen Datensatz mit den Daten des physischen Dokuments in einem Format einer Seitenbeschreibungssprache. Bei dem zweiten Datensatz handelt es sich beispielsweise um einen Datensatz mit den Daten des physischen Dokuments in einem maschinenlesbaren Format.

Nach Ausführungsformen handelt es sich bei dem maschinenlesbaren Format um eine Auszeichnungssprache, wie beispielsweise die "Extensible Markup Language" (XML), und/oder um ein Austauschformat, wie beispielsweise die "JavaScript Object Notation" (JSON), "Open Badges" und/oder "Verifiable Credentials".

Die Extensible Markup Language (XML) bzw. erweiterbare Auszeichnungssprache ist eine Auszeichnungssprache zur Darstellung von Daten, insbesondere hierarchisch strukturierter Daten, in Form einer maschinenlesbaren Textdatei. Die Darstellung der Daten gemäß XML ist zusätzlich menschenlesbar. Die JavaScript Object Notation (JSON) ist ein Austauschformat zum Übertragen und Speichern von Daten, insbesondere strukturierter Daten. JSON weist die Form einer maschinenlesbaren Textdatei auf, welche zusätzlich menschenlesbar ist. Ein JSON-Dokument kann beispielsweise ein gültiges JavaScript sein, welches per eval() von einem JavaScript-Interpreter interpretiert werden kann. Open Badges sind Lernabzeichen in Form digitaler Zertifikate der Mozilla Foundation und Verifible Credentials sind überprüfbare Anmeldeinformationen, welche durch das W3C in "Verifiable Credentials Data Model 1.0 - Expressing verifiable information on the Web" vom 19. November 2019 normiert sind.

Bei dem ersten Datensatzes mit Dokumentendaten handelt es sich beispielsweise um eine Angabe von Lernergebnisses eines Zeugnisses, insbesondere eines Hochschulzeugnisses. Beispielsweise können die Angaben auf den CEN Normen EN15981:2011 EuroLMAI (European Learner Mobility Achievement Information/Europäisches Modell für Lernermobilität) und/oder EN15982:2011 MLO (Metadata for learning opportunities/Metadaten für Lernangebote) beruhen. EuroLMAI definiert ein Modell für die Dokumentation und den Austausch von Angaben über die Leistung des Lernenden zwischen Lernmanagement-Informationssystemen sowie für die Zusammenführung von Informationen von Drittanbietern. Das Modell betrachtet insbesondere Diplome, Diplomzusätze und Transkripte von Aufzeichnungen für die Hochschulbildung. MLO definiert ein abstraktes Modell zur Darstellung von Lernangeboten. Dieses Modell beschreibt drei Informationsquellen, über die Metadaten zur Erleichterung der Publikmachung von Lernangeboten gespeichert werden können, nämlich den Anbieter des Lernangebotes, die abstrakte Beschreibung eines Lernangebotes sowie ein konkretes Beispiel für dieses Lernangebot. Beispielsweise handelt es sich bei den Angaben um Angaben, welche dem Elmo Format entsprechen, wie es etwa in "EMREX Technical Description and Implementation Guide - v1.1" (https://emrex.eu/wpcontent/uploads/2020/01/Technical-Guide-to-EMREX.pdf), 1. Januar 2020, beschrieben ist.

Nach Ausführungsformen handelt es sich bei der Seitenbeschreibungssprache um eine der folgenden Sprachen: Portable Document Format (PDF), PostScript (PS), Device Independent File Format (DVI).

Eine Seitenbeschreibungssprache beschreibt den Aufbau einer Seite, wie diese in einem speziellen Ausgabeprogramm oder -gerät, wie einem Drucker, aussehen soll. Das Portable Document Format, d.h. (trans)portables Dokumentenformat, ist eine vektorbasierte Seitenbeschreibungssprache, welches eine freie Skalierbarkeit der Darstellung erlaubt. Dabei beschreibt eine PDF-Datei das mit einer Erstellungsanwendung erzeugte Layout in einer vom Drucker und von Voreinstellungen unabhängigen Form proportional. Eine PDF-Datei kann ein Dokument inklusive aller Farben, Raster- und Vektorgrafiken und Schrifttypen präzise wiedergeben. PostScript-Dateien erlauben es Grafiken und Druckseiten auf den unterschiedlichen Ausgabegeräten in beliebiger Größe und Auflösung verlustfrei ausgeben zu können. Grafische Elemente und Schriften werden hierzu als skalierbare Vektorgrafik beschrieben, ebenso können Rastergrafiken eingebettet werden. Eine DVI-Datei speichert einen Text ergänzt um Satzinformationen. Diese Satzinformationen umfassen beispielsweise Schriftarten, Zeichen- und Zeilenabstände, Zeichenpositionen etc.

Nach Ausführungsformen umfasst das physische Dokument einen mit den Daten des physischen Dokuments beschrifteten ersten Dokumentenkörper.

Nach Ausführungsformen umfassen die Daten des physischen Dokuments den ersten anonymisierten Dateinamen, unter welchem das digitale Dokument in verschlüsselter Form auf einem Server gespeichert ist, und den ersten kryptografischen Schlüssel zum Entschlüsseln des verschlüsselten digitalen Dokuments.

Ausführungsformen können den Vorteil haben, dass das physische Dokument alle Daten bereitstellt sind, welche notwendigen sind, um Zugriff auf das digitale Dokument zu erlagen. Diese Daten sind zum einen der anonymisierte Dateiname zum Identifizieren des digitalen Dokuments und zum anderen der kryptografischen Schlüssel zum Entschlüsseln des verschlüsselten digitalen Dokuments, welche es ermöglicht Zugriff auf den Inhalt des digitalen Dokuments zu erlangen.

Nach Ausführungsformen erfolgt das Wiederherstellen des ersten kryptografischen Schlüssels beispielsweise auf einen Verlust des physischen Dokuments hin. Nach Ausführungsformen erfolgt das Wiederherstellen des ersten kryptografischen Schlüssels auf einen Empfang einer Verlustmeldung über einen Verlust des physischen Dokuments durch das Ausstellercomputersystem von einem Nutzercomputersystem hin. Im Falle eines Verlusts des physischen Dokuments hat ein Nutzer beispielsweise keinen Zugriff mehr auf das digitale Dokument, da ihm die dafür notwendigen Daten fehlen. Ausführungsformen können den Vorteil haben, dass im Falle eines solchen Verlusts des physischen Dokuments ein Zugriff auf das digitale Dokument durch das Austellercomputersystem ermöglicht werden kann, welches zu einer Wiederherstellung des kryptografischen Schlüssels zum Entschlüsseln des verschlüsselten digitalen Dokuments in der Lage ist. Um eine solche Wiederherstellung zu initiieren wird beispielsweise eine entsprechende Verlustmeldung von dem Nutzercomputersystem an das Ausstellercomputersystem gesendet. Diese kann den entsprechenden kryptografischen Schlüssel zum Entschlüsseln des verschlüsselten digitalen Dokuments wiederherstellen und entweder selbst zum Entschlüsseln des verschlüsselten digitalen Dokuments nutzen oder dem Nutzercomputersystem zum Entschlüsseln des verschlüsselten digitalen Dokuments bereitstellen.

Nach Ausführungsformen handelt es sich bei der ersten Verbindung um eine verschlüsselte Kommunikationsverbindung.

Ausführungsformen können den Vorteil haben, dass unter Verwendung einer verschlüsselten Kommunikationsverbindung, insbesondere einer Ende-zu-Ende verschlüsselten Kommunikationsverbindung, die übertragenen Daten vor unerlaubten Zugriffen geschützt werden können, insbesondere vor einer Man-in-the-Middle-Attacke. Zur Verschlüsselung der übertragenen Daten werden beispielsweise Sitzungsschlüssel verwendet. Bei dem zur Verschlüsselung verwendeten Sitzungsschlüssel kann es sich beispielsweise um einen symmetrischen Schlüssel handeln.

Nach Ausführungsformen sendet das Ausstellercomputersystem die entschlüsselte erste Kopie des ersten kryptografischen Schlüssels über eine zweite Verbindung an das Nutzercomputersystem. Bei der zweiten Verbindung handelt es sich um eine verschlüsselte Kommunikationsverbindung.

Ausführungsformen können den Vorteil haben, dass das Ausstellercomputersystem in dem Nutzercomputersystem die Kopie des kryptografischen Schlüssels in sicherer Weise zur Verfügung stellen kann, sodass das Nutzercomputersystem zum Entschlüsseln des digitalen Dokuments in die Lage versetzt wird. Zusätzlich zu der entschlüsselten Kopie des kryptografischen Schlüssels kann das Ausstellercomputersystem den anonymisierten Dateinamen an das Nutzercomputersystem senden. Somit kann das Nutzercomputersystem selbst bei einem Verlust des physischen Dokuments dazu in die Lage versetzt werden, auf das in verschlüsselter Form auf dem Server gespeicherte digitale Dokument zuzugreifen. Alternativer Weise kann das Nutzercomputersystem den anonymisierten Dateienamen unter Verwendung der personenbezogenen Attribute des Inhabers des digitalen Dokuments selbst berechnen, falls es sich im Besitz der personenbezogenen Attribute befindet. Dies ist beispielsweise der Fall, falls es sich bei dem Nutzer um den Inhaber des digitalen Dokuments handelt, welchem die entsprechenden personenbezogenen Daten bekannt sind.

Ausführungsformen können ferner den Vorteil haben, dass unter Verwendung einer verschlüsselten Kommunikationsverbindung, insbesondere einer Ende-zu-Ende verschlüsselten Kommunikationsverbindung, die übertragenen Daten vor unerlaubten Zugriffen geschützt werden können, insbesondere vor einer Man-in-the-Middle-Attacke. Zur Verschlüsselung der übertragenen Daten werden beispielsweise Sitzungsschlüssel verwendet. Bei dem zur Verschlüsselung verwendeten Sitzungsschlüssel kann es sich beispielsweise um einen symmetrischen Schlüssel handeln.

Nach Ausführungsformen erfolgt das Wiederherstellen des ersten kryptografischen Schlüssels auf eine Wiederherstellungsanfrage des Inhabers des digitalen Dokuments hin. Beispielsweise erfolgt das Wiederstellen auf einen Empfang einer Wiederherstellungsanfrage von einem Computersystem des Inhabers des digitalen Dokuments hin. Beispielsweise handelt es sich bei dem Nutzercomputersystem, um das Computersystem des Inhabers des digitalen Dokuments.

Nach Ausführungsformen wird mit der gesendeten Leseanfrage ferner ein Lesen des verschlüsselten digitalen Dokuments angefragt wird. Das verschlüsselte digitale Dokument wird zusammen mit der verschlüsselten ersten Kopie des ersten kryptografischen Schlüssels von dem Ausstellercomputersystem empfangen.

Ausführungsformen können den Vorteil haben, dass das Ausstellercomputersystem zusammen mit der Kopie des kryptografischen Schlüssels das verschlüsselte digitale Dokument empfangen kann. Somit erhält das Ausstellercomputersystem direkten Zugriff auf das verschlüsselte digitale Dokument, welches es unter Verwendung des kryptografischen Schlüssels entschlüsseln kann.

Nach Ausführungsformen wird das verschlüsselte digitale Dokument zusammen mit der entschlüsselten ersten Kopie des ersten kryptografischen Schlüssels an das Nutzercomputersystem gesendet.

Ausführungsformen können den Vorteil haben, dass das Ausstellercomputersystem dem Nutzercomputersystem das digitale Dokument zur Verfügung stellen kann. Unter Verwendung der Kopie des kryptografischen Schlüssels kann das Computersystem das von dem Ausstellercomputersystem empfangene verschlüsselte digitale Dokument entschlüsseln und erhält somit Zugang zu den Daten des digitalen Dokuments.

Nach Ausführungsformen wird das verschlüsselte digitale Dokument durch das Ausstellercomputersystem unter Verwendung der entschlüsselten ersten Kopie des ersten kryptografischen Schlüssels entschlüsselt.

Ausführungsformen können den Vorteil haben, dass das Ausstellercomputersystem selbst das verschlüsselte digitale Dokument entschlüsseln kann und somit Zugriff auf die Daten des digitalen Dokuments erhält.

Nach Ausführungsformen umfasst das Verfahren ferner ein Erstellen einer physischen Zweitschrift des digitalen Dokuments, welche einen Dokumentenkörper umfasst. Das Erstellen der physischen Zweitschrift umfasst ein Beschriften des Dokumentenkörpers mit Daten der physischen Zweitschrift umfasst, welche bereitgestellt werden unter Verwendung der von dem entschlüsselten digitalen Dokument bereitgestellten digitalen Datenkopie.

Falls es sich bei den digitalen Daten des digitalen Dokuments um eine digitale Kopie von Daten des ersten physischen Dokuments handelt, handelt es sich bei der von dem entschlüsselten digitalen Dokument bereitgestellten digitalen Datenkopie beispielsweise um ebenfalls um eine digitale Kopie von Daten des ersten physischen Dokuments.

Falls es sich bei den digitalen Daten des digitalen Dokuments um eine digitale Kopie von Daten des zweiten physischen Dokuments handelt, handelt es sich bei der von dem entschlüsselten digitalen Dokument bereitgestellten digitalen Datenkopie beispielsweise um ebenfalls um eine digitale Kopie von Daten des zweiten physischen Dokuments.

Ausführungsformen können den Vorteil haben, dass eine Zweitschrift des physischen Dokuments erstellt werden kann. Für diese Zweitschrift können die Daten des digitalen Dokuments verwendet werden, bei welchen es sich um eine digitale Kopie der Daten des physischen Dokuments handelt. Somit liegen in Form des digitalen Dokuments sämtliche Daten des physischen Dokuments vor. Diese Daten können in Form einer Beschriftung auf bzw. in einen Dokumentenkörper einer physischen Zweitschrift des physischen Dokuments eingebracht werden. Die entsprechende Zweitschrift kann als Ersatz für das physische Dokument, beispielsweise bei Verlust, dienen.

Beispielsweise wird nur eine physische Zweitschrift erstellt, welche mit dem ersten anonymisierten Dateinamen und dem ersten kryptografischen Schlüssel einen Zugriff auf das ursprüngliche digitale Dokument ermöglicht. Alternativer Weise kann zusätzlich zu der physischen Zweitschrift auch eine digitale Zweitschrift erstellt werden. In diesem Fall wird beispielsweise auch bei Verwendung der digitalen Daten ersichtlich, dass im physischen Bereich eine Zweitschrift verwendet wurde, um die entsprechenden digitalen Daten bereitzustellen.

Nach Ausführungsformen umfasst die physische Zweitschrift zusätzlich zu den Daten der digitalen Datenkopie ferner einen dritten anonymisierten Dateinamen und einen dritten kryptografischen Schlüssel. Nach Ausführungsformen ist der Dokumentenkörper der physischen Zweitschrift zusätzlich zu den Daten der digitalen Datenkopie ferner mit dem dritten anonymisierten Dateinamen und dem dritten kryptografischen Schlüssel beschriftet.

Nach Ausführungsformen umfasst das Verfahren ferner ein Erstellen eines dritten physischen Dokuments, welches einen Dokumentenkörper umfasst. Das Erstellen des dritten physischen Dokuments umfasst ein Beschriften des Dokumentenkörpers dritten physischen Dokuments mit Daten, welche den dritten anonymisierten Dateinamen und den dritten kryptografischen Schlüssel umfassen.

Nach Ausführungsformen umfasst das Verfahren ferner:
- Erstellen einer digitalen Zweitschrift durch das Ausstellercomputersystem, wobei es sich bei der digitalen Zweitschrift um eine digitale Kopie der Daten der physischen Zweitschrift handelt,
- Verschlüsseln der digitalen Zweitschrift durch das Ausstellercomputersystem, wobei die verschlüsselte digitale Zweitschrift unter Verwendung des dritten kryptografischen Schlüssels entschlüsselbar ist,
- Aufbauen einer dritten Verbindung über das Netzwerk zwischen dem Ausstellercomputersystem und dem Server,
- Senden einer Speicheranfrage mit der verschlüsselten digitalen Zweitschrift zum Speichern der verschlüsselten digitalen Zweitschrift auf dem Server von dem Ausstellercomputersystem über die dritte Verbindung an den Server, wobei die Speicheranfrage den dritten anonymisierten Dateinamen zur Verwendung durch den Server bei Speichern der verschlüsselten digitalen Zweitschrift umfasst.

Ausführungsformen können den Vorteil haben, dass eine digitale Zweitschrift auf dem Server bereitgestellt werden kann. Beispielsweise umfassen die Daten der physischen Zweitschrift die Daten des physischen Dokuments, sowie einen Zweitschriftvermerk und/oder Signaturen, welche die Authentizität der Zweitschrift bestätigen. Die entsprechende Authentizität kann durch das Ausstellercomputersystem bzw. einen das Ausstellercomputersystem verwendeten Aussteller bestätigt bzw. beglaubigt werden, da die Daten der Zweitschrift auf der digitalen Kopie der Daten des physischen Dokuments beruhen.

Für eine eigenständige Speicherung der digitalen Zweitschrift auf dem Server können die Daten der physischen Zweitschrift ferner einen anonymisierten Dateinamen zum Identifizieren der digitalen Zweitschrift sowie einen kryptografischen Schlüssel zum Entschlüsseln der verschlüsselten digitalen Zweitschrift umfassen. Falls es sich bei dem anonymisierten Dateinamen der Zweitschrift um einen anonymisierten Dateinamen handelt, welcher unter Verwendung einer Kombination von personenbezogenen Attributen des Inhabers der digitalen Zweitschrift berechnet wird, kann die entsprechende Kombination um eine Zweitschrift-ID ergänzt werden, damit sichergestellt werden kann, dass der anonymisierte Dateiname der Zweitschrift nicht identisch mit dem anonymisierten Dateinamen des Dokuments ist. Das Ausstellercomputersystem kann die digitale Zweitschrift verschlüsseln. Hierzu kann das Ausstellercomputersystem entweder den kryptografischen Schlüssel in der Zweitschrift verwenden, falls es sich bei diesem um einen symmetrischen kryptografischen Schlüssel handelt, oder keinen privaten kryptografischen Schlüssel verwenden, falls es sich bei dem kryptografischen Schlüssel der Zweitschrift um einen öffentlichen kryptografischen Schlüssel handelt. Beispielsweise erzeugt das Ausstellercomputersystem das entsprechende asymmetrische Schlüsselpaar der Zweitschrift, welches den privaten und den öffentlichen kryptografischen Schlüssel der Zweitschrift umfassen. Ferner baut das Ausstellercomputersystem eine Verbindung über das Netzwerk zu dem Server her, auf welchem die digitale Kopie der Zweitschrift zu speichern ist. Bei der entsprechenden Verbindung kann es sich beispielsweise um eine verschlüsselte Kommunikationsverbindung, insbesondere eine Ende-zu-Ende verschlüsselte Kommunikationsverbindung handeln. Über die entsprechende Verbindung wird eine Speicheranfrage zum Speichern der verschlüsselten digitalen Zweitschrift an den Server gesendet. Diese Anfrage umfasst den anonymisierten Dateinamen der Zweitschrift, unter welcher die digitale Zweitschrift auf dem Server zu speichern ist.

Somit kann eine digitale Zweitschrift erstellt werden, welche für die physische Zweitschrift dieselbe Rolle wie das digitale Dokument für das physische Dokument einnimmt. Liegt einem Nutzer nun die physische Zweitschrift vor, so wird dieser unter Verwendung des anonymisierten Dateinamens der Zweitschrift in Kombination mit dem kryptografischen Schlüssel der Zweitschrift dazu in die Lage versetzt, auf die verschlüsselte digitale Zweitschrift zuzugreifen, welche auf dem Server gespeichert ist. Der entsprechende Zugriff erfolgt beispielsweise analog zu dem Zugriff auf das digitale Dokument unter Verwendung des physischen Dokuments.

Nach Ausführungsformen erfolgt das Erstellen der digitalen Zweitschrift beispielsweise auf einen Verlust des physischen Dokuments hin.

Nach Ausführungsformen handelt es sich bei der dritten Verbindung um eine verschlüsselte Kommunikationsverbindung.

Ausführungsformen können den Vorteil haben, dass unter Verwendung einer verschlüsselten Kommunikationsverbindung, insbesondere einer Ende-zu-Ende verschlüsselten Kommunikationsverbindung, die übertragenen Daten vor unerlaubten Zugriffen geschützt werden können, insbesondere vor einer Man-in-the-Middle-Attacke. Zur Verschlüsselung der übertragenen Daten werden beispielsweise Sitzungsschlüssel verwendet. Bei dem zur Verschlüsselung verwendeten Sitzungsschlüssel kann es sich beispielsweise um einen symmetrischen Schlüssel handeln.

Der erste anonymisierte Dateiname wird beispielsweise berechnet unter Verwendung einer Kombination von personenbezogenen Attributen des Inhabers des digitalen Dokuments. Auf die Kombination wird beispielsweise eine Einwegfunktion angewendet.

Ausführungsformen können den Vorteil haben, dass sich der anonymisierte Dateiname unter Verwendung der personenbezogenen Attribute des Inhabers des digitalen Dokuments berechnen lässt. Andererseits lassen sich aufgrund der Verwendung der Einwegfunktion aus dem anonymisierten Dateinamen in die personenbezogenen Attribute nicht mehr ableiten. Beispielsweise wird eine Hashfunktion als Einwegfunktion verwendet.

Nach Ausführungsformen umfassen die personenbezogenen Attribute: einen Vornamen, einen Nachnamen, ein Geburtsdatum und/oder einen Geburtsort des Inhabers des digitalen Dokuments.

Nach Ausführungsformen wird die Kombination von personenbezogenen Attributen des Inhabers des digitalen Dokuments vor der Anwendung der Einwegfunktion ferner um einen Dokumenten-ID-Wert des digitalen Dokuments ergänzt.

Ausführungsformen können den Vorteil haben, dass unter Verwendung eines Dokumenten-ID-Werts, wie etwa eines Dokumentenzählwerts, sichergestellt werden kann, dass unterschiedliche Dokumente desselben Dokumenteninhabers unterschiedliche anonymisierte Dateinamen besitzen.

Nach Ausführungsformen handelt es sich bei dem Dokumenten-ID-Wert um einen Zählerwert, welcher eine Anzahl physischen Dokumenten zählt, welche für denselben Inhaber ausgestellt sind. Beispielsweise wird die Anzahl an ausgestellten physischen Dokumenten pro vordefiniertem Ausstellungszeitraum gezählt, beispielsweise pro Jahr, Schuljahr, Semester oder Trimester. Hierzu wird für jedes Dokument beispielsweise eine laufende Nummer beginnend mit 1 erzeugt.

Nach Ausführungsformen wird die Kombination von Attributen des Inhabers des digitalen Dokuments vor der Anwendung der Einwegfunktion ferner um ein Geheimnis des Ausstellers ergänzt.

Somit handelt es sich bei dem Geheimnis beispielsweise um ein ausstellerspezifisches Geheimnis. Nach Ausführungsformen handelt es sich bei dem Geheimnis beispielsweise um einen Zufallswert, wie etwa eine Zufallszahl. Nach Ausführungsformen handelt sich bei dem Geheimnis um ein gemeinsames Geheimnis, welches zur Berechnung einer Vielzahl von anonymisierten Dateinamen einer Vielzahl von Dokumenten des Ausstellers verwendet wird. Nach Ausführungsformen handelt es sich bei dem Geheimnis um ein dokumentenspezifisches Geheimnis. Nach Ausführungsformen handelt es sich bei dem Geheimnis um ein dokumententypspezifisches Geheimnis. Nach Ausführungsformen handelt es sich bei dem Geheimnis um ein ausstellungszeitraumspezifisches Geheimnis. Bei dem Ausstellungszeitraum, innerhalb dessen das physische Dokument ausgestellt wurde, handelt es sich beispielsweise um ein Ausstellungsjahr, ein Ausstellungsschuljahr, ein Ausstellungssemester und/oder ein Ausstellungstrimester.

Ausführungsformen können den Vorteil haben, dass der anonymisierte Dateiname nur von dem Aussteller berechnet werden kann, welcher sich im Besitz des entsprechenden Geheimnisses befindet. Einem Nutzer, welchem das physische Dokument vorliegt, kann den anonymisierten Dateinamen der Beschriftung des physischen Dokuments entnehmen. Bei diesem physischen Dokument handelt es sich beispielsweise um ein Dokument, welches lediglich Informationen zum Herunterladen des digitalen Dokuments bereitstellt, wie etwa den anonymisierten Dateinamen, unter welchem das digitale Dokument in verschlüsselter Form auf einem Server gespeichert ist, und den kryptographischen Schlüssel zum Entschlüsseln des verschlüsselten digitalen Dokuments. In diesem Fall handelt es sich bei dem digitalen Dokument beispielsweise um eine digitale Kopie von Daten eines weiteren physischen Dokuments. Beispielsweise umfasst physische Dokument aber auch Daten des digitalen Dokuments. Beispielsweise handelt es sich bei dem digitalen Dokument um eine digitale Kopie der Daten des entsprechenden physischen Dokuments. Liegt ihm das physische Dokument nicht vor, so ist der Nutzer nicht in der Lage, den anonymisierten Dateinamen zu bestimmen. Dies gilt beispielsweise, selbst wenn sich der Nutzer als Inhaber des digitalen Dokuments im Besitz der personenbezogenen Daten des Inhabers, d.h. von sich selbst, befindet bzw. von diesen Kenntnis hat. Auch wenn er weiterhin beispielsweise einen Dokumenten-ID-Wert des entsprechenden digitalen Dokuments kennt, ist er nicht dazu in die Lage versetzt, den anonymisierten Dateinamen zu berechnen. Er ist ausschließlich dann in die Lage dazu versetzt, den anonymisierten Dateinamen zu verwenden, wenn er sich im Besitz des physischen Dokuments befindet.

Demgegenüber ist der Aussteller des Dokuments aufgrund seiner Kenntnis des entsprechenden Geheimnisses dazu in der Lage, bei Vorliegen der personenbezogenen Daten des Inhabers des digitalen Dokuments und gegebenenfalls eines Dokumenten-ID-Wertes den anonymisierten Dateinamen zu berechnen. Insbesondere ist der Aussteller beispielsweise bei einem Verlust des physischen Dokuments dazu in der Lage, den anonymisierten Dateinamen wiederherzustellen.

Nach Ausführungsformen handelt es sich bei dem ersten kryptografischen Schlüssel um einen symmetrischen kryptografischen Schlüssel, mit welchem das digitale Dokument verschlüsselt ist.

Ausführungsformen können den Vorteil haben, dass derselbe kryptografische Schlüssel zum Verschlüsseln und Entschlüsseln des digitalen Dokuments verwendet werden kann. Somit müssen einst Schlüssel erzeugt werden, mit welchen das digitale Dokument verschlüsselt wird. Beispielsweise kann der entsprechende symmetrische kryptografische Schlüssel beim Ausstellen des physischen Dokuments erzeugt werden. Das physische Dokument wird mit diesem symmetrischen kryptografischen Schlüssel beschriftet. Werden die Daten des physischen Dokuments digitalisiert, so umfassen diese ebenfalls den symmetrischen kryptografischen Schlüssel. Im Zuge eines Verschlüsselns des digitalen Dokuments kann somit der von dem digitalen Dokument selbst bereitgestellte kryptografische Schlüssel verwendet werden. Keine weiteren kryptografischen Schlüssel sind notwendig. Anschließend kann der zum Verschlüsseln verwendete symmetrische kryptografische Schlüssel von dem verschlüsselten ausführenden Computersystem, beispielsweise einem Ausstellercomputersystem, wieder gelöscht werden.

Als symmetrisches Verschlüsselungsverfahren unter Verwendung des symmetrischen Schlüssels kann beispielsweise ein AES-Verfahren ("Advanced Encryption Standard"), wie etwa AES-256, verwendet werden.

Nach Ausführungsformen handelt es sich bei dem ersten kryptografischen Schlüssel um einen ersten privat kryptografischen Schlüssel eines ersten asymmetrischen Schlüsselpaars. Das digitale Dokument ist mit einem ersten öffentlichen kryptografischen Schlüssel des ersten asymmetrischen Schlüsselpaars verschlüsselt.

Ausführungsformen können den Vorteil haben, dass für die Verschlüsselung des digitalen Dokuments der private kryptografische Schlüssel, welcher zu dem von dem physischen Dokument bereitgestellten öffentlichen kryptografischen Schlüssel gehört, notwendig ist. Somit ist nur der Besitzer des entsprechend privaten kryptografischen Schlüssels, beispielsweise ein Ausstellercomputersystem eines Ausstellers des physischen Dokuments, zum Verschlüsseln des digitalen Dokuments in der Lage. Somit kann es ausgeschlossen werden, dass ein verschlüsseltes digitales Dokument von jemand anderem als dem Aussteller des physischen Dokuments verschlüsselt wird. Somit stellt die korrekte Verschlüsselung, d.h. eine Verschlüsselung, welche mit dem öffentlichen Schlüssel des physischen Dokuments entschlüsselbar ist, einen Herkunftsnachweis des digitalen Dokuments bereit. Somit handelt es sich um eine zusätzliche Sicherheitsmaßnahme.

Nach Ausführungsformen ist unter dem zweiten anonymisierten Dateinamen auf dem Server ferner eine zweite Kopie des ersten kryptografischen Schlüssels gespeichert. Die zweite Kopie des ersten kryptografischen Schlüssels ist mit einem vierten öffentlichen kryptografischen Schlüssel eines einer Verwaltungsinstanz zugeordneten vierten asymmetrischen Schlüsselpaars verschlüsselt gespeichert. Das Verfahren umfasst ferner ein Wiederherstellen des ersten kryptografischen Schlüssels durch ein Verwaltungscomputersystem der Verwaltungsinstanz. In einem geschützten Speicherbereich eines Speichers des Verwaltungscomputersystems ist ein vierter privater kryptografischer Schlüssel des vierten asymmetrischen Schlüsselpaars der Verwaltungsinstanz gespeichert.

Das Wiederherstellen umfasst:
- Bestimmen des zweiten anonymisierten Dateinamens unter Verwendung der Kombination von personenbezogenen Attributen des Inhabers des digitalen Dokuments durch das Verwaltungscomputersystem,
- Aufbauen einer vierten Verbindung über das Netzwerk zwischen dem Verwaltungscomputersystem und dem Server,
- Senden einer Leseanfrage zum Lesen der verschlüsselten zweiten Kopie des ersten kryptografischen Schlüssels von dem Verwaltungscomputersystem über die vierte Verbindung an den Server, wobei die Leseanfrage den bestimmten zweiten anonymisierten Dateinamen zum Identifizieren der verschlüsselten zweiten Kopie des ersten kryptografischen Schlüssels auf dem Server umfasst,
- in Antwort auf das Senden der Leseanfrage, Empfangen der verschlüsselten zweiten Kopie des ersten kryptografischen Schlüssels durch das Verwaltungscomputersystem von dem Server über die vierte Verbindung,
- Entschlüsseln der verschlüsselten zweiten Kopie des ersten kryptografischen Schlüssels durch das Verwaltungscomputersystem unter Verwendung des vierten privaten kryptografischen Schlüssels.

Ausführungsformen können den Vorteil haben, dass zusätzlich zu dem Ausstellercomputersystem ein weiteres Computersystem dazu in der Lage ist, den kryptografischen Schlüssel des Dokuments wiederherzustellen. Bei dem entsprechenden zweiten Computersystem handelt es sich beispielsweise um ein Verwaltungscomputer-System einer dem Aussteller des Dokuments übergeordneten Verwaltungsinstanz. Verliert der Aussteller bzw. das Ausstellercomputersystem den privaten kryptografischen Schlüssel zum Entschlüsseln der auf dem Server hinterlegten Kopie des kryptografischen Schlüssels des digitalen Dokuments, so ist das Ausstellercomputersystem nicht mehr in der Lage dazu, den kryptografischen Schlüssel des Dokuments wiederherzustellen. In diesem Fall kann eine Schlüsselwiederherstellung durch das Verwaltungscomputersystem erfolgen. Die entsprechende Wiederherstellung kann analog zu der Wiederherstellung durch das Ausstellercomputersystem erfolgen. Hierfür ist unter dem zweiten anonymisierten Dateinamen zusätzlich zu der verschlüsselten ersten Kopie des kryptografischen Schlüssels des Dokuments eine zweite verschlüsselte Kopie des kryptografischen Schlüssels des Dokuments gespeichert.

Die entsprechende zweite Kopie des kryptografischen Schlüssels des Dokuments ist mit einem privaten kryptografischen Schlüssel des Verwaltungscomputersystems verschlüsselt, sodass ausschließlich das Verwaltungscomputersystem dazu in der Lage ist, die zweite Kopie zu entschlüsseln. Zum Wiederherstellen des kryptografischen Schlüssels des Dokuments bestimmt das Verwaltungscomputersystem den anonymisierten Dateinamen, unter welchem die verschlüsselte zweite Kopie des kryptografischen Schlüssels gespeichert ist. Das Verwaltungssystem baut eine Verbindung zu dem Server über das Netzwerk auf, insbesondere eine verschlüsselte Kommunikationsverbindung. Somit kann das Verwaltungscomputersystem beispielsweise gesichert mit dem Server kommunizieren. Über die Verbindung sendet das Verwaltungscomputersystem eine Leseanfrage, welche den bestimmten anonymisierten Dateinamen umfasst, unter welchem die verschlüsselte zweite Kopie des kryptografischen Schlüssels des Dokuments gespeichert ist. In Antwort auf die entsprechende Leseanfrage empfängt das Verwaltungscomputersystem die verschlüsselte Kopie, welche es unter Verwendung des privaten kryptografischen Schlüssels des Verwaltungscomputersystems entschlüsseln kann. Somit kann das Verwaltungscomputersystem in den Besitz des kryptografischen Schlüssels des Dokuments gelangen, selbst wenn das physische Dokument so wie der private kryptografische Schlüssel des Ausstellercomputersystems verloren gegangen sind. Unter Verwendung des so wieder hergestellten kryptografischen Schlüssels des Dokuments kann ein Zugriff auf das digitale Dokument ermöglicht werden. Bei den Daten des digitalen Dokuments handelt es sich um digitale Kopien der Daten des physischen Dokuments. Somit ergibt sich aus einem Zugriff auf die digitalen Daten des digitalen Dokuments ein Zugriff auf die Daten des physischen Dokuments. Insbesondere kann somit eine Zweitschrift mit den Daten des physischen Dokuments bei einem Verlust des physischen Dokuments erstellt werden.

Nach Ausführungsformen erfolgt das Wiederherstellen des ersten kryptografischen Schlüssels beispielsweise auf einen Verlust des physischen Dokuments und/oder des zweiten privaten kryptografischen Schlüssels hin.

Nach Ausführungsformen handelt es sich bei der vierten Verbindung um eine verschlüsselte Kommunikationsverbindung.

Ausführungsformen können den Vorteil haben, dass unter Verwendung einer verschlüsselten Kommunikationsverbindung, insbesondere einer Ende-zu-Ende verschlüsselten Kommunikationsverbindung, die übertragenen Daten vor unerlaubten Zugriffen geschützt werden können, insbesondere vor einer Man-in-the-Middle-Attacke. Zur Verschlüsselung der übertragenen Daten werden beispielsweise Sitzungsschlüssel verwendet. Bei dem zur Verschlüsselung verwendeten Sitzungsschlüssel kann es sich beispielsweise um einen symmetrischen Schlüssel handeln.

Nach Ausführungsformen sendet das Verwaltungscomputersystem die zweite Kopie des ersten kryptografischen Schlüssels über eine fünfte Verbindung an das Austellercomputersystem, wobei es sich bei der fünften Verbindung um eine verschlüsselte Kommunikationsverbindung handelt.

Ausführungsformen können den Vorteil haben, dass das Verwaltungscomputersystem den kryptografischen Schlüssel des Dokuments bzw. die zweite Kopie des kryptografischen Schlüssels des Dokuments dem Ausstellercomputersystem zur Verfügung stellen kann. Das Ausstellercomputersystem wird durch den kryptografischen Schlüssel dazu in die Lage versetzt, auf das digitale Dokument auf dem Server zuzugreifen. Beispielsweise kann das Ausstellercomputersystem einen entsprechenden Zugriff zum Erstellen einer physischen Zweitschrift und/oder einer digitalen Zweitschrift verwenden.

Ausführungsformen können den Vorteil haben, dass unter Verwendung einer verschlüsselten Kommunikationsverbindung, insbesondere einer Ende-zu-Ende verschlüsselten Kommunikationsverbindung, die übertragenen Daten vor unerlaubten Zugriffen geschützt werden können, insbesondere vor einer Man-in-the-Middle-Attacke. Zur Verschlüsselung der übertragenen Daten werden beispielsweise Sitzungsschlüssel verwendet. Bei dem zur Verschlüsselung verwendeten Sitzungsschlüssel kann es sich beispielsweise um einen symmetrischen Schlüssel handeln.

Nach Ausführungsformen erfolgt das Wiederherstellen des ersten kryptografischen Schlüssels auf eine Wiederherstellungsanfrage des Ausstellers des Dokuments hin. Beispielsweise erfolgt das Wiederstellen auf einen Empfang einer Wiederherstellungsanfrage von dem Ausstellercomputersystem des Ausstellers des physischen Dokuments hin.

Nach Ausführungsformen umfasst das Verfahren ferner:
- Empfangen der zweiten Kopie des ersten kryptografischen Schlüssels durch das Austellercomputersystem von dem Verwaltungscomputersystem über die fünfte Verbindung,
- Erzeugen eines fünften asymmetrischen Schlüsselpaars durch das Ausstellercomputersystem, wobei das fünfte asymmetrische Schlüsselpaar einen fünften privaten kryptografischen Schlüssel und einen fünften öffentlichen kryptografischen Schlüssel umfasst,
- Speichern des fünften privaten kryptografischen Schlüssels durch das Ausstellercomputersystem als Ersatz für den zweiten privaten kryptografischen Schlüssel in dem geschützten Speicherbereich des Ausstellercomputersystems,
- Erstellen einer verschlüsselten dritten Kopie des ersten kryptografischen Schlüssels durch das Ausstellercomputersystem, wobei das Erstellen der verschlüsselten dritten Kopie des ersten kryptografischen Schlüssels ein Verschlüsseln der entschlüsselten zweiten Kopie des ersten kryptografischen Schlüssels unter Verwendung des fünften öffentlichen kryptografischen Schlüssels umfasst,
- Bestimmen des zweiten anonymisierten Dateinamens unter Verwendung der Kombination von personenbezogenen Attributen des Inhabers des digitalen Dokuments durch das Ausstellercomputersystem,
- Aufbauen einer sechsten Verbindung über das Netzwerk zwischen dem Ausstellercomputersystem und dem Server,
- Senden einer Speicheranfrage mit der verschlüsselten dritten Kopie des ersten kryptografischen Schlüssels und dem zweiten anonymisierten Dateinamen von dem Ausstellercomputersystem über die sechste Verbindung an den Server zum Speichern der verschlüsselten dritten Kopie des ersten kryptografischen Schlüssels zusammen mit dem digitalen Dokument unter dem zweiten anonymisierten Dateinamen auf dem Server.

Alternativer Weise kann das Ausstellercomputersystem dem Verwaltungscomputersystem den erzeugten fünften öffentlichen kryptografischen Schlüssel zum Erstellen der verschlüsselten dritten Kopie des ersten kryptografischen Schlüssels zur Verfügung stellen. Somit erfolgt die Erstellung der verschlüsselten dritten Kopie des ersten kryptografischen Schlüssels durch das Verwaltungscomputersystem, welches die zweite Kopie des ersten kryptografischen Schlüssels nicht an das Ausstellercomputersystem zum Umverschlüsseln weiterleitet, sondern die Umverschlüsselung vielmehr selbst ausführt.

Nach Ausführungsformen umfasst das Verfahren in diesem Fall durch das Ausstellercomputersystem ferner:
- Empfangen einer Schlüsselanfrage durch das Austellercomputersystem von dem Verwaltungscomputersystem über die fünfte Verbindung,
- Erzeugen eines fünften asymmetrischen Schlüsselpaars durch das Ausstellercomputersystem, wobei das fünfte asymmetrische Schlüsselpaar einen fünften privaten kryptografischen Schlüssel und einen fünften öffentlichen kryptografischen Schlüssel umfasst,
- Speichern des fünften privaten kryptografischen Schlüssels durch das Ausstellercomputersystem als Ersatz für den zweiten privaten kryptografischen Schlüssel in dem geschützten Speicherbereich des Ausstellercomputersystems,
- in Antwort auf die Schlüsselanfrage, Senden des fünften öffentlichen kryptografischen Schlüssels von dem Ausstellercomputersystem an das Verwaltungscomputer-system.

Durch das Verwaltungscomputersystem umfasst das Verfahren in diesem Fall ferner:
- Senden der Schlüsselanfrage durch das Verwaltungscomputersystem an das Austellercomputersystem über die fünfte Verbindung,
- in Antwort auf die Schlüsselanfrage, Empfangen des fünften öffentlichen kryptografischen Schlüssels von dem Ausstellercomputersystem durch das Verwaltungscomputersystem,
- Erstellen der verschlüsselten dritten Kopie des ersten kryptografischen Schlüssels durch das Verwaltungscomputersystem, wobei das Erstellen der verschlüsselten dritten Kopie des ersten kryptografischen Schlüssels ein Verschlüsseln der entschlüsselten zweiten Kopie des ersten kryptografischen Schlüssels unter Verwendung des fünften öffentlichen kryptografischen Schlüssels umfasst,
- Bestimmen des zweiten anonymisierten Dateinamens unter Verwendung der Kombination von personenbezogenen Attributen des Inhabers des digitalen Dokuments durch das Verwaltungscomputersystem,
- Aufbauen einer siebten Verbindung über das Netzwerk zwischen dem Verwaltungscomputersystem und dem Server,
- Senden einer Speicheranfrage mit der verschlüsselten dritten Kopie des ersten kryptografischen Schlüssels und dem zweiten anonymisierten Dateinamen von dem Verwaltungscomputersystem über die siebte Verbindung an den Server zum Speichern der verschlüsselten dritten Kopie des ersten kryptografischen Schlüssels zusammen mit dem digitalen Dokument unter dem zweiten anonymisierten Dateinamen auf dem Server.

Ausführungsformen können den Vorteil haben, dass das Ausstellercomputersystem durch den Empfang der zweiten Kopie des kryptografischen Schlüssels des Dokuments dazu in die Lage versetzt wird, im Falle eines Verlusts seines privaten kryptografischen Schlüssels zum Entschlüsseln der ersten Kopie des kryptografischen Schlüssels des Dokuments einen Ersatz für die erste Kopie des kryptografischen Schlüssels in Form einer dritten Kopie des kryptografischen Schlüssels, welche mit einem neu generierten privaten kryptografischen Schlüssels des Ausstellercomputersystems verschlüsselt ist, zu erzeugen. Der neu generierte private kryptografische Schlüssel des Ausstellercomputersystems ersetzt den verlorenen privaten kryptografischen Schlüssel des Ausstellercomputersystems gut. Alternativ kann eine entsprechende Ersetzung der verschlüsselten Kopie des kryptografischen Schlüssels des Dokuments erfolgen, falls der private kryptografische Schlüssel des Ausstellercomputersystems aus Sicherheitsgründen nach Ablauf einer vordefinierten Zeitspanne durch einen neuen, privaten, kryptografischen Schlüssel zu ersetzen ist.

Es wird ein entsprechendes neues asymmetrisches Schlüsselpaar durch das Ausstellercomputersystem erzeugt, welches einen privaten und öffentlichen kryptografischen Schlüssel umfasst. Der private kryptografische Schlüssel wird in einem geschützten Speicherbereich des Ausstellercomputersystems gespeichert, sodass er vor unberechtigten Zugriffen geschützt ist. Unter Verwendung der bereitgestellten zweiten Kopie des kryptografischen Schlüssels wird eine verschlüsselte dritte Kopie des kryptografischen Schlüssels des Dokuments erstellt. Bei der verschlüsselten dritten Kopie des kryptografischen Schlüssels des Dokuments handelt es sich beispielsweise um die empfangende zweite Kopie des kryptografischen Schlüssels, welche mit dem neu generierten privaten kryptografischen Schlüssel des Ausstellercomputersystems verschlüsselt wurde. Ferner wird der anonymisierte Dateiname des Dokuments bestimmt. Hierzu werden beispielsweise personenbezogene Attribute des Inhabers des digitalen Dokuments verwendet. Das Ausstellercomputersystem baut eine Verbindung über das Netzwerk zu dem Server auf, bei welcher es sich beispielsweise um eine verschlüsselte Kommunikationsverbindung handelt. Über die entsprechende Verbindung wird eine Speicheranfrage mit der verschlüsselten Kopie des kryptografischen Schlüssels und dem anonymisierten Dateinamen von dem Ausstellercomputersystem an den Server gesendet. Falls die Kopien des kryptografischen Schlüssels zusammen mit dem digitalen Dokument in einem Datencontainer auf dem Server gespeichert sind, kann das Ausstellercomputersystem beispielsweise den Datencontainer von dem Server herunterladen, in die verschlüsselte erste Kopie des kryptografischen Schlüssels des Dokuments durch die erstellte dritte verschlüsselte Kopie des kryptografischen Dokuments in dem Datencontainer ersetzen und den so geänderten Datencontainer mit der Speicheranfrage an den Server senden, damit der Server den bisherigen Datencontainer durch den geänderten Datencontainer ersetzt. Beispielsweise weist das Ausstellercomputersystem hierfür eine Änderungsberechtigung zum Ändern des Datencontainers auf dem Server nach. Ein entsprechender Nachweis kann beispielsweise unter Verwendung eines entsprechenden Zertifikates des Ausstellercomputersystems erfolgen. Beispielsweise authentisiert sich das Ausstellercomputersystem gegenüber dem Server und weist im Zuge der Authentifizierung eine entsprechende Änderungsberechtigung nach.

Ein Ersetzen der verschlüsselten ersten Kopie des kryptografischen Schlüssels auf dem Server durch eine verschlüsselte dritte Kopie des kryptografischen Schlüssels kann beispielsweise auch erfolgen, falls der aktuelle private kryptografische Schlüssel des Ausstellercomputersystems kompromittiert wurde. In diesem Fall kann die unter Verwendung des zugehörigen aktuellen öffentlichen kryptografischen Schlüssels verschlüsselte erste Kopie des kryptografischen Schlüssels auf dem Server durch eine dritte Kopie des kryptografischen Schlüssels ersetzt werden, welche unter Verwendung des neu erzeugten öffentlichen kryptografischen Schlüssels verschlüsselt ist, dessen zugehöriger neu erzeugter privater kryptografischer Schlüssel nicht kompromittiert ist. Ist eine Mehrzahl von Schlüsselkopien verschiedener Dokumente mit demselben aktuellen öffentlichen kryptografischen Schlüssel des Ausstellercomputersystems verschlüsselt, kann diese Mehrzahl von Schlüsselkopien heruntergeladen werden. Die einzelnen Schlüsselkopien können jeweils entschlüsselt und mit dem neu erzeugten öffentlichen kryptografischen Schlüssel wieder verschlüsselt werden. Die so erzeugten umverschlüsselte Mehrzahl von kryptografischen Schlüsselkopien kann an den Server gesendet werden, um die bisherige Mehrzahl von kryptografischen Schlüsselkopien, deren privater kryptografischer Schlüssel kompromittiert wurde, zu ersetzen.

Ein entsprechendes Verfahren zum Ersetzen der verschlüsselten ersten Kopie des ersten kryptografischen Schlüssels umfasst beispielsweise:
- Bestimmen des zweiten anonymisierten Dateinamens unter Verwendung der Kombination von personenbezogenen Attributen des Inhabers des digitalen Dokuments durch das Ausstellercomputersystem,
- Aufbauen einer zweiten Verbindung über das Netzwerk zwischen dem Ausstellercomputersystem und dem Server,
- Senden einer Leseanfrage zum Lesen der verschlüsselten ersten Kopie des ersten kryptografischen Schlüssels von dem Ausstellercomputersystem über die zweite Verbindung an den Server, wobei die Leseanfrage den bestimmten zweiten anonymisierten Dateinamen zum Identifizieren der verschlüsselten ersten Kopie des ersten kryptografischen Schlüssels auf dem Server umfasst,
- in Antwort auf das Senden der Leseanfrage, Empfangen der verschlüsselten ersten Kopie des ersten kryptografischen Schlüssels durch das Ausstellercomputersystem von dem Server über die zweite Verbindung,
- Entschlüsseln der verschlüsselten ersten Kopie des ersten kryptografischen Schlüssels durch das Ausstellercomputersystem unter Verwendung des zweiten privaten kryptografischen Schlüssels.
- Erzeugen eines fünften asymmetrischen Schlüsselpaars durch das Ausstellercomputersystem, wobei das fünfte asymmetrische Schlüsselpaar einen fünften privaten kryptografischen Schlüssel und einen fünften öffentlichen kryptografischen Schlüssel umfasst,
- Speichern des fünften privaten kryptografischen Schlüssels durch das Ausstellercomputersystem als Ersatz für den zweiten privaten kryptografischen Schlüssel in dem geschützten Speicherbereich des Ausstellercomputersystems,
- Erstellen einer verschlüsselten dritten Kopie des ersten kryptografischen Schlüssels durch das Ausstellercomputersystem, wobei das Erstellen der verschlüsselten dritten Kopie des ersten kryptografischen Schlüssels ein Verschlüsseln der entschlüsselten ersten Kopie des ersten kryptografischen Schlüssels unter Verwendung des fünften öffentlichen kryptografischen Schlüssels umfasst,
- Senden einer Speicheranfrage mit der verschlüsselten dritten Kopie des ersten kryptografischen Schlüssels und dem zweiten anonymisierten Dateinamen von dem Ausstellercomputersystem über die zweite Verbindung an den Server zum Speichern der verschlüsselten dritten Kopie des ersten kryptografischen Schlüssels zusammen mit dem digitalen Dokument unter dem zweiten anonymisierten Dateinamen auf dem Server.

In analoger Weise zu dem vorangehend beschriebenen Verfahren zum Ersetzen ein oder mehrerer Schlüsselkopien, welche mit einem öffentlichen kryptografischen Schlüssel des Ausstellercomputersystems verschlüsselt sind, dessen zugehöriger privater kryptografischer Schlüssel kompromittiert wurde, können auch ein oder mehrerer Schlüsselkopien ersetzt werden, welche mit einem öffentlichen kryptografischen Schlüssel des Verwaltungscomputersystems verschlüsselt sind, dessen zugehöriger privater kryptografischer Schlüssel kompromittiert wurde

Ein entsprechendes Verfahren zum Ersetzen der verschlüsselten zweiten Kopie des ersten kryptografischen Schlüssels umfasst beispielsweise:
- Bestimmen des zweiten anonymisierten Dateinamens unter Verwendung der Kombination von personenbezogenen Attributen des Inhabers des digitalen Dokuments durch das Verwaltungscomputersystem,
- Aufbauen einer fünften Verbindung über das Netzwerk zwischen dem Verwaltungscomputersystem und dem Server,
- Senden einer Leseanfrage zum Lesen der verschlüsselten zweiten Kopie des ersten kryptografischen Schlüssels von dem Verwaltungscomputersystem über die fünfte Verbindung an den Server, wobei die Leseanfrage den bestimmten zweiten anonymisierten Dateinamen zum Identifizieren der verschlüsselten zweiten Kopie des ersten kryptografischen Schlüssels auf dem Server umfasst,
- in Antwort auf das Senden der Leseanfrage, Empfangen der verschlüsselten zweiten Kopie des ersten kryptografischen Schlüssels durch das Verwaltungscomputersystem von dem Server über die fünfte Verbindung,
- Entschlüsseln der verschlüsselten zweiten Kopie des ersten kryptografischen Schlüssels durch das Verwaltungscomputersystem unter Verwendung des vierten privaten kryptografischen Schlüssels.
- Erzeugen eines sechsten asymmetrischen Schlüsselpaars durch das Verwaltungscomputersystem, wobei das sechste asymmetrische Schlüsselpaar einen sechsten privaten kryptografischen Schlüssel und einen sechsten öffentlichen kryptografischen Schlüssel umfasst,
- Speichern des sechsten privaten kryptografischen Schlüssels durch das Verwaltungscomputersystem als Ersatz für den vierten privaten kryptografischen Schlüssel in dem geschützten Speicherbereich des Verwaltungscomputersystems,
- Erstellen einer verschlüsselten vierten Kopie des ersten kryptografischen Schlüssels durch das Verwaltungscomputersystem, wobei das Erstellen der verschlüsselten vierten Kopie des ersten kryptografischen Schlüssels ein Verschlüsseln der entschlüsselten zweiten Kopie des ersten kryptografischen Schlüssels unter Verwendung des sechsten öffentlichen kryptografischen Schlüssels umfasst,
- Senden einer Speicheranfrage mit der verschlüsselten vierten Kopie des ersten kryptografischen Schlüssels und dem zweiten anonymisierten Dateinamen von dem Ausstellercomputersystem über die fünfte Verbindung an den Server zum Speichern der verschlüsselten vierten Kopie des ersten kryptografischen Schlüssels zusammen mit dem digitalen Dokument unter dem zweiten anonymisierten Dateinamen auf dem Server.

Nach Ausführungsformen handelt es sich bei der sechsten Verbindung um eine verschlüsselte Kommunikationsverbindung. Nach Ausführungsformen handelt es sich bei der siebten Verbindung um eine verschlüsselte Kommunikationsverbindung.

Ausführungsformen können den Vorteil haben, dass unter Verwendung einer verschlüsselten Kommunikationsverbindung, insbesondere einer Ende-zu-Ende verschlüsselten Kommunikationsverbindung, die übertragenen Daten vor unerlaubten Zugriffen geschützt werden können, insbesondere vor einer Man-in-the-Middle-Attacke. Zur Verschlüsselung der übertragenen Daten werden beispielsweise Sitzungsschlüssel verwendet. Bei dem zur Verschlüsselung verwendeten Sitzungsschlüssel kann es sich beispielsweise um einen symmetrischen Schlüssel handeln.

Nach Ausführungsformen wird mit der gesendeten Leseanfrage ferner ein Lesen des verschlüsselten digitalen Dokuments angefragt. Das verschlüsselte digitale Dokument wird zusammen mit der verschlüsselten zweiten Kopie des ersten kryptografischen Schlüssels von dem Verwaltungscomputersystem empfangen. Das verschlüsselte digitale Dokument wird zusammen mit der entschlüsselten zweiten Kopie des ersten kryptografischen Schlüssels über die vierte Verbindung an das Austellercomputersystem gesendet.

Ausführungsformen können den Vorteil haben, dass das Verwaltungscomputersystem zusammen mit der zweiten Kopie des kryptografischen Schlüssels des Dokuments das verschlüsselte digitale Dokumente enthält. Das Verwaltungscomputersystem kann unter Verwendung seines privaten kryptografischen Schlüssels die verschlüsselte zweite Kopie des kryptografischen Schlüssels des Dokuments entschlüsseln. Die entschlüsselte zweite Kopie des kryptografischen Schlüssels des Dokuments kann an das Verwaltungscomputersystem zusammen mit dem verschlüsselten digitalen Dokument an das Ausstellercomputersystem senden. Alternativerweise kann das Verwaltungscomputersystem das entschlüsselte digitale Dokument an das Ausstellercomputersystem senden, indem es selbst die entschlüsselte zweite Kopie des kryptografischen Schlüssels des Dokuments zum Entschlüsseln des digitalen Dokuments verwendet. In beiden Fällen erlangt das Ausstellercomputersystem Zugriff auf das entschlüsselte Dokument und mithin auch den kryptografischen Schlüssel des digitalen Dokuments.

Nach Ausführungsformen sendet das Verwaltungscomputersystem die zweite Kopie des ersten kryptografischen Schlüssels über eine sechste Verbindung an das Nutzercomputersystem, wobei es sich bei der sechsten Verbindung um eine verschlüsselte Kommunikationsverbindung handelt.

Ausführungsformen können den Vorteil haben, dass das Verwaltungscomputersystem die entschlüsselte zweite Kopie des kryptografischen Schlüssels des Dokuments dem Nutzercomputersystem in sicherer Weise zur Verfügung stellen kann.

Ausführungsformen können den Vorteil haben, dass unter Verwendung einer verschlüsselten Kommunikationsverbindung, insbesondere einer Ende-zu-Ende verschlüsselten Kommunikationsverbindung, die übertragenen Daten vor unerlaubten Zugriffen geschützt werden können, insbesondere vor einer Man-in-the-Middle-Attacke. Zur Verschlüsselung der übertragenen Daten werden beispielsweise Sitzungsschlüssel verwendet. Bei dem zur Verschlüsselung verwendeten Sitzungsschlüssel kann es sich beispielsweise um einen symmetrischen Schlüssel handeln.

Nach Ausführungsformen wird mit der gesendeten Leseanfrage ferner ein Lesen des verschlüsselten digitalen Dokuments angefragt. Das verschlüsselte digitale Dokument wird zusammen mit der verschlüsselten zweiten Kopie des ersten kryptografischen Schlüssels von dem Verwaltungscomputersystem empfangen. Das verschlüsselte digitale Dokument wird zusammen mit der entschlüsselten zweiten Kopie des ersten kryptografischen Schlüssels über die sechste Verbindung an das Nutzercomputersystem gesendet.

Ausführungsformen können den Vorteil haben, dass das Ausstellercomputersystem zusammen mit der verschlüsselten zweiten Kopie des kryptografischen Schlüssels des Dokuments das verschlüsselte digitale Dokument von dem Server runterladen kann. Die zweite Kopie des kryptografischen Schlüssels des Dokuments kann das Verwaltungscomputersystem unter Verwendung seines privaten kryptografischen Schlüssels entschlüsselt und in diese entschlüsselte zweite Kopie zusammen mit dem verschlüsselten digitalen Dokument zum Entschlüsseln an das Nutzercomputersystem senden. Alternativ kann das Verwaltungscomputersystem selbst das verschlüsselte digitale Dokument unter Verwendung der entschlüsselten zweiten Kopie des kryptografischen Schlüssels des Dokuments entschlüsseln und das so entschlüsselte digitale Dokument an das Nutzercomputersystem senden. In beiden Fällen gelangt das Nutzercomputersystem so in den Besitz des entschlüsselten digitalen Dokuments und mithin in den Besitz des kryptografischen Schlüssels des Dokuments.

Nach Ausführungsformen umfasst das Verfahren ferner ein Bereitstellen des digitalen Dokuments auf dem Nutzercomputersystem unter Verwendung des physischen Dokuments in Form eines ersten physischen Dokuments. Das erste physische Dokument umfasst einen mit Daten beschrifteten Dokumentenkörper. Die Daten, mit denen der Dokumentenkörper des ersten Dokuments beschriftet ist, umfassen den ersten anonymisierten Dateinamen und den ersten kryptografischen Schlüssel.

Das Bereitstellen umfasst:
- Empfangen des von dem ersten physischen Dokument bereitgestellten ersten anonymisierten Dateinamens und ersten kryptografischen Schlüssels durch das Nutzercomputersystem,
- Aufbauen einer siebten Verbindung über ein Netzwerk zwischen dem Nutzercomputersystem und dem Server,
- Senden einer Leseanfrage zum Lesen des digitalen Dokuments von dem Nutzercomputersystem über die siebte Verbindung an den Server, wobei die Leseanfrage den empfangenen ersten anonymisierten Dateinamen zum Identifizieren des digitalen Dokuments auf dem Server umfasst,
- in Antwort auf das Senden der Leseanfrage, Empfangen des digitalen Dokuments durch das Nutzercomputersystem von dem Server über die siebte Verbindung,
- Bereitstellen des digitalen Dokuments in entschlüsselter Form auf dem Nutzercomputer, wobei die Entschlüsselung des digitalen Dokuments unter Verwendung des empfangenen ersten kryptografischen Schlüssels erfolgt.

Nach Ausführungsformen handelt es sich bei dem digitalen Dokument um eine digitale Kopie der Daten des ersten physischen Dokuments. In diesem Fall können mit dem ersten physischen Dokument zum einen die Dokumentendaten bereitgestellt werden, um deren digitale Kopie es sich bei dem digitalen Dokument handelt, und zum anderen ermöglicht das erste Dokument zusätzlich den Zugriff auf das digitale Dokument. Nach Ausführungsformen handelt es sich bei dem digitalen Dokument um eine digitale Kopie von Daten eines zweiten physischen Dokuments. In letzterem Fall dient das erste physische Dokument beispielsweise lediglich dazu, einen Zugriff auf das digitale Dokument und damit auf die digitale Kopie der Daten des zweiten Dokuments zu ermöglichen, ohne aber selbst diese Daten des zweiten Dokuments bereitzustellen.

Nach Ausführungsformen empfängt das Nutzercomputersystem das digitale Dokument in verschlüsselter Form. Das Entschlüsseln des verschlüsselten digitalen Dokuments erfolgt unter Verwendung des empfangenen ersten kryptografischen Schlüssels auf dem Nutzercomputersystem.

Ausführungsformen können den Vorteil haben, dass das digitale Dokument erst auf dem Nutzercomputersystem entschlüsselt wird. Somit kann sichergestellt sein, dass das entschlüsselte Dokument ausschließlich auf dem Computersystem vorliegt und somit unberechtigte Zugriffe auf das entschlüsselte digitale Dokument effektiv unterbunden werden können. Insbesondere kann eine Entschlüsselung auf dem Nutzercomputersystem den Vorteil haben, dass der zur Entschlüsselung verwendete kryptografische Schlüssel das Nutzercomputersystem nicht verlässt. Somit liegt der entsprechende kryptografische Schlüssel nur als Beschriftung des physischen Dokuments und in elektronischer Form temporär auf einem Speicher des Nutzercomputersystems vor. Nach Ausführungsformen wird der kryptografische Schlüssel nach dem Entschlüsseln des digitalen Dokuments gelöscht. Insbesondere wird der kryptografische Schlüssel beispielsweise ausschließlich in einem flüchtigen Speicher auf dem Nutzercomputersystem gespeichert. Somit kann eine temporäre Speicherung des kryptografischen Schlüssels sichergestellt und eine permanente Speicherung effektiv unterbunden werden. Durch die zeitliche Begrenzung der Speicherung des kryptografischen Schlüssels auf dem Nutzercomputersystem kann die Gefahr eines unerlaubten Zugriffs auf den kryptografischen Schlüssel reduziert werden.

Nach Ausführungsformen umfasst die Leseanfrage ferner den empfangenen ersten kryptografischen Schlüssel zum Entschlüsseln des verschlüsselten digitalen Dokuments. Das Entschlüsseln des verschlüsselten digitalen Dokuments erfolgt auf dem Server. Das Nutzercomputersystem empfängt das digitale Dokument in entschlüsselter Form.

Ausführungsformen können in den Vorteil haben, dass eine Entschlüsselung zentral auf dem Server erfolgt. Somit sind keine zusätzlichen Funktionalitäten für die Entschlüsselung auf dem Nutzercomputersystem notwendig. Beispielsweise wird der anonymisierte Dateiname zusammen mit in dem kryptografischen Schlüssel in die Leseranfrage integriert, womit das Nutzercomputersystem lediglich die Leseranfrage erstellen und an in den Server zu senden braucht. Beispielsweise wird im Zuge des Herstellens der Verbindung zwischen dem Nutzercomputersystem und dem Server eine von dem Server bereitgestellte Webseite von dem Nutzercomputersystem aufgerufen und auf diesen, etwa in einem Browser, angezeigt. Die entsprechende Webseite kann eine grafische Nutzeroberfläche, umfassen mit Eingabefenstern zum Eingeben des anonymisierten Dateinamens und des kryptongrafischen Schlüssels durch den Nutzer des Nutzercomputersystems. Die entsprechend eingegebenen Informationen werden in die Netzwerkverbindung an den Server gesendet. Zur Entschlüsselung des digitalen Dokuments notwendige Programmfunktionalitäten werden beispielsweise ausschließlich auf dem Server bereitgestellt. Zur Sicherung der Übertragung des kryptografischen Schlüssels sowie des entschlüsselten digitalen Dokuments handelt es sich bei der Netzwerkverbindung beispielsweise um eine verschlüsselte Kommunikationsverbindung.

Nach Ausführungsformen handelt es sich bei der siebten Verbindung um eine verschlüsselte Kommunikationsverbindung.

Ausführungsformen können den Vorteil haben, dass unter Verwendung einer verschlüsselten Kommunikationsverbindung, insbesondere einer Ende-zu-Ende verschlüsselten Kommunikationsverbindung, die übertragenen Daten vor unerlaubten Zugriffen geschützt werden können, insbesondere vor einer Man-in-the-Middle-Attacke. Zur Verschlüsselung der übertragenen Daten werden beispielsweise Sitzungsschlüssel verwendet. Bei dem zur Verschlüsselung verwendeten Sitzungsschlüssel kann es sich beispielsweise um einen symmetrischen Schlüssel handeln.

Nach Ausführungsformen empfängt das Nutzercomputersystem den von dem physischen Dokument bereitgestellten ersten anonymisierten Dateinamen und ersten kryptografischen Schlüssel in Form einer Nutzereingabe.

Ausführungsformen können den Vorteil haben, dass für einen Empfang des von dem physischen Dokument bereitgestellten anonymisierten Dateinamens sowie des kryptografischen Schlüssels lediglich eine Eingabevorrichtung seitens des Nutzercomputersystems notwendig ist. Eine entsprechende Eingabevorrichtung kann beispielsweise eine Tastatur, einem Haus, ein Touchpad und/oder einen Touch-Display umfassen. Der Nutzer kann die Beschriftung des Dokumentenkörpers des physischen Dokuments mit dem anonymisierten Dateinamen und dem kryptografischen Schlüssel zum Lesen des digitalen Dokuments und mittels der Eingabevorrichtung in das Nutzercomputersystem eingeben.

Nach Ausführungsformen umfasst eine Beschriftung eines Dokumentenkörpers des physischen Dokuments den ersten anonymisierten Dateinamen und den ersten kryptografischen Schlüssel in Form eines optoelektronisch lesbaren Codes. Das Nutzercomputersystem umfasst einen optoelektronischen Sensor zum Erfassen des optoelektronisch lesbaren Codes. Das Empfangen des ersten anonymisierten Dateinamens und des ersten kryptografischen Schlüssels umfasst ein Erfassen des optoelektronisch lesbaren Codes durch das Nutzercomputersystem unter Verwendung des optoelektronischen Sensors.

Ausführungsformen können den Vorteil haben, dass das Nutzercomputersystem den anonymisierten Dateinamen und den kryptografischen Schlüssel unter Verwendung des optoelektronischen Sensors automatisch erfassen kann. Hierbei ist keine Eingabe des Nutzers notwendig. Dies kann beispielsweise den Vorteil haben, dass Eingabefehler durch den Nutzer vermieden werden können. Der optoelektronische Sensor erfasst den optoelektronisch lesbaren Code des physischen Dokuments in optischer Form und führt diesen in eine elektronische bzw. digitale Form über. Die so erfassten digitalen Daten, die den anonymisierten Dateinamen sowie den kryptografischen Schlüssel in digitaler Form umfassen, können vom Nutzercomputersystem zum Lesen des digitalen Dokuments von dem Server verwendet werden.

Nach Ausführungsformen handelt es sich bei dem optoelektronisch lesbaren Code beispielsweise um einen eindimensionalen optoelektronisch lesbaren Code, wie etwa einem Stichcode bzw. Barcode. Der zweidimensionale optoelektronisch lesbare Code umfasst beispielsweise eine Mehrzahl verschieden breiter, paralleler Striche und dazwischen liegender Lücken. Zwischen Strichen und Lücken besteht beispielsweise ein möglichst hoher Kontrast. Die von dem eindimensionalen optoelektronisch lesbaren Code umfassten Daten sind entlang einer Richtung, beispielsweise senkrecht zu einer Erstreckungsrichtung der parallelen Striche, codiert.

Nach Ausführungsformen handelt es sich bei dem optoelektronisch lesbaren Code beispielsweise um einen zweidimensionalen optoelektronisch lesbaren Code, wie etwa einen QR-Code. Der zweidimensionale optoelektronisch lesbare Code umfasst beispielsweise eine Mehrzahl verschieden breiter Striche oder Punkte und dazwischen liegender Lücken. Zwischen Strichen bzw. Punkten und Lücken besteht beispielsweise ein möglichst hoher Kontrast. Die von dem zweidimensionalen optoelektronisch lesbaren Code umfassten Daten sind in Form einer Fläche über zwei Dimensionen codiert.

Nach Ausführungsformen umfasst die Beschriftung des ersten Dokumentenkörpers ferner einen Identifikator des Servers zum Adressieren der Leseanfrage. Der Identifikator des Servers wird durch das Nutzercomputersystem empfangen und zum Adressieren der Leseanfrage verwendet.

Ausführungsformen können den Vorteil haben, dass das physische Dokument neben dem für die Leseanfrage notwendigen anonymisierten Dateinamen des digitalen Dokuments einen Identifikator des Servers bereitstellt. Unter Verwendung des entsprechenden Identifikators kann der Server, auf welchem nun das zu lesende digitale Dokument gespeichert ist, identifiziert bzw. adressiert werden. Somit kann unter Verwendung des von dem physischen Dokument bereitgestellten Identifikators der Server für die Leseanfrage adressiert werden.

Nach Ausführungsformen handelt es sich bei dem Identifikator des Servers um eine URI (Uniform Resource Identifier). Nach Ausführungsformen handelt es sich bei dem Identifikator des Servers um eine URL (Uniform Resource Locator).

Nach Ausführungsformen empfängt das Nutzercomputersystem den Identifikator des Servers in Form der Nutzereingabe.

Ausführungsformen können den Vorteil haben, dass ein Nutzer den Identifikator, welcher durch die Beschriftung des Dokumentenkörpers des physischen Dokuments bereitgestellt wird, lesen und in das Nutzercomputersystem unter Verwendung einer Eingabevorrichtung eingeben kann. Befindet sich ein Nutzer im Besitz des physischen Dokuments, so werden ihm von diesem alle Informationen zur Verfügung gestellt, welche für ein Auslesen und Entschlüsseln des verschlüsselt auf dem Server gespeicherten digitalen Dokuments notwendig sind.

Nach Ausführungsformen umfasst der optoelektronisch lesbare Code des ersten physischen Dokuments den Identifikator des Servers. Das Empfangen des Identifikators des Servers erfolgt im Zuge des Erfassens des optoelektronisch lesbaren Codes durch das Nutzercomputersystem unter Verwendung des optoelektronischen Sensors.

Ausführungsformen können den Vorteil haben, dass der Identifikator des Servers unter Verwendung des optoelektronischen Sensors des Nutzercomputersystems erfasst werden kann. Beispielsweise kann der Identifikator des Servers zusammen mit dem anonymisierten Dateinamen und dem kryptografischen Schlüssel erfasst werden.

Beispielsweise kann in Form des optoelektronisch lesbaren Codes die Leseranfrage codiert sein. Somit kann das Nutzercomputersystem dazu in die Lage versetzt werden, dass es die von dem optoelektronisch lesbaren Code bereitgestellte Leseanfrage lediglich noch auszuführen braucht, um das digitale Dokument von dem Server zu erhalten.

Nach Ausführungsformen handelt es sich bei dem ersten anonymisierten Dateinamen um einen dokumentenindividuellen Dateinamen. Nach Ausführungsformen handelt es sich bei dem ersten kryptografischen Schlüssel um einen dokumentenindividuellen kryptografischen Schlüssel.

Ausführungsformen können den Vorteil haben, dass der anonymisierte Dateiname nur für ein einziges Dokument individuell gilt. Mit anderen Worten ist ein entsprechender anonymisierter Dateiname eindeutig. Alternativerweise kann es sich bei dem anonymisierten Dateinamen um einen Dateinamen handelt, welcher nicht eindeutig für ein individuelles Dokument ist. Beispielsweise kann ein entsprechender Dateiname unter Verwendung von personenbezogenen Daten generiert werden. Handelt es sich bei mehreren Dokumenten um Dokumente desselben Inhabers, so können die entsprechenden personenbezogenen Daten identisch sein. Im Ergebnis können somit Dateinamen unterschiedlicher Dokumente, beispielsweise desselben Inhabers, identisch sein. Um die entsprechenden Dokumente dennoch in einer eindeutigen Art und Weise zu speichern, können zusätzliche Informationen von der Leseanfrage umfasst werden, anhand derer das zu lesende Dokument eindeutig bestimmt werden kann.

Ausführungsformen können den Vorteil haben, dass im Falle eines dokumentenindividuellen kryptografischen Schlüssels der Besitz des physischen Dokuments eine notwendige Voraussetzung zum Entschlüsseln des digitalen Dokuments ist. Beispielsweise kann es sich bei dem kryptografischen Schlüssel aber auch um einen Schlüssel handeln, welcher nicht dokumentenindividuell, d.h. nicht eindeutig ist. Beispielsweise können für mehrere Dokumente desselben Dokumenteninhabers derselbe kryptografische Schlüssel verwendet werden.

Handelt es sich bei dem Dokument um ein Dokument mit personenbezogenen Daten, welche vor einem Zugriff unberechtigter Personen zu schützen sind, so handelt es sich bei dem Inhaber des Dokuments um eine berechtigte Person. Mithin stellt es keine Reduzierung der Sicherheit dar, wenn es dem Inhaber eines Dokuments ermöglicht wird, weitere seiner Dokumente zu entschlüsseln.

Eine weitere Möglichkeit besteht darin, dass ein kurzer kryptografischer Schlüssel verwendet wird. Im Falle eines kurzen kryptografischen Schlüssels besteht die Möglichkeit, dass bei einer zufälligen Auswahl des entsprechenden kryptografischen Schlüssels die kryptografischen Schlüssel mehrerer Dokumente übereinstimmen. Dies kann für die Sicherheit der Daten des digitalen Dokuments ausreichend sein, wenn die Wahrscheinlichkeit den richtigen kryptografischen Schlüssel durch Raten zu finden, ausreichend gering ist.

Nach Ausführungsformen umfasst die Leseanfrage ferner eine Aussteller-ID und/oder eine Angabe eines Ausstellungszeitraums, innerhalb dessen das erste physische Dokument oder das zweite physische Dokument ausgestellt wurde, zum Identifizieren des digitalen Dokuments auf dem Server. Bei dem Ausstellungszeitraum handelt es sich beispielsweise um ein Ausstellungsjahr, ein Ausstellungsschuljahr, ein Ausstellungssemester und/oder ein Ausstellungstrimester.

Ausführungsformen können den Vorteil haben, dass unter Verwendung der Aussteller-ID und/oder des Ausstellungszeitraums des physischen Dokuments digitale Dokumente nach Aussteller sowie Ausstellungszeitraum differenziert werden könnten. Beispielsweise werden die digitalen Dokumente in einer baumartig strukturierten Verzeichnisstruktur auf dem Server gespeichert. Die entsprechende baumartige Struktur kann sich beispielsweise aus den Aussteller-IDs der Aussteller der digitalen Dokumente sowie der Ausstellungszeiträume ergeben.

Eine ID ist ein Identifikator, auch als Kennung bezeichnet, welcher ein mit einer bestimmten Identität verknüpftes Merkmal zur eindeutigen Identifizierung einer Person oder eines Objekts umfasst, beispielsweise des Ausstellers der digitalen Dokumente, dem der Identifikator zugeordnet ist. Ein Identifikator kann beispielsweise Zahlen, Buchstaben, Sonderzeichen sowie Kombinationen aus diesen umfassen.

Beispielsweise können auf dem Server Dokumente unterschiedlicher Aussteller gespeichert sein.

Somit kann sichergestellt werden, dass im Falle von anonymisierten Dateinamen, welche unter Verwendung von personenbezogenen Daten der Dokumenteninhaber berechnet werden, Dokumente desselben Inhabers anhand der Aussteller-ID und/oder des Ausstellungszeitraums differenziert werden können.

Nach Ausführungsformen können auch die Aussteller-ID und/oder eine Angabe des Ausstellungszeitraums, innerhalb dessen das physische Dokument ausgestellt wurde, zum Erzeugen des anonymisierten Dateinamens verwendet werden. In diesem Fall kann sichergestellt werden, dass beispielsweise Dokumente desselben Dokumenteninhabers, welcher von unterschiedlichen Ausstellern und/oder in unterschiedlichen Ausstellungszeiträumen ausgestellt wurden, anhand des resultierenden anonymisierten Dateinamens voneinander unterschieden werden können.

Nach Ausführungsformen ist das digitale Dokument von einem Aussteller mit einem kryptografischen Signaturschlüssel signiert.

Ausführungsformen können den Vorteil haben, dass anhand der Signatur eine Authentizität des digitalen Dokuments nachgewiesen werden kann. Für eine Prüfung der Signatur kann beispielsweise ein Signaturprüfschlüssel verwendet werden. Bei dem kryptografischen Signaturschlüssel handelt es sich beispielsweise um einen privaten kryptografischen Schlüssel des Ausstellers des digitalen Dokuments, während es sich bei dem Signaturprüfschlüssel beispielsweise um einen öffentlichen kryptografischen Schlüssel des Ausstellers des digitalen Dokuments handelt.

Nach Ausführungsformen handelt es sich bei dem digitalen Dokument um ein Zeugnis. Ausführungsformen können den Vorteil haben, dass digitale Zeugnisse in sicherer Weise bereitgestellt werden können.

Falls es sich bei den digitalen Daten des digitalen Dokuments um eine digitale Kopie von Daten des ersten physischen Dokuments handelt, handelt es sich beispielsweise bei einem digitalen Dokument in Form eines Zeugnisses bei dem zugrundeliegenden ersten physischen Dokument ebenfalls um ein Zeugnis, dessen digitale Kopie durch das digitale Dokument bereitgestellt wird.

Falls es sich bei den digitalen Daten des digitalen Dokuments um eine digitale Kopie von Daten des zweiten physischen Dokuments handelt, handelt es sich beispielsweise bei einem digitalen Dokument in Form eines Zeugnisses bei dem zugrundeliegenden zweiten physischen Dokument ebenfalls um ein Zeugnis, dessen digitale Kopie durch das digitale Dokument bereitgestellt wird.

Ausführungsformen umfassen ferner ein physisches Dokument, welches einen mit Daten beschrifteten Dokumentenkörper umfasst. Die Daten, mit denen der Dokumentenkörper beschriftet ist, umfassen einen anonymisierten Dateinamen, unter welchem auf einem über ein Netzwerk zugänglichen Server ein digitales Dokument in Form einer verschlüsselten digitalen Kopie des physischen Dokuments gespeichert ist. Ferner umfassen die Daten, mit denen der Dokumentenkörper beschriftet ist, einen ersten kryptografischen Schlüssel zum Entschlüsseln des verschlüsselten digitalen Dokuments. Bei dem digitalen Dokument handelt es sich um eine digitale Kopie der Daten des physischen Dokuments.

Nach Ausführungsformen ist das physische Dokument zum Bereitstellen eines digitalen Dokuments auf einem Nutzercomputersystem nach einer der zuvor beschriebenen Ausführungsform konfiguriert.

Ausführungsformen umfassen ferner ein Ausstellercomputersystem eines Ausstellers eines digitalen Dokuments zum Wiederherstellen eines kryptografischen Schlüssels zum Entschlüsseln des verschlüsselten digitalen Dokuments. Das Ausstellercomputersystem umfasst einen Prozessor, eine Kommunikationsschnittstelle zur Kommunikation über das Netzwerk und einen Speicher. In dem Speicher des Ausstellercomputersystems sind Programminstruktionen gespeichert.

Das digitale Dokument, bei welchem es sich um eine digitale Kopie von Daten eines physischen Dokuments handelt, ist in verschlüsselter Form unter einem ersten anonymisierten Dateinamen auf einem Server gespeichert. Auf dem Server ist ferner eine erste Kopie des kryptografischen Schlüssels zum Entschlüsseln des digitalen Dokuments in verschlüsselter Form unter einem zweiten anonymisierten Dateinamen gespeichert. Das verschlüsselte digitale Dokument ist unter Verwendung des kryptografischen Schlüssels entschlüsselbar. Die erste Kopie des kryptografischen Schlüssels zum Entschlüsseln des digitalen Dokuments ist mit einem öffentlichen kryptografischen Schlüssel eines dem Aussteller des digitalen Dokuments zugeordneten asymmetrischen Schlüsselpaars verschlüsselt.

Der zweite anonymisierte Dateiname ist unter Verwendung einer Kombination von personenbezogenen Attributen des Inhabers des digitalen Dokuments berechnet, auf die eine Einwegfunktion angewendet ist.

In einem geschützten Speicherbereich des Speichers des Ausstellercomputersystems ist ein privater kryptografischer Schlüssel des asymmetrischen Schlüsselpaars des Ausstellers gespeichert.

Ein Ausführen der Programminstruktionen durch den Prozessor des Ausstellercomputersystems steuert das Ausstellercomputersystem ein Verfahren auszuführen, welches umfasst:
- Bestimmen des zweiten anonymisierten Dateinamens unter Verwendung der Kombination von personenbezogenen Attributen des Inhabers des digitalen Dokuments,
- Aufbauen einer Verbindung über das Netzwerk mit dem Server,
- Senden einer Leseanfrage zum Lesen der verschlüsselten ersten Kopie des kryptografischen Schlüssels zum Entschlüsseln des digitalen Dokuments über die Verbindung an den Server, wobei die Leseanfrage den bestimmten zweiten anonymisierten Dateinamen zum Identifizieren der verschlüsselten ersten Kopie des kryptografischen Schlüssels zum Entschlüsseln des digitalen Dokuments auf dem Server umfasst,
- in Antwort auf das Senden der Leseanfrage, Empfangen der verschlüsselten ersten Kopie des kryptografischen Schlüssels zum Entschlüsseln des digitalen Dokuments über die Verbindung,
- Entschlüsseln der verschlüsselten ersten Kopie des kryptografischen Schlüssels zum Entschlüsseln des digitalen Dokuments unter Verwendung des privaten kryptografischen Schlüssels.

Nach Ausführungsformen ist das Austellercomputersystem dazu konfiguriert jeden der Verfahrensschritte des Ausstellercomputersystems nach einer der zuvor beschriebenen Ausführungsform des Verfahrens zum Wiederherstellen des kryptografischen Schlüssels zum Entschlüsseln des verschlüsselten digitale Dokuments auszuführen.

Nach Ausführungsformen umfasst das physische Dokument einen mit den Daten des physischen Dokuments beschrifteten Dokumentenkörper.

Ausführungsformen umfassen ein System zum Wiederherstellen eines kryptografischen Schlüssels zum Entschlüsseln eines verschlüsselten digitalen Dokuments. Das System umfasst ein Austellercomputersystem nach einer der zuvor beschriebenen Ausführungsformen und einen Server. Der Server umfasst einen Prozessor, eine Kommunikationsschnittstelle zur Kommunikation über das Netzwerk und einen Speicher. In dem Speicher des Servers sind Programminstruktionen gespeichert.

Ein Ausführen der Programminstruktionen durch den Prozessor des Servers steuert den Server ein Verfahren auszuführen, welches umfasst:
- Aufbauen einer Verbindung über das Netzwerk mit dem Server,
- Empfangen der Leseanfrage des Ausstellercomputersystems zum Lesen der verschlüsselten ersten Kopie des kryptografischen Schlüssels zum Entschlüsseln des digitalen Dokuments über die Verbindung, wobei die Leseanfrage den bestimmten zweiten anonymisierten Dateinamen zum Identifizieren der verschlüsselten ersten Kopie des kryptografischen Schlüssels zum Entschlüsseln des digitalen Dokuments auf dem Server umfasst,

- Identifizieren der verschlüsselten ersten Kopie des kryptografischen Schlüssels zum Entschlüsseln des digitalen Dokuments auf dem Server unter Verwendung des zweiten anonymisierten Dateinamens,
- in Antwort auf den Empfang der Leseanfrage, Senden der verschlüsselten ersten Kopie des kryptografischen Schlüssels zum Entschlüsseln des digitalen Dokuments über die Verbindung an das Ausstellercomputersystem.

Nach Ausführungsformen ist das System dazu konfiguriert jede der zuvor beschriebenen Ausführungsform des Verfahrens zum Wiederherstellen des kryptografischen Schlüssels zum Entschlüsseln des verschlüsselten digitale Dokuments auszuführen. Nach Ausführungsformen ist der Server dazu konfiguriert jeden der Verfahrensschritte des Servers nach einer der zuvor beschriebenen Ausführungsform des Verfahrens zum Wiederherstellen des kryptografischen Schlüssels zum Entschlüsseln des verschlüsselten digitale Dokuments auszuführen.

Nach Ausführungsformen umfasst das System ferner ein Verwaltungscomputersystem einer Verwaltungsinstanz. Das Verwaltungscomputersystem umfasst einen Prozessor, eine Kommunikationsschnittstelle zur Kommunikation über das Netzwerk und einen Speicher. In dem Speicher des Verwaltungscomputersystems sind Programminstruktionen gespeichert.

Unter dem zweiten anonymisierten Dateinamen ist auf dem Server ferner eine zweite Kopie des kryptografischen Schlüssels zum Entschlüsseln des digitalen Dokuments gespeichert. Die zweite Kopie des kryptografischen Schlüssels zum Entschlüsseln des digitalen Dokuments ist mit einem öffentlichen kryptografischen Schlüssel eines asymmetrischen Schlüsselpaars einer Verwaltungsinstanz verschlüsselt gespeichert. In einem geschützten Speicherbereich eines Speichers des Verwaltungscomputersystems ist ein privater kryptografischer Schlüssel des asymmetrischen Schlüsselpaars der Verwaltungsinstanz gespeichert.

Ein Ausführen der Programminstruktionen durch den Prozessor des Verwaltungscomputersystems steuert das Verwaltungscomputersystem ein Verfahren auszuführen, welches umfasst:
- Bestimmen des zweiten anonymisierten Dateinamens unter Verwendung der Kombination von personenbezogenen Attributen des Inhabers des digitalen Dokuments,
- Aufbauen einer Verbindung über das Netzwerk mit dem Server,
- Senden einer Leseanfrage zum Lesen der verschlüsselten zweiten Kopie des kryptografischen Schlüssels zum Entschlüsseln des digitalen Dokuments über die Verbindung an den Server, wobei die Leseanfrage den bestimmten zweiten anonymisierten Dateinamen zum Identifizieren der verschlüsselten zweiten Kopie des kryptografischen Schlüssels zum Entschlüsseln des digitalen Dokuments auf dem Server umfasst,
- in Antwort auf das Senden der Leseanfrage, Empfangen der verschlüsselten zweiten Kopie des kryptografischen Schlüssels zum Entschlüsseln des digitalen Dokuments durch das Verwaltungscomputersystem über die Verbindung,
- Entschlüsseln der empfangenen verschlüsselten zweiten Kopie des kryptografischen Schlüssels zum Entschlüsseln des digitalen Dokuments unter Verwendung des privaten kryptografischen Schlüssels der Verwaltungsinstanz.

Nach Ausführungsformen ist das Verwaltungscomputersystem dazu konfiguriert jeden der Verfahrensschritte des Verwaltungscomputersystems nach einer der zuvor beschriebenen Ausführungsform des Verfahrens zum Wiederherstellen des kryptografischen Schlüssels zum Entschlüsseln des verschlüsselten digitale Dokuments auszuführen.

Nach Ausführungsformen steuert ein Ausführen der Programminstruktionen durch den Prozessor des Servers den Server ferner ein Verfahren auszuführen, welches umfasst:
- Aufbauen einer Verbindung über das Netzwerk mit dem Verwaltungscomputersystem,
- Empfangen der Leseanfrage des Verwaltungscomputersystems zum Lesen der verschlüsselten zweiten Kopie des kryptografischen Schlüssels zum Entschlüsseln des digitalen Dokuments über die Verbindung, wobei die Leseanfrage den bestimmten zweiten anonymisierten Dateinamen zum Identifizieren der verschlüsselten zweiten Kopie des kryptografischen Schlüssels zum Entschlüsseln des digitalen Dokuments auf dem Server umfasst,
- Identifizieren der verschlüsselten zweiten Kopie des kryptografischen Schlüssels zum Entschlüsseln des digitalen Dokuments auf dem Server unter Verwendung des zweiten anonymisierten Dateinamens,
- in Antwort auf den Empfang der Leseanfrage, Senden der verschlüsselten zweiten Kopie des kryptografischen Schlüssels zum Entschlüsseln des digitalen Dokuments über die Verbindung an das Ausstellercomputersystem.

Nach Ausführungsformen umfasst das System ferner ein Nutzercomputersystem zum Bereitstellen des digitalen Dokuments unter Verwendung des physischen Dokuments in Form eines ersten physischen Dokuments. Das Nutzercomputersystem umfasst einen Prozessor, eine Kommunikationsschnittstelle zur Kommunikation über ein Netzwerk und einen Speicher. In dem Speicher des Nutzercomputersystems sind Programminstruktionen gespeichert. Das erste physische Dokument umfasst einen mit Daten beschrifteten Dokumentenkörper. Die Daten, mit denen der Dokumentenkörper des ersten physischen Dokuments beschriftet ist, umfassen den anonymisierten Dateinamen und den kryptografischen Schlüssel.

Ein Ausführen der Programminstruktionen durch den Prozessor des Nutzercomputersystems steuert das Nutzercomputersystem ein Verfahren auszuführen, welches umfasst:
- Empfangen des anonymisierten Dateinamens, unter welchem das digitale Dokument in verschlüsselter Form auf dem Server gespeichert ist, und des kryptografischen Schlüssels zum Entschlüsseln des verschlüsselten digitalen Dokuments, welche als Teil der Daten bereitstellt, mit denen der Dokumentenkörper des ersten physischen Dokuments beschriftet ist,
- Aufbauen einer Verbindung über ein Netzwerk mit dem Server,
- Senden einer Leseanfrage zum Lesen des digitalen Dokuments über die Verbindung an den Server, wobei die Leseanfrage den empfangenen anonymisierten Dateinamen zum Identifizieren des digitalen Dokuments auf dem Server umfasst,
- in Antwort auf das Senden der Leseanfrage, Empfangen des digitalen Dokuments von dem Server über die Verbindung,
- Bereitstellen des digitalen Dokuments in entschlüsselter Form auf dem Nutzercomputer, wobei die Entschlüsselung des digitalen Dokuments unter Verwendung des empfangenen kryptografischen Schlüssels zum Entschlüsseln des digitalen Dokuments erfolgt.

Nach Ausführungsformen empfängt das Nutzercomputersystem das digitale Dokument in verschlüsselter Form. Das Entschlüsseln des verschlüsselten digitalen Dokuments erfolgt unter Verwendung des empfangenen kryptografischen Schlüssels zum Entschlüsseln des digitalen Dokuments auf dem Nutzercomputersystem.

Nach Ausführungsformen umfasst das Nutzercomputersystem eine Eingabevorrichtung. Nach Ausführungsformen empfängt das Nutzercomputersystem den anonymisierten Dateinamen und den kryptografischen Schlüssel zum Entschlüsseln des ersten digitalen Dokuments in Form einer Nutzereingabe über die Eingabevorrichtung.

Nach Ausführungsformen umfasst die Beschriftung des Dokumentenkörpers des physischen Dokuments den anonymisierten Dateinamen und den kryptografischen Schlüssel zum Entschlüsseln des digitalen Dokuments in Form eines optoelektronisch lesbaren Codes. Das Nutzercomputersystem umfasst einen optoelektronischen Sensor zum Erfassen des optoelektronisch lesbaren Codes. Das Empfangen des anonymisierten Dateinamens und des kryptografischen Schlüssels zum Entschlüsseln des digitalen Dokuments umfasst ein Erfassen des optoelektronisch lesbaren Codes durch das Nutzercomputersystem unter Verwendung des optoelektronischen Sensors.

Nach Ausführungsformen steuert ein Ausführen der Programminstruktionen durch den Prozessor des Servers den Server ferner ein Verfahren auszuführen, welches umfasst:
- Aufbauen einer Verbindung über das Netzwerk mit dem Nutzercomputersystem,
- Empfangen der Leseanfrage des Nutzercomputersystems zum Lesen des digitalen Dokuments über die Verbindung, wobei die Leseanfrage den anonymisierten Dateinamen zum Identifizieren des digitalen Dokuments auf dem Server umfasst,
- Identifizieren des digitalen Dokuments auf dem Server unter Verwendung des anonymisierten Dateinamens,
- in Antwort auf den Empfang der Leseanfrage, Senden des digitalen Dokuments über die Verbindung an das Nutzercomputersystem zum Bereitstellen auf dem Nutzercomputer in entschlüsselter Form auf dem Nutzercomputer, wobei die Entschlüsselung des digitalen Dokuments unter Verwendung des kryptografischen Schlüssels zum Entschlüsseln des digitalen Dokuments erfolgt.

Nach Ausführungsformen umfasst die Leseanfrage ferner den kryptografischen Schlüssel zum Entschlüsseln des digitalen Dokuments. Der Server entschlüsselt das digitale Dokument unter Verwendung des empfangenen kryptografischen Schlüssels zum Entschlüsseln des digitalen Dokuments und sendet es in entschlüsselter Form an das Nutzercomputersystem.

Nach Ausführungsformen handelt es sich bei der Verbindung zwischen dem Nutzercomputersystem und dem Server um eine verschlüsselte Kommunikationsverbindung.

Ausführungsformen können den Vorteil haben, dass unter Verwendung einer verschlüsselten Kommunikationsverbindung, insbesondere einer Ende-zu-Ende verschlüsselten Kommunikationsverbindung, die übertragenen Daten vor unerlaubten Zugriffen geschützt werden können, insbesondere vor einer Man-in-the-Middle-Attacke. Zur Verschlüsselung der übertragenen Daten werden beispielsweise Sitzungsschlüssel verwendet. Bei dem zur Verschlüsselung verwendeten Sitzungsschlüssel kann es sich beispielsweise um einen symmetrischen Schlüssel handeln.

Nach Ausführungsformen sendet der Server das digitale Dokument in verschlüsselter Form an das Nutzercomputersystem zum Entschlüsseln durch das Nutzercomputersystem unter Verwendung des empfangenen kryptografischen Schlüssels zum Entschlüsseln des digitalen Dokuments.

Die Verwendung von Ordinalzahlen wie erstes, zweites, drittes etc. dient hier, soweit sich aus dem konkreten Zusammenhang nicht eindeutig etwas anderes ergibt, allein der Unterscheidung voneinander verschiedener Elemente und soll keine bestimmte Reihenfolge implizieren.

Im Weiteren werden Ausführungsformen der Erfindung mit Bezugnahme auf die Zeichnungen näher erläutert. Es zeigen:
- Figur 1: ein schematisches Diagramm einer Ausführungsform eines exemplarischen ersten physischen Dokuments,
- Figur 2: ein schematisches Diagramm einer Ausführungsform eines exemplarischen ersten physischen Dokuments,
- Figur 3: ein schematisches Diagramm einer Ausführungsform eines exemplarischen ersten physischen Dokuments,
- Figur 4: ein schematisches Diagramm einer Ausführungsform eines exemplarischen ersten physischen Dokuments,
- Figur 5: ein schematisches Diagramm einer Ausführungsform eines exemplarischen zweiten physischen Dokuments,
- Figur 6: ein schematisches Diagramm einer Ausführungsform eines exemplarischen digitalen Dokuments,
- Figur 7: ein schematisches Diagramm einer Ausführungsform eines exemplarischen Systems zum Bereitstellen eines digitalen Dokuments,
- Figur 8: ein schematisches Flussdiagramm einer Ausführungsform eines exemplarischen Verfahrens zum Bereitstellen eines digitalen Dokuments,
- Figur 9: ein schematisches Flussdiagramm einer Ausführungsform eines exemplarischen Verfahrens zum Wiederherstellen eines kryptografischen Schlüssels,
- Figur 10: ein schematisches Flussdiagramm einer Ausführungsform eines exemplarischen Verfahrens zum Wiederherstellen eines kryptografischen Schlüssels,
- Figur 11: ein schematisches Flussdiagramm einer Ausführungsform eines exemplarischen Verfahrens zum Ausstellen einer digitalen Zweitschrift,
- Figur 12: ein schematisches Flussdiagramm einer Ausführungsform eines exemplarischen Verfahrens zum Ausstellen einer digitalen Zweitschrift,
- Figur 13: ein schematisches Diagramm einer Ausführungsform einer exemplarischen physischen Zweitschrift,
- Figur 14: ein schematisches Diagramm einer Ausführungsform einer exemplarischen physischen Zweitschrift,
- Figur 15: ein schematisches Diagramm einer Ausführungsform einer exemplarischen physischen Zweitschrift,
- Figur 16: ein schematisches Diagramm einer Ausführungsform eines exemplarischen dritten physischen Dokuments,
- Figur 17: ein schematisches Diagramm einer Ausführungsform eines exemplarischen dritten physischen Dokuments,
- Figur 18: ein schematisches Diagramm einer Ausführungsform einer exemplarischen digitalen Zweitschrift,
- Figur 19: ein schematisches Flussdiagramm einer Ausführungsform eines exemplarischen Verfahrens zum Wiederherstellen eines kryptografischen Schlüssels,
- Figur 20: ein schematisches Flussdiagramm einer Ausführungsform eines exemplarischen Verfahrens zum Wiederherstellen eines kryptografischen Schlüssels,
- Figur 21: ein schematisches Flussdiagramm einer Ausführungsform eines exemplarischen Verfahrens zum Ersetzen eines kryptografischen Schlüssels,
- Figur 22: ein schematisches Flussdiagramm einer Ausführungsform eines exemplarischen Verfahrens zum Ersetzen eines kryptografischen Schlüssels,
- Figur 23: ein schematisches Flussdiagramm einer Ausführungsform eines exemplarischen Verfahrens zum Ersetzen eines kryptografischen Schlüssels
- Figur 24: ein schematisches Flussdiagramm einer Ausführungsform eines exemplarischen Verfahrens zum Bereitstellen eines digitalen Dokuments,
- Figur 25: ein schematisches Flussdiagramm einer Ausführungsform eines exemplarischen Verfahrens zum Bereitstellen eines digitalen Dokuments,
- Figur 26: ein schematisches Flussdiagramm einer Ausführungsform eines exemplarischen Verfahrens zum Bereitstellen eines digitalen Dokuments,
- Figur 27: ein schematisches Flussdiagramm einer Ausführungsform eines exemplarischen Verfahrens zum Bereitstellen eines digitalen Dokuments,
- Figur 28: ein schematisches Diagramm einer Ausführungsform eines exemplarischen Datencontainers und
- Figur 29: ein schematisches Diagramm einer Ausführungsform eines exemplarischen Datencontainers.

Elemente der nachfolgenden Ausführungsformen, die einander entsprechen, werden mit denselben Bezugszeichen gekennzeichnet.

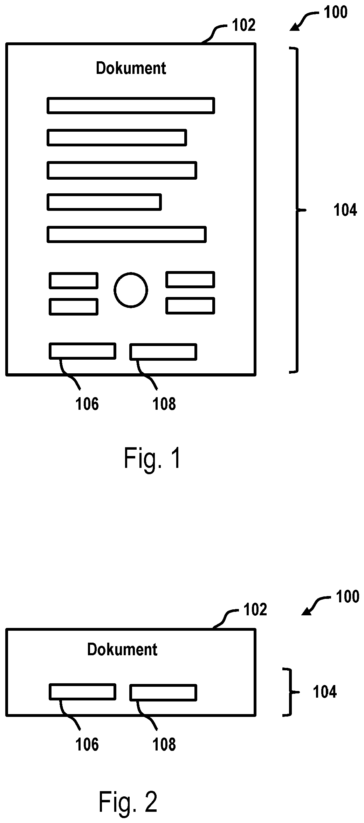

Figur 1 zeigt ein exemplarisches erstes physisches Dokument 100. Das physische Dokument 100 umfasst einen Dokumentenkörper 102. Der Dokumentenkörper 102 umfasst eine Beschriftung mit Daten 104 des Dokuments 100. Die Beschriftung mit den Daten 104 umfasst beispielsweise Daten in Form einer alphanumerischen Kodierung und/oder einer geometrischen Kodierung. Bei der geometrischen Kodierung kann es sich um eine eindimensionale geometrische Kodierung, wie etwa einen Barcode, oder eine zweidimensionale geometrische Kodierung, wie etwa einen QR-Code, handeln. Die Beschriftung ist beispielsweise optisch erfassbar, etwa im sichtbaren infraroten und/oder ultravioletten elektromagnetischen Spektrum. Bei der Beschriftung kann es sich beispielsweise um gedruckte, eingeprägte, ausgestanzte, ausgefräste und/oder ausgeschnittene Strukturen auf und/oder in dem Dokumentenkörper handeln. Im Falle von Strukturen, welche Ausnehmungen den Dokumentenkörper umfassen, können die entsprechenden Ausnehmungen verfüllt sein und/oder versiegelt. Die Daten 104 des Dokuments 100 umfassten einen anonymisierten Dateinamen 106, unter welchem ein digitales Dokument in verschlüsselter Form gespeichert ist. Bei dem digitalen Dokument handelt sich um eine digitale Kopie der Daten 104 des Dokuments 100. Ferner umfassen die Daten 104 des Dokuments 100 einen kryptografischen Schlüssel 108, mit welchem das verschlüsselte digitale Dokument, welches unter dem anonymisierten Dateinamen 106 auf dem Server gespeichert ist, entschlüsselt werden kann. Beispielsweise kann das Dokument 100 einen Vermerk wie den folgenden umfassen: "Use access code 61ySf2Cd and decryption key sGnAtt2PTX on download portal to access this file and download this file." Hierbei handelt es sich beispielsweise bei "61ySf2Cd" um den anonymisierten Dateinamen 106 und bei "sGnAtt2PTX" um den kryptografischen Schlüssel.

Liegt einem Nutzer das Dokument 100 vor, so kann dieser unter Verwendung des anonymisierten Dateinamens 106 und des kryptografischen Schlüssels 108 auf das digitale Dokument, welches auf dem Server gespeichert ist, zugreifen und dieses entschlüsseln. Somit erhält der Nutzer Zugang zu der digitalen Kopie der Daten 104 des Dokuments 100. Auf diese Weise kann für den Nutzer des Dokuments 100 eine digitale Kopie des entsprechenden Dokuments bereitgestellt werden, ohne dass dabei personenbezogene Daten für unberechtigte Dritte zugänglich werden. Das digitale Dokumente mit den Daten 104, welche beispielsweise personenbezogene Daten bzw. Attribute des Inhabers des digitalen Dokuments umfassen, ist auf dem Server in verschlüsselter Form gespeichert. Somit sind die entsprechenden Daten nicht zugänglich. Ferner werden auch keine personenbezogenen Daten oder Attribute auf elektronischem Weg an den Inhaber des digitalen Dokuments gesendet. Vielmehr empfängt der Inhaber des digitalen Dokuments die entsprechenden Daten zum Zugreifen auf das digitale Dokument in Form des physischen Dokuments 100. Liegt das phasische Dokument 100 vor, hat der Inhaber des digitalen Dokuments Zugriff auf den anonymisierten Dateinamen 106 und den kryptografischen Schlüssel 108 und damit auf das digitale Dokument.

Figur 2 zeigt eine weitere exemplarische Ausführungsform eines ersten physischen Dokuments 100, welches beispielsweise zum Bereitstellen des kryptografischen Schlüssels 108 sowie des anonymisierten Dateinamens 106 dient. In diesem Fall umfasst eine Beschriftung des Dokumentenkörper 102 mit Daten 104 beispielsweise den kryptografischen Schlüssel 108 und den anonymisierten Dateinamen 106. Die Beschriftung mit den Daten 104 umfasst beispielsweise Daten in Form einer alpha-numerischen Kodierung und/oder einer geometrischen Kodierung. Bei der geometrischen Kodierung kann es sich um eine eindimensionale geometrische Kodierung, wie etwa einen Barcode, oder eine zweidimensionale geometrische Kodierung, wie etwa einen QR-Code, handeln. Die Beschriftung ist beispielsweise optisch erfassbar, etwa im sichtbaren infraroten und/oder ultravioletten elektromagnetischen Spektrum. Bei der Beschriftung kann es sich beispielsweise um gedruckte, eingeprägte, ausgestanzte, ausgefräste und/oder ausgeschnittene Strukturen auf und/oder in dem Dokumentenkörper handeln. Im Falle von Strukturen, welche Ausnehmungen den Dokumentenkörper umfassen, können die entsprechenden Ausnehmungen verfüllt sein und/oder versiegelt. Beispielsweise kann das Dokument 100 einen Vermerk wie den folgenden umfassen: "Use access code 61ySf2Cd and decryption key sGnAtt2PTX on download portal to access this file and download this file." Hierbei handelt es sich beispielsweise bei "61ySf2Cd" um den anonymisierten Dateinamen 106 und bei "sGnAtt2PTX" um den kryptografischen Schlüssel.

Bei den Daten des verschlüsselten digitalen Dokuments, welches unter dem anonymisierten Dateinamen 106 auf dem Server gespeichert ist, handelt es sich in diesem Fall beispielsweise um Daten eines weiteren physischen Dokuments. Das erste physische Dokument 100 wird dem Nutzer beispielsweise zusammen oder in Ergänzung zu dem weiteren physischen Dokument zur Verfügung gestellt, um dem Nutzer einen Zugriff auf das digitale Dokument zu ermöglichen.

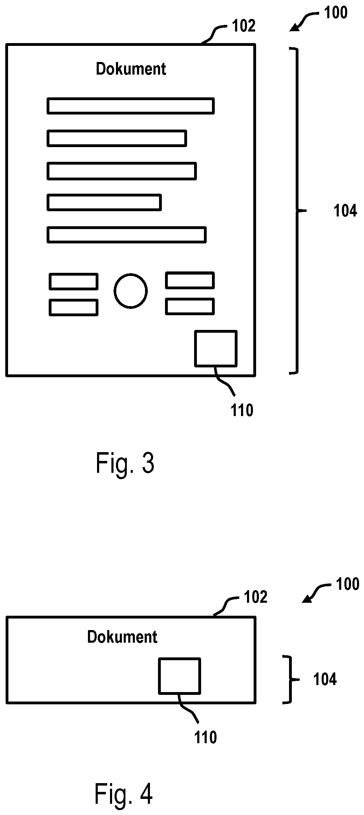

Figur 3 zeigt eine weitere exemplarische Ausführungsform eines ersten physischen Dokuments 100. Das physische Dokument 100 in der Figur 3 entspricht dem physischen Dokument 100 der Figur 1 mit dem Unterschied, dass der anonymisierte Dateinamen 106 und der kryptografische Schlüssel 108 im Fall der Figur 3 in Form eines optoelektronisch lesbaren Codes 110 vorliegen. Der entsprechende optoelektronische Code 110 umfasst beispielsweise den anonymisierten Dateinamen sowie den kryptografischen Schlüssel. Ferner umfasst der optoelektronisch lesbaren Codebeispielsweise einen Identifikator des Servers, auf welchem das digitale Dokument gespeichert ist, mit welchem Leseanfragen zum Lesen des digitalen Dokuments an den Server adressiert werden können. Beispielsweise kann der optoelektronisch lesbare Codes 110 einen codierten Aufruf der folgenden Form umfassen: "curl -X GET "https://dokumente.de/central/download-portal/download? access_code=sdfgsh&encryption_key=afgrgrt" -H "accept: */*". Hierbei handelt es sich beispielsweise bei "sdfgsh" um den anonymisierten Dateinamen, bei "afgrgrt" um den kryptografischen Schlüssel und bei "https://dokumente.de/central/download-portal/download" um den Identifikator des Servers. Bei dem optoelektronisch lesbaren Code 110 handelt es sich beispielsweise um einen eindimensionalen Code, wie etwa einen Barcode oder einen zweidimensionalen Code, wie etwa einen QR-Code. Der optoelektronische Code 110 kann mit einem optoelektronischen Sensor erfasst und die dabei empfangenen Daten von dem

erfassenden Computersystem zum Lesen des digitalen Dokuments von dem Server verwendet werden.

Figur 4 zeigt eine weitere exemplarische Ausführungsform eines physischen Dokuments 100. Das physische Dokument 100 in der Figur 4 entspricht dem physischen Dokument 100 der Figur 2 mit dem Unterschied, dass der anonymisierte Dateinamen 106 und der kryptografische Schlüssel 108 im Fall der Figur 4 in Form eines optoelektronisch lesbaren Codes 110 vorliegen. Der entsprechende optoelektronische Code 110 umfasst beispielsweise den anonymisierten Dateinamen sowie den kryptografischen Schlüssel. Ferner umfasst der optoelektronisch lesbaren Codebeispielsweise einen Identifikator des Servers, auf welchem das digitale Dokument gespeichert ist, mit welchem Leseanfragen zum Lesen des digitalen Dokuments an den Server adressiert werden können. Beispielsweise kann der optoelektronisch lesbare Codes 110 einen codierten Aufruf der folgenden Form umfassen: "curl -X GET "https://dokumente.de/central/download-portal/download? access_code=sdfgsh&encryption_key=afgrgrt" -H "accept: */*". Hierbei handelt es sich beispielsweise bei "sdfgsh" um den anonymisierten Dateinamen, bei "afgrgrt" um den kryptografischen Schlüssel und bei "https://dokumente.de/central/download-portal/download" um den Identifikator des Servers. Bei dem optoelektronisch lesbaren Code 110 handelt es sich beispielsweise um einen eindimensionalen Code, wie etwa einen Barcode oder einen zweidimensionalen Code, wie etwa einen QR-Code. Der optoelektronische Code 110 kann mit einem optoelektronischen Sensor erfasst und die dabei empfangenen Daten von dem erfassenden Computersystem zum Lesen des digitalen Dokuments von dem Server verwendet werden.

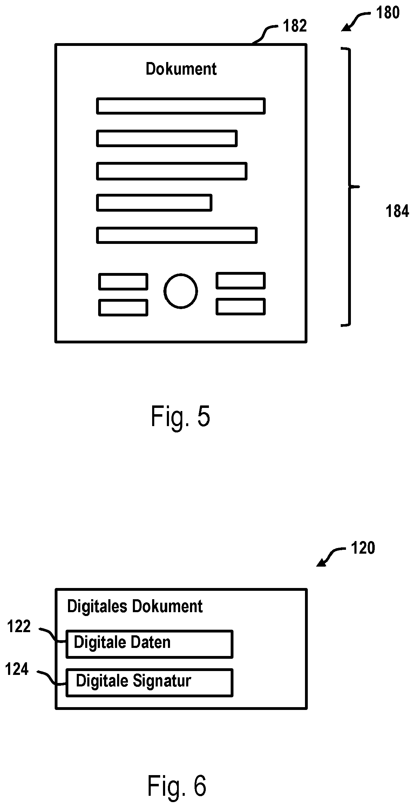

Figur 5 zeigt eine exemplarische Ausführungsform eines zweiten physischen Dokuments 180, dessen Daten 184 als digitale Kopie in Form eines digitalen Dokuments bereitgestellt werden. Das physische Dokument 180 umfasst einen Dokumentenkörper 182. Der Dokumentenkörper 182 umfasst eine Beschriftung mit den entsprechenden Daten 184 des Dokuments 180. Die Beschriftung mit den Daten 184 umfasst beispielsweise Daten in Form einer alphanumerischen Kodierung und/oder einer geometrischen Kodierung. Bei der geometrischen Kodierung kann es sich um eine eindimensionale geometrische Kodierung, wie etwa einen Barcode, oder eine zweidimensionale geometrische Kodierung, wie etwa einen QR-Code, handeln. Die Beschriftung ist beispielsweise optisch erfassbar, etwa im sichtbaren infraroten und/oder ultravioletten elektromagnetischen Spektrum. Bei der Beschriftung kann es sich beispielsweise um gedruckte, eingeprägte, ausgestanzte, ausgefräste und/oder ausgeschnittene Strukturen auf und/oder in dem Dokumentenkörper handeln. Im Falle von Strukturen, welche Ausnehmungen den Dokumentenkörper umfassen, können die entsprechenden Ausnehmungen verfüllt sein und/oder versiegelt. Um Zugriff auf das digitale Dokument mit der digitalen Datenkopie der Daten 184 des physischen Dokuments 180 zu gewähren, wird zusätzlich zum Dokument 180 beispielsweise ein Dokument 100, wie etwa in Figur 2 oder 4 gezeigt, bereitgestellt. Dieses Dokument 100 stellt beispielsweise den kryptografischen Schlüssel 108 zum Entschlüsseln des digitalen Dokuments sowie den anonymisierten Dateinamen 106 bereit, unter welchem das verschlüsselte digitale Dokument auf dem Server gespeichert ist.

Figur 6 zeigt eine exemplarische Struktur des digitalen Dokuments 120. Das digitale Dokument 120 umfasst einen Datensatz mit digitalen Daten 122, bei welchen es sich beispielsweise um eine digitale Kopie der Daten 104 eines der physischen Dokumente 100 aus Figur 1 bis 4 und/oder der Daten 184 des Dokuments 184 aus Figur 5 handelt. Ferner umfasst das digitale Dokument eine digitale Signatur 124, mit welcher ein Aussteller des digitalen Dokuments die digitalen Daten 122 und damit die digitale Kopie des physischen Dokuments 100 signiert. Bei der digitalen Signatur 124 handelt es sich beispielsweise um einen Hashwert der digitalen Daten 122, welcher mit einem privaten kryptografischen Schlüssel des Ausstellers des digitalen Dokuments 120, d.h. einem Signaturschlüssel, verschlüsselt sind. Mit einem zu dem Signaturschlüssel zugehörigen Signaturprüfschlüssel, d.h. einem zu dem privaten kryptografischen Schlüssel gehörenden öffentlichen kryptografischen Schlüssel, kann die Signatur entschlüsselt werden und der resultierende Hashwert mit einem Hashwert der digitalen Daten 122 verglichen werden. Stimmen die beiden Hashwerte überein, so handelt es sich bei den digitalen Daten 122 des Dokuments 120 um authentische Daten.

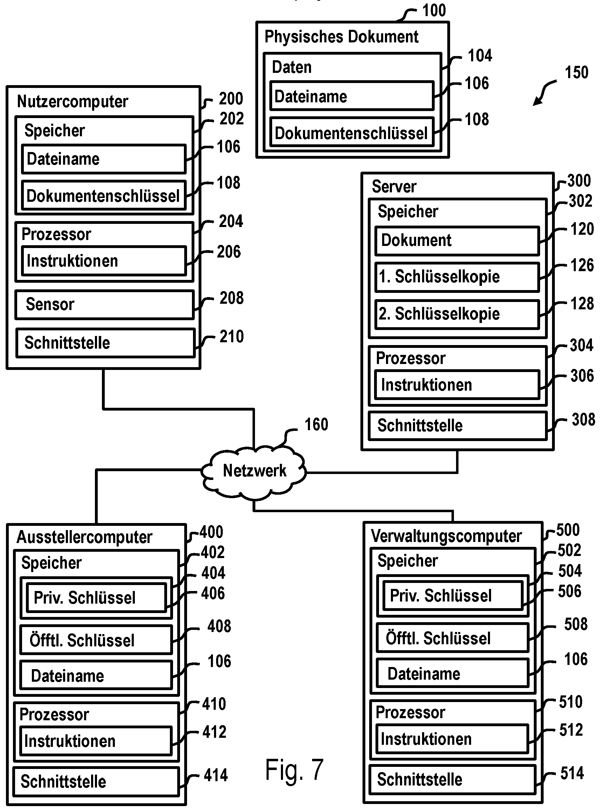

Figur 7 zeigt ein exemplarisches System 150, welches einen Server 300 mit einem Speicher 302 umfasst. In dem Speicher 302 ist eine digitale Kopie von Daten 104 eines physischen Dokuments 100 gespeichert. Bei dem physischen Dokument 100 handelt es sich um ein Dokument mit einem beschrifteten Dokumentenkörper. Die von der Beschriftung umfassten Daten 104 des Dokuments werden in Form der digitalen Kopie 120 zum Abruf über ein Netzwerk 160 auf dem Server 300 bereitgestellt. Die Daten 104 des physischen Dokuments umfassen einen anonymisierten Dateinamen 106 sowie einen kryptografischen Schlüssel 108. Bei dem anonymisierten Dateinamen 106 handelt es sich um den Dateinamen, unter welchem das elektronische Dokument 120 auf dem Server 300 gespeichert ist. Bei dem kryptografischen Schlüssel 108 handelt sich um einen kryptografischen Schlüssel zum Entschlüsseln des digitalen Dokuments 120. Beispielsweise handelt es sich bei dem kryptografischen Schlüssel 108 um einen symmetrischen kryptografischen Schlüssel. Alternativerweise kann es sich bei dem kryptografischen Schlüssel 108 im exemplarischen Fall einer asymmetrischen Verschlüsselung beispielsweise um einen öffentlichen kryptografischen Schlüssel handeln. Ferner können die Daten 104 des physischen Dokuments 100 einen Identifikator des Servers 300 umfassen, mit welchem Leseanfragen zum Lesen des digitalen Dokuments 120 an den Server 300 adressiert werden können. Steht einem Nutzer das physische Dokument 100 zur Verfügung, so liegen diesem alle Daten vor, welche er benötigt, um Zugang zu dem digitalen Dokument 120 zu erlangen. Das digitale Dokument 120 ist in dem Speicher 302 des Servers 300 beispielsweise zusammen mit einer ersten und zweiten Kopie 126, 128 des kryptografischen Schlüssels 108 gespeichert. Beide Kopien 126, 128 sind jeweils unter Verwendung eines anderen kryptografischen Schlüssels verschlüsselt. Beispielsweise sind nun die erste und zweite Kopie 126, 128 des kryptografischen Schlüssels 108 ebenfalls unter dem anonymisierten Dateinamen in dem Speicher 302 gespeichert. Beispielsweise sind die erste und zweite Kopie 126, 128 des kryptografischen Schlüssels 108 zusammen mit dem Dokument 120 in einem Datencontainer unter dem anonymisierten Dateinamen 106 auf dem Server 300 gespeichert. Ein entsprechender Datencontainer bzw. eine entsprechende Containerdatei kann beispielsweise mittels eines Archivierungs- bzw. Packprogramms, wie etwa tar ("Tape ARchiver") erzeugt werden. Der Server 300 umfasst ferner einen Prozessor 304, welcher Programminstruktionen 306 umfasst. Ausführende Programminstruktionen 306 durch den Prozessor 304 veranlassen den Server 300, das digitale Dokument 120 bereitzustellen und über das Netzwerk 160 an Computersysteme zu senden. Beispielsweise wird das digitale Dokument 120 in verschlüsselter Form gesendet. Alternativerweise können die Programminstruktionen 306 dazu konfiguriert sein, das verschlüsselte digitale Dokument 120 auf einen Empfang des kryptografischen Schlüssels 108 hin mit dem empfangenen kryptografischen Schlüssel 108 zu entschlüsseln. Ferner können die Programminstruktionen dazu konfiguriert sein, die erste und/oder zweite Schlüsselkopie 126, 128 bereitzustellen. Die Schlüsselkopien 126,128 sind ebenfalls in verschlüsselter Form auf dem Server 300 gespeichert. Die Programminstruktionen 306 können dazu konfiguriert sein, auf den Empfang einer entsprechenden Leseanfrage die verschlüsselte erste Schlüsselkopie 126 über das Netzwerk 160 in verschlüsselter Form zum lokalen Entschlüsseln auf dem anfragenden Computersystem zu senden. Ferner können die Programminstruktionen 306 dazu konfiguriert sein, auf eine entsprechende Leseanfrage hin die verschlüsselte zweite Schlüsselkopie 128 über das Netzwerk 160 an das anfragende Computersystem zum Entschlüsseln zu senden. Zur Kommunikation über das Netzwerk 160 mit anderen Computersystemen verfügt der Server 300 beispielsweise über eine Kommunikationsschnittstelle 308.

Bei dem Netzwerk 160 handelt es sich beispielsweise um ein öffentliches Netzwerk, wie etwa das Internet oder um ein Intranet. Um Zugriff auf das auf dem Server 300 bereitgestellte digitale Dokument 120 zu erlangen, verwendet ein Nutzer beispielsweise ein Nutzercomputersystem 200. Das Nutzercomputersystem 200 umfasst einen Speicher 202, einen Prozessor 204 und eine Kommunikationsschnittstelle 210. Der Prozessor 204 führt Programminstruktionen 206 aus und steuert das Nutzercomputersystem so, dass es unter Verwendung der Kommunikationsschnittstelle 210 über das Netzwerk 160 mit dem Server 300 kommuniziert und das digitale Dokument 120 bereitstellt. Das Nutzercomputersystem empfängt hierfür den anonymisierten Dateinamen 106 des digitalen Dokuments 120 sowie den kryptografischen Schlüssel 108 zum Entschlüsseln des digitalen Dokuments 120. Der anonymisierte Dateiname 106 sowie der kryptografische Schlüssel 108 wird in dem Nutzercomputersystem unter Verwendung des physischen Dokuments 100 bereitgestellt. Beispielsweise umfasst das Empfangen des anonymisierten Dateinamens 106 und des kryptografischen Schlüssels 108 eine Nutzereingabe durch einen Nutzer des Computersystems 200. Alternativerweise umfasst das physische Dokument 100 den anonymisierten Dateinamen 106 sowie den kryptografischen Schlüssel 108 in Form eines optoelektronisch lesbaren Codes. Das Nutzercomputersystem 200 umfasst beispielsweise zusätzlich einen optoelektronischen Sensor 208, welcher dazu konfiguriert ist, den optoelektronischen Code des physischen Dokuments 100 zu lesen. Somit können der anonymisierte Dateiname 106 und der kryptografische Schlüssel 108 unter Verwendung des optoelektronischen Sensors von dem Nutzercomputersystem erfasst werden. Das Nutzercomputersystem sendet eine Lese- Anfrage an den Server, welche zumindest den anonymisierten Dateinamen 106 umfasst. In Antwort auf die entsprechende Leseanfrage sendet der Server 300 das auszulesende digitale Dokument 102, welches unter Verwendung des anonymisierten Dateinamens identifiziert wird, an das Nutzercomputersystem 200. Die Kommunikation zwischen Nutzercomputersystem 200 und Server 300 erfolgt beispielsweise über eine verschlüsselte Verbindung, insbesondere eine Ende-zu-Ende verschlüsselte Kommunikationsverbindung. Beispielsweise empfängt das Nutzercomputer-System 200 das digitale Dokument 120 in verschlüsselter Form von dem Server und entschlüsselt dieses unter Verwendung des kryptografischen Schlüssels 108. Alternativerweise kann das Nutzercomputersystem 200 den kryptografischen Schlüssel 108 mit der Leseanfrage an den Server 300 senden, welcher das verschlüsselte digitale Dokument 120 unter Verwendung des empfangenen kryptografischen Schlüssels 108 entschlüsselt und das entschlüsselte digitale Dokument 120 über das Netzwerk 160 an das Nutzercomputersystem 200 sendet.

Ferner umfasst das System 150 ein Ausstellercomputersystem 400. Das Ausstellercomputersystem 400 umfasst einen Speicher 420, einen Prozessor 410 und eine Kommunikationsschnittstelle 414. Der Prozessor 410 ist dazu konfiguriert, Programminstruktionen 412 auszuführen und das Ausstellercomputersystem so zu steuern, dass es beispielsweise über das Netzwerk 160 mit dem Server 300 kommuniziert. Beispielsweise ist das Aussteller- Computersystem 400 dazu konfiguriert, das digitale Dokument 120 unter Verwendung der Daten 104 des physischen Dokuments 100 zu erstellen und beispielsweise zu signieren. Im Zuge des Ausstellens des physischen Dokuments 100 erzeugt das Ausstellercomputersystem 400 beispielsweise den anonymisierten Dateinamen 106 für das physische Dokument 100 sowie den kryptografischen Schlüssel 108. Handelt es sich bei dem kryptografischen Schlüssel 108 um einen symmetrischen kryptografischen Schlüssel, so verwendet das Ausstellercomputersystem beispielsweise den symmetrischen kryptografischen Schlüssel 108 zum Verschlüsseln des digitalen Dokuments 120. Handelt es sich bei dem kryptografischen Schlüssel 108 um einen öffentlichen kryptografischen Schlüssel eines asymmetrischen Schlüsselpaars, so verwendet das Ausstellercomputersystem beispielsweise den entsprechenden öffentlichen kryptografischen Schlüssel zum Verschlüsseln zum Verschlüsseln des digitalen Dokuments 120. Das verschlüsselte digitale Dokument 120 sendet das Ausstellercomputersystem im Zuge der Ausstellung des physischen Dokuments 100 beispielsweise mit einer Speicheranfrage, welche zusätzlich den anonymisierten Dateinamen 106 umfasst an den Server 300. Alternativer Weise kann die Verschlüsselung auch empfängerseitig durch den Server 300 erfolgen, welcher im, Falle von öffentlichen kryptografischen Schlüsseln beispielsweise ebenfalls Kenntnis des öffentlichen kryptografischen Schlüssels von Aussteller und/oder Verwaltungsinstanz besitzt. Der Server 300 prüft die Speicheranfrage und speichert im Falle einer positiven Prüfung das verschlüsselte digitale Dokument 120 unter dem anonymisierten Dateinamen 106 in dem Speicher 302. Handelt es sich bei dem anonymisierten Dateinamen um keinen eindeutigen Dateinamen, kann das Ausstellercomputersystem in der Speicheranfrage weitere Dateiinformationen senden zur eindeutigen Identifizierung der Datei. Beispielsweise wird das verschlüsselte digitale Dokument 120 auf dem Server 300 in einer baumartigen Dateistruktur gespeichert, welche sich nach Aussteller und/oder Ausstellungszeitraum des Dokuments verzweigt. Beispielsweise sendet das Ausstellercomputersystem 400 eine Aussteller ID und/oder eine Angabe des Ausstellungszeitraums mit. Damit für Dokumente desselben Dokumenteninhabers bei einer Berechnung das anonymisierten Dateinamens unter Verwendung von personenbezogenen Daten nicht für verschiedene Dokumente jeweils derselbe anvisierte Dateiname resultiert, kann beispielsweise ein zusätzlicher Dokumenten-ID-Wert verwendet werden. Das kann beispielsweise eine laufende Nummer sein, falls etwa mehrere Dokumente für eine Person im gleichen Jahr auszustellen sind.

Zusätzlich zu dem verschlüsselten digitale Dokument 120 kann das Ausstellercomputersystem 400 eine erste verschlüsselte Schlüsselkopie 126 des kryptografischen Schlüssels 108 erstellen. Hierzu verschlüsselt das Ausstellercomputersystem 400 eine Kopie des kryptografischen Schlüssels 108 mit einem öffentlichen Schlüssel 408. Die resultierende verschlüsselte Schlüsselkopie sendet das Ausstellercomputersystem 400 beispielsweise zusammen mit dem verschlüsselten digitalen Dokument 120 zum Speichern an den Server 300. Nach Ausführungsformen kann zusätzlich eine zweite Schlüsselkopie 128 des kryptografischen Schlüssels 108 erstellt werden. Hierzu verschlüsselt das Ausstellercomputersystem 400 beispielsweise eine zweite Kopie des kryptografischen Schlüssels 108 mit einem öffentlichen Schlüssel 508 eines Verwaltungscomputersystems 500. Das verschlüsselte digitale Dokument 120 sowie die beiden verschlüsselten Schlüsselkopien einer 126, 128 werden von dem Ausstellercomputersystem 400 beispielsweise in einen Datencontainer gepackt und zum Speichern an den Server 300 gesendet.

Der Datencontainer kann beispielsweise ein Verzeichnis oder eine Verzeichnisbaum umfassen, welcher verschiedene einzelnen Dateien enthält. Alternativ kann der Datencontainer beispielsweise eine Datei sein, welche mehrere andere Dateien enthält. Hierbei kann es sich beispielsweise um eine Archivdatei, etwa eine Datei im TAR-Format, oder um eine komprimierte Datei, etwa in einem ZIP-Format, handeln. Alternativ kann der Datencontainer eine Datei sein, welche die verschiedenen Elemente in strukturierter Form enthält, z.B. als Text, und danach als verschlüsseltes Dokument kodiert wird, etwa unter Verwendung von AES 256. Anstelle des verschlüsselten Dokuments kann beispielsweise auch der Dateiname 106 stehen, der auf das verschlüsselte Dokument verweist.

Geht das physische Dokument 100 beispielsweise verloren und ist ein Zugriff auf dessen Daten 104 notwendig, so kann das Ausstellercomputersystem 400 den zum Zugriff auf die digitale Kopie der Daten 104 des Dokuments 100, welche in dem verschlüsselten digitalen Dokument 120 gespeichert sind, notwendigen kryptografischen Schlüssel 108 wiederherstellen. Hierzu greift das Ausstellercomputersystem 400 auf die erste verschlüsselte Schlüsselkopie 126 zu, welche zu diesem Wiederherstellungszweck zusammen mit dem verschlüsselten Dokument 120 unter dem anonymisierten Dateinamen 106 dem Speicher 302 des Servers 300 hinterlegt ist. Zum Wiederherstellen des kryptografischen Schlüssels 108 bestimmt das Ausstellercomputersystem 400 beispielsweise den Dateinamen 106, unter welchem die erste verschlüsselte Kopie 126 des kryptografischen Schlüssels 108 auf dem Server 300 gespeichert ist. Unter Verwendung des so bestimmten anonymisierten Dateinamens 106 sendet das Ausstellercomputersystem 400 eine Leseanfrage über das Netzwerk 160 an den Server 300. Dies kann beispielsweise über eine verschlüsselte Kommunikationsverbindung zwischen Ausstellercomputersystem 400 und Server 300 erfolgen. Beispielsweise handelt es sich bei der verschlüsselten Kommunikationsverbindung um eine Ende-zu-Ende verschlüsselte Kommunikationsverbindung. Anhand des anonymisierten Dateinamens 106 bestimmt der Server 300 die bereitzustellende Schlüsselkopie 126 und sendet diese an das Ausstellercomputersystem 400. Beispielsweise ist die verschlüsselte Schlüsselkopie 126 zusammen mit dem verschlüsselten Dokument 120 in einem gemeinsamen Datencontainer unter dem anonymisierten Dateinamen auf dem Server 300 gespeichert.

Beispielsweise bestimmt das Ausstellercomputersystem 400 zum Wiederherstellen des kryptografischen Schlüssels 108 den Namen des Datencontainers, in welchem die erste verschlüsselte Kopie 126 des kryptografischen Schlüssels 108 auf dem Server 300 gespeichert ist, und verwendet diesen, um Zugriff auf die erste verschlüsselte Kopie 126 des kryptografischen Schlüssels 108 zu erlangen. Beispielsweise kann der Datencontainer ohne Vorwissen gefunden werden. Beispielsweise handelt es sich bei dem Dateinamen und/oder bei dem Namen des Datencontainers um einen Hash-Wert der Kombination von Vornamen, Nachnamen, Geburtsdatum, Schulnamen, Ausstellungjahr und einer laufenden Nummer.

Die laufende Nummer kann beispielsweise notwendig sein, falls für einen Schüler in ein und demselben Jahr mehrere Zeugnisse vorliegen. Andernfalls kann die laufende Nummer beispielsweise auch weggelassen werden. Beispielsweise wird geprüft: Hashfunktion(Vorname.Nachname.Geburtsdatum.Schule.Jahr), Hashfunktion(Vorname.Nachname.Geburtsdatum.Schule.Jahr.01), Hashfunktion(Vorname.Nachname.Geburtsdatum.Schule.Jahr.02), usw. Wenn eine der Abfragen keine Datei mehr liefert, kann die Prüfung beispielswiese abgebrochen werden. Anstelle von des Schulnamens "Schule" beispielswiese auch der öffentlicher Schlüssel 408 des Ausstellersystems verwendet werden.

Beispielsweise sendet der Server 300 den Datencontainer in Antwort auf die Leseanfrage an das Ausstellercomputersystem 400. Beispielsweise ist die erste Schlüsselkopie 126 anhand einer ID, wie etwa "K1" identifizierbar. Beispielsweise ist das digitale Dokument 120 ebenso wie gegebenenfalls die zweite Schlüsselkopie 128 jeweils anhand einer ID identifizierbar, wie etwa "D" zu bzw. "K2". Die entsprechenden IDs des digitalen Dokuments 120, der ersten Schlüsselkopie 126 und/oder der zweiten Schlüsselkopie 128 können beispielsweise zur Berechnung individueller Analyse der Dateinamen verwendet werden, unter welchem das entsprechende digitalisierte Dokument 120, die erste Schlüsselkopie 126 und/oder die zweite Schlüsselkopie 128 jeweils gespeichert sind. Beispielsweise kann eine baumartige Dateistruktur auf dem Server 300 für jedes der Dokumente zusätzlich jeweils hinsichtlich des digitalen Dokuments, der ersten Schlüsselkopie und/oder der zweiten Schlüsselkopie aufgespalten sein. Beispielsweise gibt es jeweils eine Verzweigung für die Dokumententyp-ID, die erste Schlüsseltyp-ID und/oder die zweite Schlüsseltyp-ID. Falls das digitale Dokument 120 nicht zusammen mit der ersten Schlüsselkopie 126 in einem Datencontainer gepackt ist, kann die Leseanfrage des Ausstellercomputersystems 400 beispielsweise zusätzlich ein Lesen des digitalen Dokuments 120 umfassen. Das Ausstellercomputersystem 400 empfängt die erste verschlüsselte Schlüsselkopie 126 von dem Server 300 über das Netzwerk 160 und kann dies unter Verwendung des privaten kryptografischen Schlüssels 406, welcher in einem geschützten Speicherbereich 404 des Speichers 402 des Ausstellercomputersystems 400 gespeichert ist, entschlüsseln. Somit steht dem Ausstellercomputersystem 400 nunmehr zusätzlich zu dem anonymisierten Dateinamen 106 nunmehr auch der kryptografische Schlüssel 108 zur Verfügung. Somit kann das Ausstellercomputersystem 400 beispielsweise das verschlüsselte Dokument 120 entschlüsseln. Mithin kann das Ausstellercomputersystem 400 eine digitale Kopie der Daten 104 des physischen Dokuments 100 bereitstellen, selbst wenn das physische Dokument 100 nicht vorliegt. Diese Möglichkeit ist jedoch auf das Ausstellercomputersystem 400 beschränkt, welches über den dafür notwendigen privaten kryptografischen Schlüssel 406 verfügt. Das Ausstellercomputersystem kann beispielsweise den kryptografischen Dokumentenschlüssel 106 und/oder den anonymisierten Dateinamen 106 dem Nutzercomputersystem 200 zur Verfügung stellen, sodass auch das Nutzercomputersystem 200 Zugang zu den Daten des verschlüsselten digitalen Dokuments 120 erhält. Beispielsweise kann das Ausstellercomputersystem 400 dem Nutzercomputersystem 200 das entschlüsselte digitale Dokument 120 zur Verfügung stellen. Beispielsweise kann das Ausstellercomputersystem 400 dem Nutzercomputersystem 200 das verschlüsselte digitale Dokument 120 zusammen mit dem zur Entschlüsselung notwendigen kryptografischen Schlüssel 108 zur Verfügung stellen. Die entsprechenden Daten werden von dem Ausstellercomputersystem 400 beispielsweise an das Nutzercomputersystem 200 über das Netzwerk 160 gesendet unter Verwendung einer verschlüsselten Kommunikationsverbindung. Bei der entsprechenden verschlüsselten Kommunikationsverbindung handelt es sich beispielsweise um eine Ende-zu-Ende verschlüsselte Kommunikationsverbindung.

Ferner kann das Ausstellercomputersystem 400 beispielsweise zum Ausstellen einer Zweitschrift des physischen Dokuments 100 verwendet werden. Die Zweitschrift umfasst beispielsweise die Daten 104 des physischen Dokuments 100, welche in Form des digitalen Dokuments 120 als digitale Datenkopie vorliegen. Die physische Zweitschrift umfasst beispielsweise einen Dokumentenkörper, welcher mit den entsprechenden Daten beschriftet ist. Die Beschriftung des Datenkörpers der physischen Zweitschrift umfasst beispielsweise zusätzlich einen anonymisierten Dateinamen der Zweitschrift sowie einen kryptografischen Schlüssel der Zweitschrift. Ferner umfasst die Zweitschrift beispielsweise einen Zweitschriftvermerk, aus welchem hervorgeht, dass es sich um eine Zweitschrift handelt. Zusätzlich kann der Zweitschriftvermerk beispielsweise die Authentizität der Daten der Zweitschrift bestätigen bzw. beglaubigen. Zusätzlich zu der physischen Zweitschrift wird durch das Ausstellercomputersystem 100 beispielsweise eine digitale Kopie der Daten der physischen Zweitschrift erstellt und diese als digitale Zweitschrift mit dem kryptografischen Schlüssel der Zweitschrift verschlüsselt. Die so verschlüsselte digitale Zweitschrift wird beispielsweise auf dem Server 300 unter dem anonymisierten Dateinamen der Zweitschrift gespeichert. Hierzu wird die entsprechende verschlüsselte digitale Zweitschrift von dem Aussteller- Computersystem 400 mit einer Speicheranfrage über das Netzwerk 160 an den Server 300 gesendet. Die Speicheranfrage umfasst beispielsweise zusätzlich den anonymisierten Dateinamen der Zweitschrift, unter welchem die verschlüsselte digitale Zweitschrift auf dem Server 300 in dem Speicher 302 gespeichert wird. Um den anonymisierten Dateinamen der Zweitschrift von dem anonymisierten Dateinamen 106 des Dokuments 100 zu unterscheiden, kann der anonymisierte Dateiname der Zweitschrift beispielsweise unter Verwendung einer Zweitschrift-ID berechnet werden. Alternativ kann eine normartige Dateistruktur auf dem Server 300, in welchem die digitale Zweitschrift gespeichert wird, beispielsweise eine Verzweigung für Zweitschriften umfassen, in welcher die digitale Zweitschrift unter ihrem anonymisierten Dateinamen gespeichert wird. Beispielsweise werden für eine Schlüsselwiederherstellung des kryptografischen Schlüssels der Zweitschrift eine erste und/oder eine zweite Schlüsselkopie des entsprechenden kryptografischen Schlüssels der Zweitschrift erstellt. Die erste Schlüsselkopie wird beispielsweise mit einem öffentlichen kryptografischen Schlüssel 408 des Ausstellercomputersystems 400 verschlüsselt. Die zweite Schlüsselkopie wird beispielsweise mit einem öffentlichen kryptografischen Schlüssel 508 des Verwaltungscomputersystem 500 verschlüsselte. Die beiden verschlüsselten Schlüsselkopien werden beispielsweise zusammen mit der digitalen Zweitschrift auf dem Server 300 gespeichert. Dies kann analog zum digitalen Dokument 120 beispielsweise in einem gemeinsamen Datencontainer oder getrennt voneinander in unterschiedlichen Zweigen einer baumartigen Dateistruktur des Servers 300 erfolgen.

Zusätzlich kann das System 150, beispielsweise ein Verwaltungscomputersystem, eine dem Aussteller des physischen Dokuments 100 übergeordneten Verwaltungsinstanz umfassen. Das Verwaltungscomputersystem 500 umfasst beispielsweise einen Speicher 502, einen Prozessor 510 und eine Kommunikationsschnittstelle 514. Der Prozessor 510 ist beispielsweise dazu konfiguriert, Programminstruktionen 512 auszuführen, mit welchen das Verwaltungscomputersystem 500 dazu gesteuert wird, über das Netzwerk 160 unter Verwendung der Kommunikationsschnittstelle 514 mit anderen Komponenten des Systems 150 zu kommunizieren, wie etwa dem Server 300 und/oder dem Ausstellercomputersystem 400.

Das Verwaltung- und Computersystem kann beispielsweise unter Verwendung eines privaten kryptografischen Schlüssels 506, welche in einem geschützten Speicherbereich 504 des Speichers 502 des Verwaltungscomputersystems 500 gespeichert ist, den kryptografischen Schlüssel 108 des physischen Dokuments 100 wieder herstellen für den Fall, dass das physische Dokument 100 und/oder der private kryptografischen Schlüssel 406 des Ausstellercomputersystems verloren oder beschädigt sind. Hierfür bestimmt das Verwaltungscomputersystem 500 beispielsweise den anonymisierten Dateinamen 106, unter welchem die zweite Schlüsselkopie 128 auf dem Server 300 gespeichert ist. Das Verwaltungscomputersystem 500 sendet eine Leseanfrage über das Netzwerk 160 an den Server 300 zum Lesen der zweiten Schlüsselkopie 128. In Antwort auf die Leseanfrage empfängt das Verwaltungscomputersystem 500 die verschlüsselte zweite Schlüsselkopie 128 des kryptografischen Schlüssels 108. Die Kommunikation zwischen dem Server 300 und dem Verwaltungscomputersystem 500 über das Netzwerk 160 erfolgt beispielsweise unter Verwendung einer verschlüsselten Kommunikationsverbindung, insbesondere einer Ende-zu-Ende verschlüsselten Kommunikationsverbindung. Das Verwaltungscomputersystem 500 verwendet einen in einem geschützten Speicherbereich 504 des Speichers 502 des Verwaltungscomputersystems 500 gespeicherten privaten kryptografischen Schlüssel 506 zum Entschlüsseln der verschlüsselten zweiten Schlüsselkopie 128. Somit erhält das Verwaltungscomputersystem 500 Zugang zu dem kryptografischen Schlüssel 108. Das Verwaltungscomputersystem 500 kann den entsprechenden kryptografischen Schlüssel 108 beispielsweise dem Ausstellercomputersystem 400 oder dem Nutzercomputersystem 200 über eine verschlüsselte Kommunikationsverbindung bereitstellen. Zusätzlich kann das Verwaltungscomputersystem 500 beispielsweise das verschlüsselte Dokument 120 aus dem Speicher 302 des Servers 300 auslesen und dem Ausstellercomputersystem 400 oder dem Nutzercomputersystem 200 zusammen mit dem kryptografischen Schlüssel 108 zur Verfügung stellen. Alternativerweise kann das Verwaltungssystem 500 das verschlüsselte digitale Dokument 120 entschlüsseln und dem Ausstellercomputersystem 400 oder dem Nutzercomputersystem 200 über eine verschlüsselte Kommunikationsverbindung zur Verfügung stellen.

Erstellt das Verwaltungscomputersystem 500 dem Ausstellercomputersystem 400 die entschlüsselte zweite Kopie 128 des kryptografischen Schlüssels 108 zur Verfügung, kann das Ausstellercomputersystem beispielsweise eine dritte verschlüsselte Schlüsselkopie des kryptografischen Schlüssels 108 erstellen und dies mit einer Speicheranfrage an den Server 300 senden, damit der Server 300 die erste Schlüsselkopie 126 durch die neu erstellte dritte Schlüsselkopie ersetzt. Für die dritte Schlüsselkopie erzeugt das Ausstellercomputersystem 400 beispielsweise ein neues asymmetrisches Schlüsselpaar, dessen privater kryptografischer Schlüssel es in Ersatz zu dem bisherigen privaten kryptografischen Schlüssel 406 in den geschützten Speicherbereich 404 des Speichers 402 speichert, während es den entsprechenden neu erzeugten öffentlichen kryptografischen Schlüssel in Ersatz zu dem bisherigen öffentlichen kryptografischen Schlüssel 408 zum Erzeugen der dritten verschlüsselten Schlüsselkopie verwendet. Alternativerweise kann das Ausstellercomputersystem den von dem Verwaltungscomputersystem 500 bereitgestellten kryptografischen Schlüssel 108 oder das von dem Verwaltungscomputersystem 500 bereitgestellte entschlüsselte digitale Dokument 102 über eine verschlüsselte Kommunikationsverbindung an das Nutzercomputersystem 200 weiterleiten. Alternativerweise kann das Ausstellercomputersystem 400 beispielsweise den von dem Verwaltungscomputersystems 500 empfangenen kryptografischen Schlüssel 108 oder das empfangene entschlüsselte digitale Dokument 120 zum Ausstellen einer Zweitschrift als Ersatz für ein verloren gegangenes physisches Dokument, 100 oder ein beschädigtes physisches Dokument 100 verwenden.

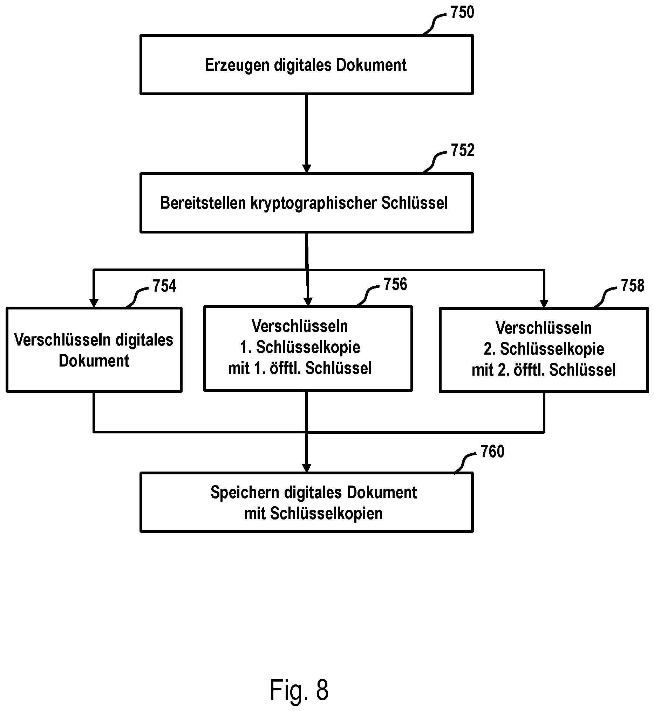

Figur 8 zeigt ein schematisches Flussdiagramm eines exemplarischen Verfahrens zum Speichern eines digitalen Dokuments auf einem Server. In Block 750 wird das digitale Dokument erzeugt. Hierzu wird beispielsweise eine digitale Kopie von Dokumentendaten eines physischen Dokuments erstellt, etwa im PDF-Format und signiert. Das zugrundeliegende physische Dokument umfasst beispielsweise einen anonymisierten Dateinamen, unter welchem das in Block 750 erzeugte digitale Dokument auf einem Server zu speichern ist. Ferner umfasst das physische Dokument beispielsweise einen kryptografischen Schlüssel, mit welchem das digitale Dokument zu verschlüsseln ist. Beispielsweise werden der anonymisierte Dateiname und/oder der kryptografische Schlüssel durch ein Ausstellercomputersystem im Zuge des Aufstellens des physischen Dokuments erzeugt. Ferner wird das digitale Dokument Block 750 von dem Ausstellercomputersystem erzeugt. In Block 752 wird der kryptografische Schlüssel des Dokuments bereitgestellt. In Block 744 wird das digitale Dokument mit dem in Block 752 bereitgestellten kryptografischen Schlüssel verschlüsselt. In Block 756 wird eine erste Kopie des in Block 752 bereitgestellten kryptografischen Schlüssels mit einem ersten öffentlichen Schlüssel, beispielsweise einem öffentlichen Schlüssel eines asymmetrischen Schlüsselpaars des Ausstellercomputersystems verschlüsselt. Im Block 758 wird eine zweite Kopie des in Block 752 bereitgestellten kryptografischen Schlüssels mit einem zweiten öffentlichen kryptografischen Schlüssel verschlüsselt, beispielsweise einem öffentlichen kryptografischen Schlüssel eines asymmetrischen Schlüsselpaars eines Verwaltungscomputersystems. In Block 760 wird das in Block 754 erzeugte verschlüsselte digitale Dokument zusammen mit den beiden in den Blöcken 756 und 758 erzeugten verschlüsselten Schlüsselkopien auf dem Server gespeichert. Beispielsweise erfolgt die Speicherung unter dem anonymisierten Dateinamen. Beispielsweise werden das verschlüsselte digitale Dokument sowie die beiden verschlüsselten Schlüsselkopien zu diesem Zweck von dem Ausstellercomputersystem in einem Datencontainer zusammengefasst, welche unter dem anonymisierten Dateinamen auf dem Server gespeichert wird. Beispielsweise werden das verschlüsselte digitale Dokument sowie die beiden verschlüsselten Schlüsselkopien auf dem Server getrennt voneinander gespeichert. Beispielsweise werden sie unter demselben Dateinamen jeweils in unterschiedlichen Verzweigungen einer baumartigen Dateistruktur auf dem Server gespeichert. Beispielsweise werden sie jeweils unter Verwendung verschiedener Dateinamen gespeichert. Entsprechende verschiedene Dateinamen werden beispielsweise unter Verwendung einer Typen-ID, d.h. einer Dokumententypen-ID, einer ersten Schlüsselkopie-ID und einer zweiten Schlüsselkopie-ID, berechnet.

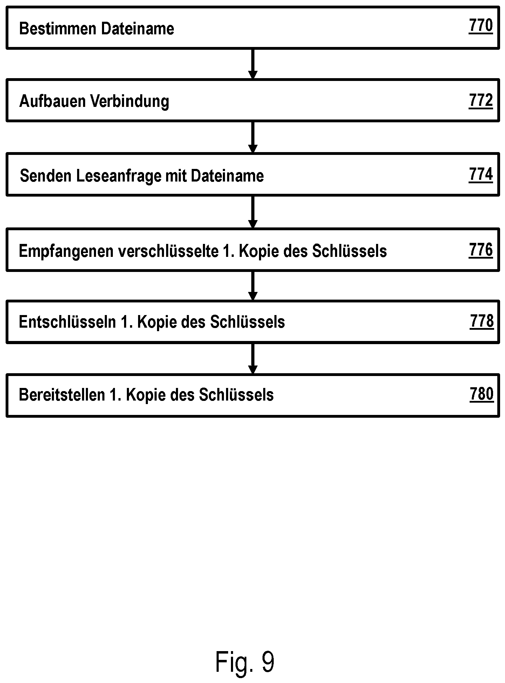

Figur 9 zeigt ein schematisches Flussdiagramm eines exemplarischen Verfahrens zum Wiederherstellen eines kryptografischen Schlüssels zum Entschlüsseln eines verschlüsselten digitalen Dokuments. Das entsprechende digitale Dokument ist in verschlüsselter Form unter einem anonymisierten Dateinamen auf einem Server gespeichert. Der anonymisierte Dateiname sowie der kryptografische Schlüssel werden beispielsweise in Form einer Beschriftung eines Dokumentenkörpers eines physischen Dokuments bereitgestellt. Geht das entsprechende physische Dokument verloren oder wird es derart beschädigt, dass die Beschriftung mit dem kryptografischen Schlüssel nicht mehr verwendbar ist, so wird eine Schlüsselwiederherstellung erforderlich. Eine solche Schlüsselwiederherstellung kann beispielsweise unter Verwendung einer Kopie des entsprechenden kryptografischen Schlüssels erfolgen, die zusammen mit dem digitalen Dokument in verschlüsselter Form auf dem Server gespeichert ist. In Block 770 bestimmt ein Ausstellercomputersystem zum Wiederherstellen des kryptografischen Schlüssels einen anonymisierten Dateinamen, unter welchem die verschlüsselte erste Kopie des wiederherzustellenden kryptografischen Schlüssels auf einem Server gespeichert ist. In Block 772 baut das Ausstellercomputersystem eine Verbindung über ein Netzwerk zu dem Server auf. Bei der aufgebauten Verbindung kann es sich beispielsweise um eine verschlüsselte Kommunikationsverbindung, insbesondere eine Ende-zu-Ende verschlüsselte Kommunikationsverbindung handeln. In Block 774 sendet das Ausstellercomputersystem eine Leseanfrage mit dem in Block 770 bestimmten anonymisierten Dateinamen zum Lesen der ersten Kopie des kryptografischen Schlüssels an den Server. In Block 776 empfängt das Ausstellercomputersystem in Antwort auf die gesendete Leseanfrage eine verschlüsselte erste Kopie des kryptografischen Schlüssels, welche der Server unter Verwendung des anonymisierten Dateinamens identifiziert hat. In Block 778 entschlüsselt das Ausstellercomputersystem die empfangene verschlüsselte erste Kopie des kryptografischen Schlüssels, welche in Block 780 zur weiteren Verwendung auf dem Ausstellercomputersystem bereitgestellt wird.

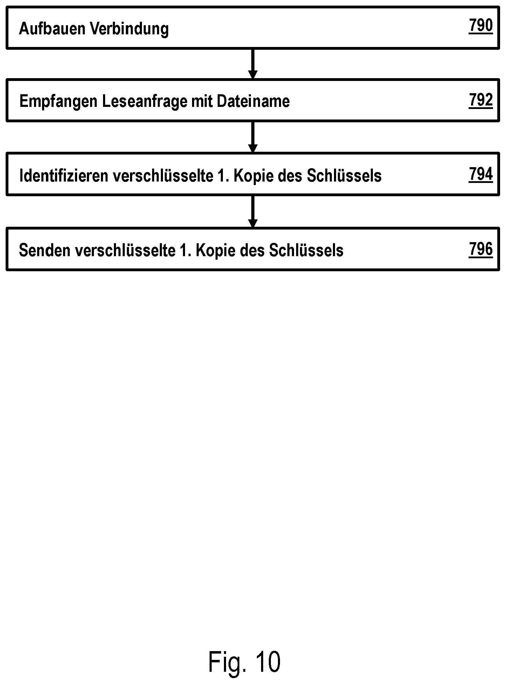

Figur 10 zeigt ein schematisches Flussdiagramm des exemplarischen Verfahrens der Figur 9 aus Sicht des Servers. In Block 790 wird eine Verbindung zwischen dem Ausstellercomputersystem und dem Server über das Netzwerk aufgebaut. Bei der entsprechenden Verbindung handelt es sich beispielsweise um eine verschlüsselte Kommunikationsverbindung, insbesondere eine Ende-zu-Ende verschlüsselte Kommunikationsverbindung. In Block 792 empfängt der Server die Leseanfrage des Ausstellercomputersystems mit dem anonymisierten Dateinamen, anhand dessen der Server die auszulesende verschlüsselte erste Kopie des kryptografischen Schlüssels in Block 794 identifiziert. Die identifizierte verschlüsselte erste Kopie des kryptografischen Schlüssels wird in Block 796 von dem Server an das Ausstellercomputersystem gesendet.

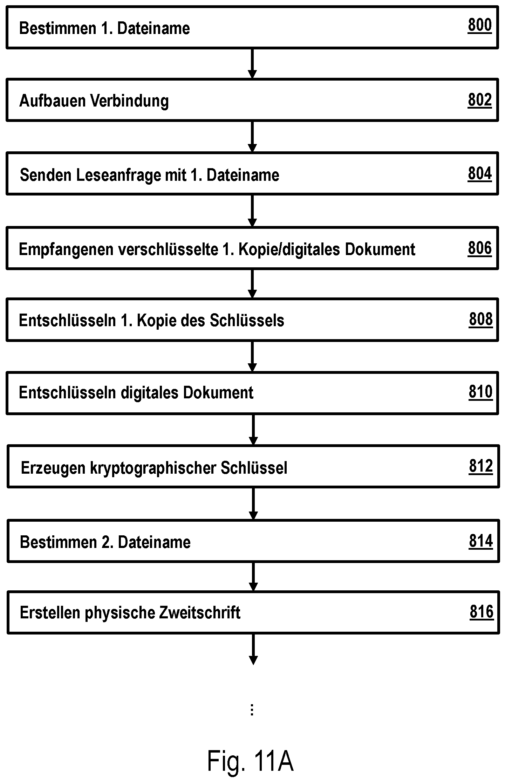

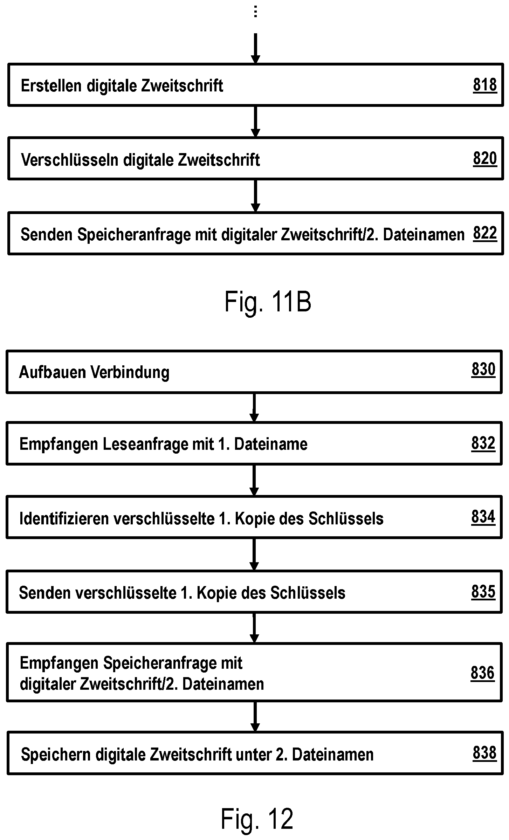

Figur 11 zeigt ein schematisches Flussdiagramm eines exemplarischen Verfahrens zum Ausstellen einer Zweitschrift zum Ersetzen eines verlorenen oder beschädigten Dokuments. Die Figur 11 ist aufgrund der Anzahl der Schritte in zwei Teile aufgeteilt, d.h. einen ersten Teil 11A und einen zweiten Teil 11B, welche jeweils auf einer eigenen Seite angeordnet sind. Hierzu wird ein auf einem Server gespeichertes digitales Dokument verwendet, bei welchem es sich um eine digitale Kopie des mit der Zweitschrift zu ersetzenden physischen Dokuments handelt. In Block 800 bestimmt das Ausstellercomputersystem einen ersten anonymisierten Dateinamen, unter welchem das digitale Dokument in verschlüsselter Form auf dem Server gespeichert ist. In Block 802 baut das Ausstellercomputersystem eine Verbindung über ein Netzwerk zu dem Server auf. Bei der aufgebauten Verbindung handelt es sich beispielsweise um eine verschlüsselte Kommunikationsverbindung, insbesondere eine Ende-zu-Ende verschlüsselte Kommunikationsverbindung. In Block 804 sendet das Ausstellercomputersystem eine Leseanfrage mit dem in Block 800 bestimmten anonymisierten Dateinamen an den Server. Der Server verwendet den empfangenen anonymisierten Dateinamen zum Identifizieren der bereitzustellenden verschlüsselten Kopie des kryptografischen Schlüssels zum Entschlüsseln des verschlüsselten digitalen Dokuments sowie des verschlüsselten digitalen Dokuments. In Block 806 empfängt das Ausstellercomputersystem in Antwort auf die Leseanfrage aus Block 804 die entsprechende verschlüsselte Kopie des kryptografischen Schlüssels sowie das entsprechende verschlüsselte digitale Dokument. Im Block 808 entschlüsselt das Ausstellercomputersystem die empfangene verschlüsselte Kopie des kryptografischen Schlüssels unter Verwendung eines privaten kryptografischen Schlüssels eines Ausstellercomputersystems. Der entsprechende private kryptografische Schlüssel ist beispielsweise im geschützten Speicherbereich eines Speichers des Ausstellercomputersystems gespeichert. In einem Block 810 verwendet das Ausstellercomputersystem den in Block 808 entschlüsselten kryptografischen Schlüssel des Dokuments zum Entschlüsseln des in Block 806 empfangenen digitalen Dokuments.

In dem Ausstellercomputersystem liegen nunmehr die Daten des physischen Dokuments in digitaler Form vor. Das Ausstellercomputersystem kann die entsprechenden digitalen Daten nun beispielsweise zum Erzeugen einer Zweitschrift zum Ersetzen des Dokuments verwenden. In Block 812 erzeugt das Ausstellercomputersystem zu diesem Zweck beispielsweise einen kryptongrafischen Schlüssel für die Zweitschrift. Im Falle eines kryptografischen Schlüssels wird der in Block 812 erzeugte kryptografische Schlüssel zum Verschlüsseln der zu erzeugenden Zweitschrift verwendet. Im Falle eines öffentlichen kryptografischen Schlüssels, welcher in Block 812 erzeugt wird, wird in Block 812 ein zusätzlicher privater kryptografischer Schlüssel, d.h. ein asymmetrisches kryptografisches Schlüsselpaar, erzeugt. Dabei wird der private kryptografische Schlüssel zum Verschlüsseln der digitalen Zweitschrift verwendet, während der öffentliche kryptografische Schlüssel zum Entschlüsseln der so verschlüsselten digitalen Zweitschrift dient. In Block 814 wird ein anonymisierter Dateiname für die Zweitschrift erzeugt. Bei dem anonymisierten Dateinamen der Zweitschrift kann es sich beispielsweise um denselben anonymisierten Dateinamen handeln, unter welchem das digitale Dokument auf dem Server gespeichert ist, falls eine Speicherung der digitalen Zweitschrift in einem anderen Zweig einer baumartigen Dateistruktur des Servers erfolgt. Alternativerweise kann sich der anonymisierte Dateiname der Zeitschrift von dem anonymisierten Dateinamen des Dokuments unterscheiden, beispielsweise unter Verwendung einer Zweitschrift-ID im Zuge des Erzeugens des entsprechenden anonymisierten Dateinamens. In Block 816 wird eine physische Zweitschrift erzeugt. Hierzu wird ein Dokumentenkörper der physischen Zweitschrift mit Daten der physischen Zweitschrift beschriftet. Die Daten der physischen Zweitschrift umfassen die Daten des ursprünglichen Dokuments. Weiterhin umfassen die Daten der physischen Zweitschrift beispielsweise den in Block 812 erzeugten kryptografischen Schlüssel der Zweitschrift sowie den in Block 814 bestimmten anonymisierten Dateinamen der Zweitschrift. Zudem können die Daten der Zweitschrift beispielsweise einen Zweitschriftvermerk umfassen, welcher die physische Zweitschrift als Zweitschrift kennzeichnet und beispielsweise die Authentizität der Daten der Zweitschrift bestätigt bzw. beglaubigt. In Block 818 wird eine digitale Kopie der in Block 816 erzeugten Zweitschrift in Form einer digitalen Zweitschrift erzeugt. Die entsprechende digitale Zweitschrift umfasst die Daten der physischen Zweitschrift, mit welchen der Dokumentenkörper der physischen Zweitschrift beschriftet ist. Zusätzlich ist die digitale Zweitschrift beispielsweise signiert, etwa von dem Ausstellercomputersystem. Hierzu sind die Daten der Zweitschrift mit einem Signaturschlüssel signiert. Dabei wird beispielsweise ein Hashwert der Daten der digitalen Zweitschrift gebildet und dieser Hashwert mit dem Signaturschlüssel, bei welchem es sich beispielsweise um einen privaten kryptografischen Schlüssel des Signierers handelt, signiert. Diese Signatur kann unter Verwendung eines Signaturprüfschlüssels, beispielsweise einen zu dem privaten kryptografischen Schlüssel des Signierers gehörenden öffentlichen kryptografischen Schlüssel des Signierers auf ihre Korrektheit und damit auf die Authentizität der Daten der digitalen Zweitschrift geprüft werden. In Block 820 wird die in Block 818 erstellte digitale Zweitschrift unter Verwendung des in Block 812 erzeugten kryptografischen Schlüssels verschlüsselt. In Block 822 wird eine Speicheranfrage mit der verschlüsselten digitalen Zweitschrift sowie dem in Block 814 bestimmten anonymisierten Dateinamen von dem Ausstellercomputersystem an den Server zum Speichern der verschlüsselten digitalen Zweitschrift unter dem entsprechenden anonymisierten Dateinamen gesendet. Beispielsweise wird die Speicheranfrage über eine verschlüsselte Kommunikationsverbindung, insbesondere eine Ende-zu-Ende verschlüsselte Kommunikationsverbindung von dem Ausstellercomputersystem an das Speichercomputersystem gesendet.

Beispielsweise werden zusätzlich für die digitale Zweitschrift eine erste und/oder eine zweite verschlüsselte Kopie des kryptografischen Schlüssels, welcher in Block 812 erzeugt wurde, erzeugt. Die entsprechenden Kopien werden beispielsweise mit einem öffentlichen kryptografischen Schlüssel des Ausstellercomputersystems verschlüsselt bzw. mit einem öffentlichen kryptografischen Schlüssel eines Verwaltungscomputersystems einer Verwaltungsinstanz. Die so erzeugten verschlüsselten Kopien des kryptografischen Schlüssels aus Block 812 werden zusammen mit der digitalen Zweitschrift auf dem Server gespeichert, um einen Zugang zu der digitalen Zweitschrift selbst im Falle eines Verlusts und/oder einer Beschädigung des physischen Dokuments zu ermöglichen.

Figur 12 zeigt ein schematisches Flussdiagramm des Verfahrens der Figur 11 aus Sicht des Servers. In Block 830 wird eine Verbindung zwischen dem Ausstellercomputersystem und dem Server über das Netzwerk aufgebaut. Bei der Verbindung handelt es sich beispielsweise um eine verschlüsselte Kommunikationsverbindung, insbesondere eine Ende-zu-Ende verschlüsselte Kommunikationsverbindung. In Block 832 empfängt der Server von dem Ausstellercomputersystem eine Leseanfrage mit dem anonymisierten Dateinamen des Dokuments zum Auslesen der digitalen Kopie des entsprechenden Dokuments, d.h. des digitalen Dokuments, sowie einer verschlüsselten ersten Kopie des kryptografischen Schlüssels des Dokuments. In Block 834 identifiziert der Server das angefragte digitale Dokument sowie die entsprechende verschlüsselte Kopie des zugehörigen kryptografischen Schlüssels. In Block 835 sendet der Server in Antwort auf die in Block 832 empfangene Leseanfrage die in Block 834 identifizierte verschlüsselte digitale Zweitschrift zusammen mit der identifizierten verschlüsselten Kopie des zugehörigen kryptografischen Schlüssels an das Ausstellercomputersystem. In Block 836 empfängt der Server eine Speicheranfrage mit der digitalen Zweitschrift und dem anonymisierten Dateinamen, unter welchem die empfangene digitale Zweitschrift zu speichern ist. In Block 834 speichert der Server die empfangene digitale Zweitschrift unter dem empfangenen anonymisierten Dateinamen.

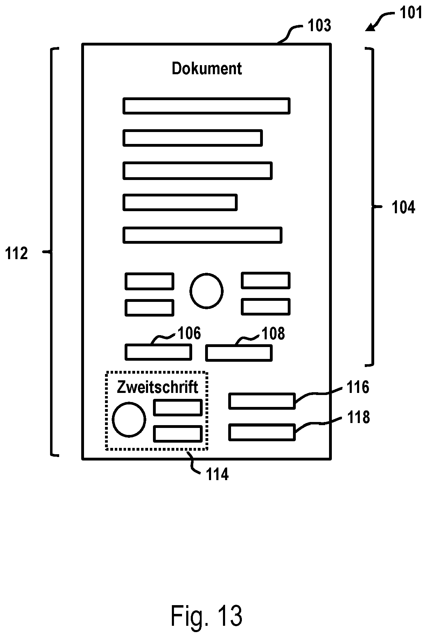

Figur 13 zeigt ein schematisches Diagramm einer exemplarischen Ausführungsform einer physischen Zweitschrift 101. Bei der physischen Zweitschrift 101 in Figur 13 handelt es sich beispielsweise um eine Zweitschrift des in Figur 1 gezeigten Dokuments 100. Die physische Zweitschrift 101 umfasst einen Dokumentenkörper 103, welcher eine Beschriftung mit den Daten 104 des ursprünglichen Dokuments umfasst. Die Daten 104 des ursprünglichen Dokuments umfassen beispielsweise einen anonymisierten Dateinamen 106 sowie einen kryptografischen Schlüssel 108 des Dokuments. Ferner umfassen die Daten 112, mit denen der Dokumentenkörper 103 der Zweitschrift 101 beschriftet ist, einen Zweitschriftvermerk 114, welcher die physische Zweitschrift 101 als eine Zweitschrift des ursprünglichen Dokuments identifiziert und beispielsweise die Authentizität der Daten 104 des ursprünglichen Dokuments bestätigt bzw. beglaubigt. Zusätzlich umfassen die Daten 112 beispielsweise einen anonymisierten Dateinamen 116, unter welchem eine digitale Kopie der physischen Zweitschrift 101, d.h. eine digitale Kopie der Daten 112, auf einem Server gespeichert ist. Die digitale Zweitschrift ist verschlüsselt. Die Daten 112 der physischen Zweitschrift 101 umfassen beispielsweise ferner einen kryptografischen Schlüssel 118, mit welchem die verschlüsselte digitale Zweitschrift entschlüsselt werden kann. Liegt einem Nutzer die physische Zweitschrift 101 vor, so kann dieser den anonymisierten Dateinamen 116 und den kryptografischen Schlüssel 118 dazu verwenden, von dem Server die digitale Zweitschrift zu erhalten und diese zu entschlüsseln. Die Entschlüsselung kann dabei entweder auf einem Nutzercomputersystem des Nutzers lokal vor Ort oder zentral auf dem Server erfolgen. Im zweiten Fall muss dem Server der kryptografische Schlüssel 118 von dem Nutzercomputersystem zur Verfügung gestellt werden. Somit wird ein Bereitstellen einer digitalen Kopie der Zweitschrift 101 für einen Nutzer ermöglicht, bei welcher die Daten 112 der Zweitschrift 101 kryptografisch gesichert sind. Somit können insbesondere von den Daten 112 umfasste personenbezogene Daten des Inhabers des digitalen Dokuments effektiv geschützt werden.

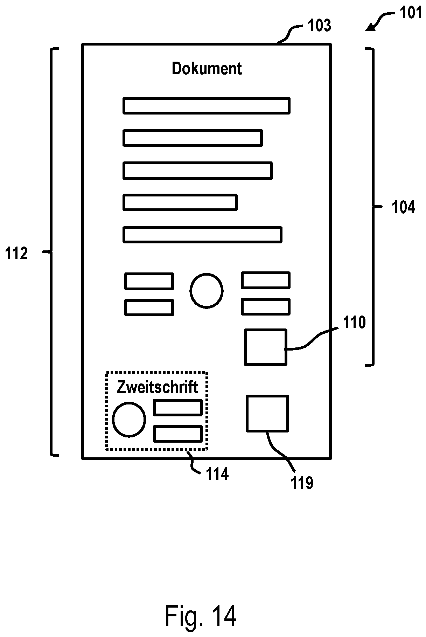

Figur 14 zeigt ein schematisches Diagramm einer weiteren exemplarischen Ausführungsform einer physischen Zweitschrift 101. Bei der physischen Zweitschrift 101 in der Figur 14 handelt es sich beispielsweise um eine physische Zweitschrift des Dokuments 100 der Figur 3. Die physische Zweitschrift 101 der Figur 14 entspricht im Wesentlichen der physischen Zweitschrift 101 der Figur 13. Im Unterschied zu der physischen Zweitschrift 101 der Figur 13 umfassen die ursprünglichen Dokumentendaten 104, welche die Daten 112 der physischen Zweitschrift 101 der Figur 14 umfassen, einen optoelektronisch lesbaren Code 110. Der optoelektronisch lesbare Code 110 der Daten 104 des ursprünglichen Dokuments stellt beispielsweise einen anonymisierten Dateinamen in optoelektronisch lesbarer Form bereit, unter welcher eine digitale Kopie des Ursprungsdokuments auf einem Server gespeichert ist. Ferner stellt der optoelektronisch lesbare Code 110 beispielsweise einen kryptografischen Schlüssel zum Entschlüsseln des in verschlüsselter Form auf dem Server unter dem anonymisierten Dateinamen gespeicherten digitalen Dokuments in optoelektronisch lesbarer Form bereit. Wie die Daten 104 des Ursprungselements, umfassen auch die Daten 112 der physischen Zweitschrift 102 einen optoelektronischen Code 119 mit Daten der Zweitschrift 101. Beispielsweise umfasst der optoelektronisch lesbare Code 119 der Zweitschrift 101 einen anonymisierten Dateinamen, unter welchem eine digitale Kopie der Daten 112 der physischen Zweitschrift 101, d.h. eine digitale Zweitschrift, gespeichert ist. Ferner umfasst der optoelektronisch lesbare Code 119 beispielsweise einen kryptografischen Schlüssel in optoelektronisch lesbarer Form zum Entschlüsseln der Verschlüsselung der digitalen Zweitschrift, welche auf dem Server unter dem anonymisierten Dateinamen der Zweitschrift gespeichert ist.

Liegt einem Nutzer die physische Zweitschrift 101 vor, so wird er dazu die Lage versetzt, unter Verwendung des optoelektronischen Codes 119 Zugriff auf eine digitale Kopie der Zweitschrift 101, d.h. eine digitale Zweitschrift, welche auf dem Server gespeichert ist, zu erlangen.

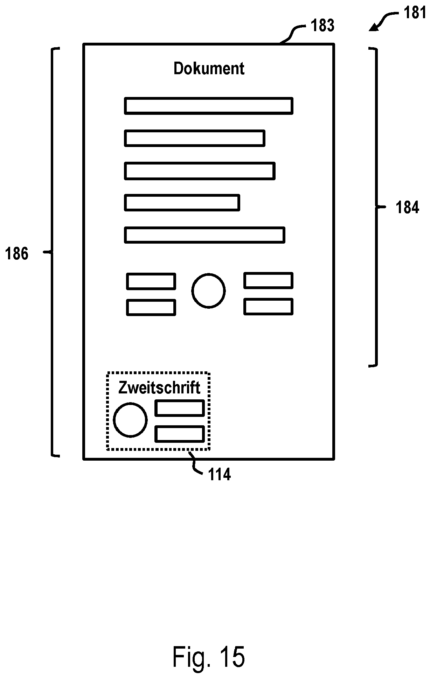

Figur 15 zeigt eine weitere exemplarische Ausführungsform einer physischen Zweitschrift 181. Bei der physischen Zweitschrift 181 in Figur 15 handelt es sich beispielsweise um eine Zweitschrift des in Figur 5 gezeigten Dokuments 180. Die physische Zweitschrift 181 umfasst einen Dokumentenkörper 183, welcher eine Beschriftung mit den Daten 184 des ursprünglichen Dokuments umfasst. Ferner umfassen die Daten 186, mit denen der Dokumentenkörper 183 der Zweitschrift 181 beschriftet ist, einen Zweitschriftvermerk 114, welcher die physische Zweitschrift 181 als eine Zweitschrift des ursprünglichen Dokuments identifiziert und beispielsweise die Authentizität der Daten 184 des ursprünglichen Dokuments bestätigt bzw. beglaubigt.

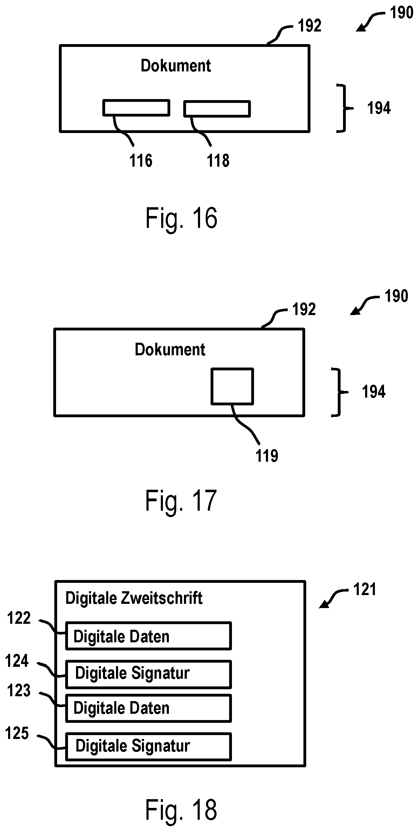

Figur 16 zeigt eine exemplarische Ausführungsform eines dritten physischen Dokuments 190. Bei dem physischen Dokuments 190 handelt es sich um ein Dokument, welches den anonymisierten Dateinamen 116 sowie den kryptografischen Schlüssel 118 bereitstellt.

Hierzu umfasst das Dokument 190 einen Dokumentenkörper 193, welcher eine Beschriftung mit den Daten 194 umfasst. Die Daten 194 umfassen den anonymisierten Dateinamen 116, unter welchem eine digitale Kopie der physischen Zweitschrift 181 aus Figur 15, d.h. eine digitale Kopie der Daten 186, auf einem Server gespeichert ist. Die digitale Zweitschrift ist verschlüsselt. Die Daten 194 umfassen beispielsweise ferner den kryptografischen Schlüssel 118, mit welchem die verschlüsselte digitale Zweitschrift entschlüsselt werden kann. Liegt einem Nutzer das Dokument 190 vor, so kann dieser den anonymisierten Dateinamen 116 und den kryptografischen Schlüssel 118 dazu verwenden, von dem Server die digitale Zweitschrift zu erhalten und diese zu entschlüsseln. Die Entschlüsselung kann dabei entweder auf einem Nutzercomputersystem des Nutzers lokal vor Ort oder zentral auf dem Server erfolgen. Im zweiten Fall muss dem Server der kryptografische Schlüssel 118 von dem Nutzercomputersystem zur Verfügung gestellt werden. Somit wird ein Bereitstellen einer digitalen Kopie der Zweitschrift 181 für einen Nutzer ermöglicht, bei welcher die Daten 186 der Zweitschrift 181 kryptografisch gesichert sind. Somit können insbesondere von den Daten 186 umfasste personenbezogene Daten des Inhabers des digitalen Dokuments effektiv geschützt werden.

Figur 17 zeigt eine weitere exemplarische Ausführungsform eines dritten physischen Do Dokuments 190. Das Dokuments 190 der Figur 17 entspricht im Wesentlichen dem Dokument 190 der Figur 16. Im Unterschied zu dem Dokuments 190 der Figur 16 umfassen die Daten 194 einen optoelektronisch lesbaren Code 119. Der optoelektronisch lesbare Code 119 der Daten 194 umfasst beispielsweise einen anonymisierten Dateinamen, unter welchem eine digitale Kopie der Daten 186 der physischen Zweitschrift 181 aus Figur 15, d.h. eine digitale Zweitschrift, gespeichert ist. Ferner umfasst der optoelektronisch lesbare Code 119 beispielsweise einen kryptografischen Schlüssel in optoelektronisch lesbarer Form zum Entschlüsseln der Verschlüsselung der digitalen Zweitschrift, welche auf dem Server unter dem anonymisierten Dateinamen der Zweitschrift gespeichert ist.

Liegt einem Nutzer das Dokument 190 vor, so wird er dazu die Lage versetzt, unter Verwendung des optoelektronischen Codes 119 Zugriff auf eine digitale Kopie der Zweitschrift 181, d.h. eine digitale Zweitschrift, welche auf dem Server gespeichert ist, zu erlangen

Figur 18 zeigt ein schematisches Diagramm einer exemplarischen Ausführungsform einer digitalen Zweitschrift 121. Bei der digitalen Zweitschrift 121 handelt es sich beispielsweise um eine digitale Zweitschrift der physischen Zweitschrift 101 der Figur 13 oder 14 oder um eine digitale Zweitschrift der physischen Zweitschrift 181 der Figur 15. Die digitale Zweitschrift 121 umfasst eine digitale Kopie 122 der Daten 104 bzw. 184 des ursprünglichen Dokuments. Diese digitalen Daten der Zweitschrift 121 sind beispielsweise mit einer digitalen Signatur 124 eines Ausstellers des ursprünglichen Dokuments signiert. Ferner umfasst die digitale Zweitschrift 121 zusätzlich digitale Daten 123. Die digitalen Daten 122, bei welchen es sich um Kopien der Daten 104 bzw. 184 des ursprünglichen Dokuments handelt in Kombination mit den digitalen Daten 123, bei welchen es sich um digitale Kopien der zusätzlichen Daten der Zweitschrift 101 bzw. 181 handelt, bilden zusammen eine digitale Kopie der Daten 112 der Zweitschrift 101 bzw. der Daten 186 der Zweitschrift 181. Die zusätzlichen digitalen Daten 123 der Zweitschrift umfassen beispielsweise eine digitale Kopie des Zweitschriftvermerks 114 sowie eine digitale Kopie des anonymisierten Dateinamens 116 und des kryptografischen Schlüssels 118 der Figur 13 oder 16 bzw. des optoelektronisch lesbaren Codes 119 der Figur 14 oder 17. Ferner umfasst die digitale Zweitschrift 121 beispielsweise eine digitale Signatur des Ausstellers der Zweitschrift. Mit der digitalen Signatur 125 der digitalen Zweitschrift 121 werden beispielsweise die digitalen Daten 122, die digitale Signatur 124 sowie die zusätzlichen digitalen Daten 123 signiert. Anhand der digitalen Signatur 125 lässt sich die Authentizität der von der digitalen Zweitschrift 121 bereitgestellten Daten prüfen.

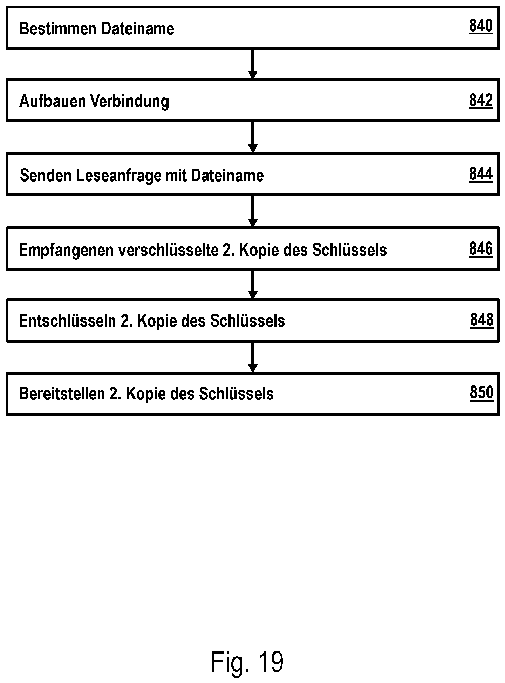

Figur 19 zeigt ein schematisches Diagramm eines exemplarischen Verfahrens zum Wiederherstellen eines kryptografischen Schlüssels zum Entschlüsseln einer digitalen Kopie eines Dokuments, welche in verschlüsselter Form auf einem Server bereitgestellt wird. Im Falle des Verfahrens der Figur 19 wird der kryptografische Schlüssel unter Verwendung einer zweiten verschlüsselten Kopie des kryptografischen Schlüssels wiederhergestellt, welche auf dem Server gespeichert ist. Bei der zweiten verschlüsselten Kopie des kryptografischen Schlüssels handelt es sich beispielsweise um eine Kopie des kryptografischen Schlüssels, welche mit einem öffentlichen kryptografischen Schlüssel eines Verwaltungscomputersystems einer Verwaltungsinstanz verschlüsselt ist. Somit ist zum Entschlüsseln der entsprechenden Kopie des kryptografischen Schlüssels ein privater kryptografischer Schlüssel des Verwaltungscomputersystems notwendig. Der entsprechende private kryptografische Schlüssel des Verwaltungscomputersystems ist beispielsweise im geschützten Speicherbereich eines Speichers des Verwaltungscomputersystems gespeichert. Die zweite Kopie des kryptografischen Schlüssels dient als Rückfallmöglichkeit für den Fall, dass eine Wiederherstellung des kryptografischen Schlüssels unter Verwendung einer ersten kryptografischen Kopie, welche beispielsweise mit einem öffentlichen kryptografischen Schlüssel eines Ausstellercomputersystems eines Ausstellers des digitalen Dokuments verschlüsselt ist, misslingt. Dies kann beispielsweise daran liegen, dass ein zum Entschlüsseln der ersten Kopie des kryptografischen Schlüssels notwendiger privater kryptografischer Schlüssel des Ausstellercomputersystems verloren gegangen ist oder beschädigt wurde. In diesem Fall dient das Verfahren der Figur 19 als Rückfallposition, sodass selbst im Falle eines Verlusts oder einer Beschädigung des privaten kryptografischen Schlüssels des Ausstellercomputersystems immer noch eine Wiederherstellung des kryptografischen Schlüssels des digitalen Dokuments und somit ein Zugang des digitalen Dokuments möglich ist. Das Verfahren der Figur 19 ist analog zu dem Verfahren der Figur 9. In Block 840 bestimmt das Verwaltungscomputersystem einen anonymisierten Dateinamen, unter welchem eine zweite Kopie des kryptografischen Schlüssels des Dokuments gespeichert ist. In Block 842 baut das Verwaltungscomputersystems eine Verbindung zu dem Server über ein Netzwerk auf. Bei der Verbindung handelt es sich beispielsweise um eine verschlüsselte Kommunikationsverbindung, insbesondere eine Ende-zu-Ende verschlüsselte Kommunikationsverbindung. In Block 844 sendet das Verwaltungscomputersystem eine Leseanfrage mit dem in Block 840 bestimmten anonymisierten Dateinamens an den Server. Der Server identifiziert unter Verwendung des empfangenen anonymisierten Dateinamens die auszulesende verschlüsselte zweite Kopie des kryptografischen Schlüssels. In Block 846 empfängt das Verwaltungscomputersystem in Antwort auf die in Block 844 gesendete Leseanfrage die verschlüsselte zweite Kopie des kryptografischen Schlüssels. In Block 848 entschlüsselt das Verwaltungscomputersystem die in Block 846 empfangene verschlüsselte zweite Kopie des kryptografischen Schlüssels unter Verwendung des privaten kryptografischen Schlüssels des Verwaltungscomputersystems und stellt die entschlüsselte zweite Kopie des kryptografischen Schlüssels in Block 850 zur weiteren Verwendung bereit. Beispielsweise kann das Verwaltungscomputersystem den entschlüsselten kryptografischen Schlüssel dem Ausstellercomputersystem und/oder einem Nutzercomputersystem zur Verfügung stellen. Somit können das Ausstellercomputersystem und/oder das Nutzer- Computersystem Zugriff auf das digitale Dokument, insbesondere die von den digitalen Dokumenten verfassten digitalen Kopien der Daten des physischen Dokuments erlangen. Beispielsweise kann das Ausstellercomputersystem unter Verwendung der entschlüsselten Kopie des kryptografischen Schlüssels eine neue verschlüsselte Kopie des kryptografischen Schlüssels erstellen, welche es mit einem neu erzeugten öffentlichen kryptografischen Schlüssel des Ausstellercomputersystems verschlüsselt. Diese neu erstellte kryptografische Kopie kann beispielsweise zum Ersetzen der verschlüsselten ersten Kopie des kryptografischen Schlüssels verwendet werden. Ferner kann die entschlüsselte Kopie des kryptografischen Schlüssels von dem Ausstellercomputersystem zum Ausstellen einer Zweitschrift des digitalen Dokuments verwendet werden.

Alternativer Weise könnten die Blöcke 840 bis 844 auch durch das Ausstellercomputersystem ausgeführt werden, welches das in Antwort auf die in Block 844 gesendete Leseanfrage die verschlüsselte zweite Kopie des kryptografischen Schlüssels empfängt und an das Verwaltungscomputersystem weiterleitet. Das Verwaltungscomputersystem empfängt dann in Block 846 die verschlüsselte zweite Kopie des kryptografischen Schlüssels von dem Ausstellercomputersystem.

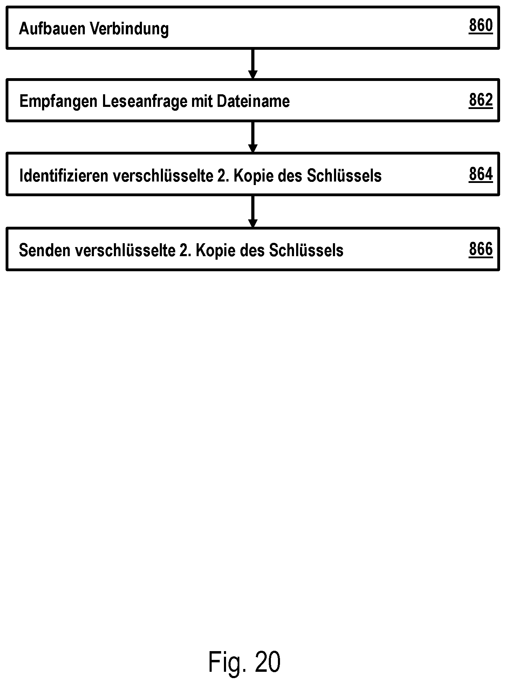

Figur 20 zeigt ein schematisches Flussdiagramm des Verfahrens der Figur 19 aus Sicht des Servers. In Block 860 wird eine Verbindung zwischen dem Verwaltungscomputersystem und dem Server über das Netzwerk aufgebaut. Bei der Verbindung handelt es sich beispielsweise um eine verschlüsselte Verbindung, insbesondere eine Ende-zu-Ende verschlüsselte Verbindung. In Block 862 empfängt der Server die Leseanfrage des Verwaltungscomputersystems mit dem anonymisierten Dateinamen. Der Server verwendet den anonymisierten Dateinamen, um in Block 864 die auszulesende verschlüsselte zweite Kopie des kryptografischen Schlüssels zu identifizieren. In Block 866 sendet der Server in Antwort auf die in Block 862 empfangene Leseanfrage die in Block 864 identifizierte verschlüsselte zweite Kopie des kryptografischen Schlüssels an das Verwaltungscomputersystem.

Falls die Blöcke 840 bis 844 in Figur 19 auch durch das Ausstellercomputersystem ausgeführt werden, kommuniziert der Server in Figur 11 mit dem Ausstellercomputersystem anstelle des Verwaltungscomputersystems.

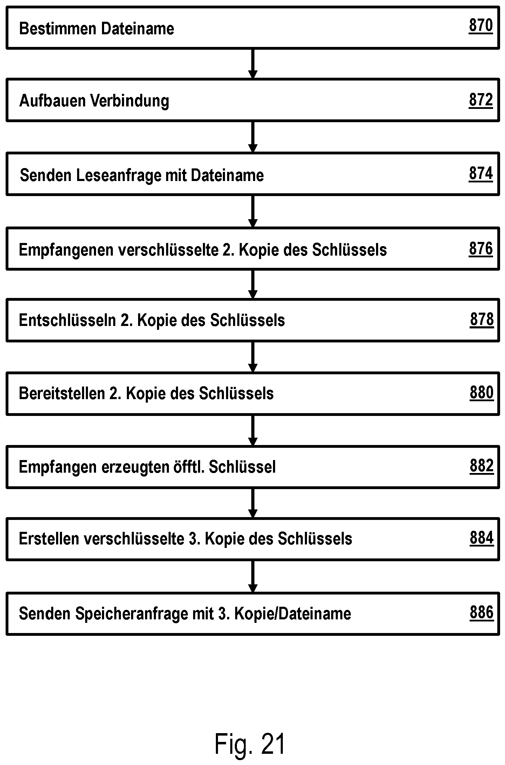

Figur 21 zeigt ein schematisches Flussdiagramm eines exemplarischen Verfahrens zum Ersetzen einer verschlüsselten ersten Kopie des kryptografischen Schlüssels auf dem Server durch eine verschlüsselte dritte Kopie des kryptografischen Schlüssels. Das Verfahren der Figur 21 wird beispielsweise durch ein Verwaltungscomputersystem ausgeführt. Die Blöcken 870 bis 880 der Figur 21 sind identisch zu den Blöcken 840 bis 850 der Figur 19. In Block 882 empfängt das Verwaltungscomputersystem einen von dem Ausstellercomputersystem erzeugten öffentlichen kryptografischen Schlüssel zum Erstellen der verschlüsselten dritten Kopie des kryptografischen Schlüssels des Dokuments. Beispielsweise wird der entsprechende kryptografische Schlüssel von dem Ausstellercomputersystem über das Netzwerk empfangen Beispielsweise erzeugt das Ausstellercomputersystem ein asymmetrisches Schlüsselpaar mit dem entsprechenden öffentlichen kryptografischen Schlüssel sowie einem privaten kryptografischen Schlüssel zum Ersetzen des bisherigen asymmetrischen Schlüsselpaars. Dies kann beispielsweise notwendig werden, falls der bisherige private kryptografische Schlüssel zum Entschlüsseln der verschlüsselten ersten Kopie des kryptografischen Schlüssels verloren geht oder beschädigt ist. In Block 884 wird eine verschlüsselte dritte Kopie des kryptografischen Schlüssels erstellt. Hierzu wird die in Block 880 bereitgestellte entschlüsselte zweite Kopie des kryptografischen Schlüssels mit dem in Block 882 bereit gestellten öffentlichen kryptografischen Schlüssel des Ausstellercomputersystems verschlüsselt. Die so erstellte verschlüsselte dritte Kopie des kryptografischen Schlüssels wird in Block 886 von dem Verwaltungscomputersystem über das Netzwerk an den Server gesendet. Hierzu wird eine entsprechende Speicheranfrage erstellt. Die entsprechende Speicheranfrage umfasst ferner den in Block 870 bestimmten anonymisierten Dateinamen, unter welchem die erste Kopie des kryptografischen Schlüssels auf dem Server gespeichert ist. Der Server, welcher die entsprechende Speicheranfrage empfängt, ersetzt daraufhin beispielsweise die unter dem anonymisierten Dateinamen gespeicherte verschlüsselte erste Kopie des kryptografischen Schlüssels und durch die mit der Speicheranfrage empfangene verschlüsselte dritte Kopie des kryptografischen Schlüssels. Falls die verschlüsselte erste Kopie des kryptografischen Schlüssels zusammen mit den verschlüsselten digitalen Dokumenten und/oder der verschlüsselten zweiten Kopie des kryptografischen Schlüssels in einem Datencontainer auf dem Server gespeichert ist, liest das Verwaltungscomputersystem in den Blöcken 874, 876 zusätzlich das verschlüsselte digitale Dokument aus dem Server und erstellt einen neuen Datencontainer, welcher das verschlüsselte digitale Dokument und die verschlüsselte zweite Kopie des kryptografischen Schlüssels sowie die verschlüsselte dritte Kopie des kryptografischen Schlüssels umfasst, welche die bisherige verschlüsselte erste Kopie des kryptografischen Schlüssels ersetzen. Dieser neu erzeugte Datencontainer wird beispielsweise mit der Speicheranfrage in Block 886 an den Server gesendet, welche den bisherigen Datencontainer durch den neuen Datencontainer ersetzt. Hierzu weist das Ausstellercomputersystem beispielsweise eine Schreibberechtigung auf dem Server nach. Die entsprechende Schreibberechtigung wird beispielsweise im Zuge einer Authentifizierung des Verwaltungscomputersystems gegenüber dem Server nachgewiesen, im Zuge dessen das Verwaltungscomputersystem einen Berechtigungsnachweis vorlegt. Bei dem entsprechenden Berechtigungsnachweis kann es sich beispielsweise um ein entsprechendes Zertifikat des Verwaltungscomputersystems handeln.

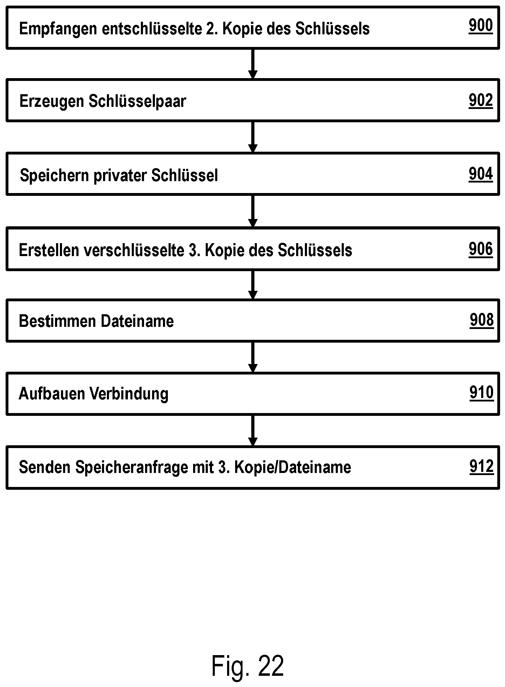

Figur 22 zeigt ein schematisches Flussdiagramm eines weiteren exemplarischen Verfahrens zum Ersetzen der verschlüsselten ersten Kopie des kryptografischen Schlüssels auf den Servern durch eine verschlüsselte dritte Kopie des kryptografischen Schlüssels. Das Verfahren der Figur 11 wird von dem Ausstellercomputersystem ausgeführt und schließt sich beispielsweise an das von dem Verwaltungscomputersystem ausgeführte Verfahren der Figur 19 an. Die in dem Verfahren der Figur 19 bereitgestellte entschlüsselte zweite Kopie des kryptografischen Schlüssels wird von dem Verwaltungscomputersystem beispielsweise über eine verschlüsselte Kommunikationsverbindung an das Ausstellercomputersystem gesendet. In Block 900 empfängt das Ausstellercomputersystem die entschlüsselte zweite Kopie des kryptografischen Schlüssels. In Block 902 erzeugt das Ausstellercomputersystem ein neues asymmetrisches Schlüsselpaar, welches das bisherige asymmetrische Schlüsselpaar ersetzen soll. Beispielsweise ist das in Block 902 erzeugte Schlüsselpaar zum Ersetzen eines verloren gegangenen oder beschädigten bisherigen asymmetrischen Schlüsselpaars des Ausstellercomputersystems angedacht. In Block 904 wird ein privater kryptografischer Schlüssel des in Block 902 erzeugten asymmetrischen Schlüsselpaars in einem geschützten Speicherbereich des Speichers in das Ausstellercomputersystem gespeichert. In Block 906 wird eine verschlüsselte dritte Kopie des kryptografischen Schlüssels erstellt. Hierzu wird beispielsweise die in Block 900 empfangene entschlüsselte zweite Kopie des kryptografischen Schlüssels mit einem öffentlichen kryptografischen Schlüssel des in Block 902 erzeugten kryptografischen Schlüsselpaars des Ausstellercomputersystems verschlüsselt. In Block 908 wird ein anonymisierter Dateiname bestimmt, unter welchem die bisherige verschlüsselte erste Kopie des kryptografischen Schlüssels auf dem Server gespeichert ist. In Block 910 wird eine Verbindung zwischen dem Ausstellercomputersystem und dem Server aufgebaut. Bei der Verbindung handelt es sich beispielsweise um eine verschlüsselte Verbindung, insbesondere eine Ende-zu-Ende verschlüsselte Verbindung. In Block 912 wird eine Speicheranfrage mit der in Block 906 erstellten verschlüsselten dritten Kopie des kryptografischen Schlüssels sowie des in Block 908 bestimmten anonymisierten Dateinamens erstellt. Diese Speicheranfrage empfängt der Server und identifiziert unter Verwendung des anonymisierten Dateinamens die bisherige verschlüsselte erste Kopie des kryptografischen Schlüssels, welche durch die neu erstellte verschlüsselte dritte Kopie des kryptografischen Schlüssels ersetzt wird. Falls die bisherige verschlüsselte erste Kopie des kryptografischen Schlüssels auf dem Server zusammen mit dem digitalen Dokument und der verschlüsselten zweiten Kopie des kryptografischen Schlüssels in einem gemeinsamen Datencontainer auf dem Server gespeichert ist, empfängt das Ausstellercomputersystem beispielsweise in Block 900 zusätzlich, um das verschlüsselte digitale Dokument sowie die verschlüsselte zweite Kopie des kryptografischen Schlüssels von dem Verwaltungscomputersystem. Alternativer Weise kann das Ausstellercomputersystem das verschlüsselte digitale Dokument und/oder die verschlüsselte zweite Kopie des kryptografischen Schlüssels von dem Server auslesen. Hierzu verwendet das Ausstellercomputersystem beispielsweise die in Block 900 empfangene entschlüsselte zweite Kopie des kryptografischen Schlüssels sowie den in Block 908 bestimmten anonymisierten Dateinamen. Unter Verwendung des verschlüsselten, digitalen Dokuments sowie der verschlüsselten zweiten Kopie des kryptografischen Schlüssels und der verschlüsselten dritten Kopie des kryptografischen Schlüssels kann das Ausstellercomputersystem einen neuen Datencontainer erzeugen, welchen es in Block 912 mit der Speicheranfrage an den Server zum Ersetzen des bisherigen Datencontainers sendet.

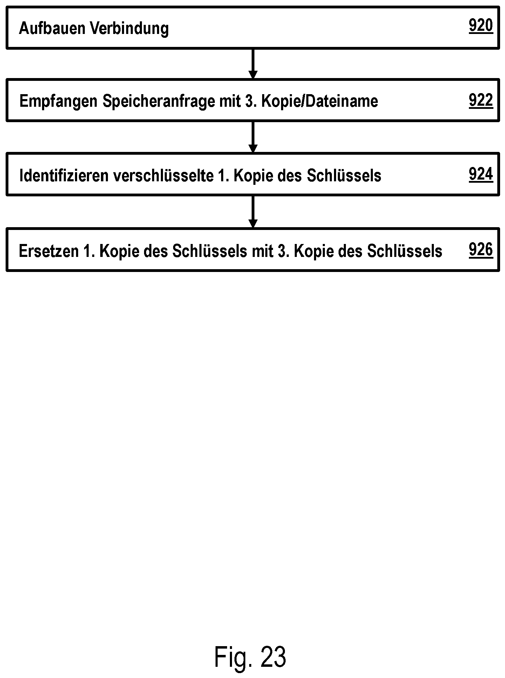

Figur 23 zeigt ein schematisches Flussdiagramm eines exemplarischen Verfahrens in der Figur 22 aus Sicht des Servers. In Block 920 wird eine Verbindung zwischen dem Ausstellercomputersystem und dem Server aufgebaut. Bei der entsprechenden Verbindung handelt es sich beispielsweise um eine verschlüsselte Kommunikationsverbindung, insbesondere eine Ende-zu-Ende verschlüsselte Kommunikationsverbindung. In Block 922 empfängt der Server die Speicheranfrage mit der verschlüsselten dritten Kopie des kryptografischen Schlüssels und dem anonymisierten Dateinamen, unter welchem die verschlüsselte dritte Kopie des kryptografischen Schlüssels auf dem Server zu speichern ist. Im zuvor beschriebenen Falle eines Datencontainers, welcher neben der verschlüsselten dritten Kopie des kryptografischen Schlüssels den verschlüsselten digitalen Dateinamen sowie die verschlüsselte zweite Kopie des kryptografischen Schlüssels umfasst, wird mit der Speicheranfrage der entsprechende Datencontainer zum Ersetzen des bisherigen Datencontainers empfangen. In Block 924 verwendet der Server den in Block 922 empfangen anonymisierten Dateinamen zum Identifizieren der bisherigen verschlüsselten ersten Kopie des kryptografischen Schlüssels. In Block 926 wird die in Block 924 identifizierte bisherige verschlüsselte erste Kopie des kryptografischen Schlüssels mit der in Block 922 empfangenen verschlüsselten dritten Kopie des kryptografischen Schlüssels ersetzt. Im Falle eines Datencontainers wird die bisherige verschlüsselte erste Kopie des kryptografischen Schlüssels umfassende Datencontainer durch den in Block 922 empfangen Datencontainer ersetzt.

Im Falle des Verfahrens der Figur 21 führt der Server zunächst das Verfahren der Figur 20 aus. Daran schließt sich das Verfahren der Figur 23 an, wobei allerdings der Verbindungsaufbau in Block 920 entfallen kann, falls die in Block 860 aufgebaute Verbindung aufrechterhalten wird.

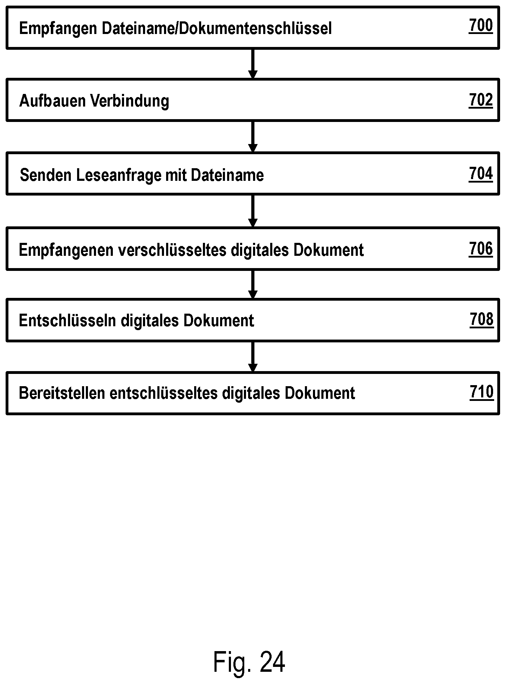

Figur 24 zeigt ein schematisches Flussdiagramm eines exemplarischen Verfahrens zum Bereitstellen eines digitalen Dokuments. Das entsprechende digitale Dokument ist in verschlüsselter Form und einem anonymisierten Dateinamen auf einem Server gespeichert. Es liegt ein physisches Dokument vor, welches einen Dokumentenkörper umfasst, der mit Daten des physischen Dokuments beschriftet ist. Bei dem digitalen Dokument handelt sich um eine digitale Kopie der Daten des physischen Dokuments. Beispielsweise ist das digitale Dokument signiert. Die Daten des physischen Dokuments umfassend einen anonymisierten Dateinamen, unter welchen das digitale Dokument auf dem Server gespeichert ist sowie einen kryptografischen Schlüssel, mit welchem das verschlüsselte digitale Dokument entschlüsselt werden kann. In Block 700 empfängt ein Nutzercomputersystem den anonymisierten Dateinamen sowie den kryptografischen Schlüssel unter Verwendung des physischen Dokuments. Beispielsweise umfasst der Empfang eine Nutzereingabe des anonymisierten Dateinamens und des kryptografischen Schlüssels. Alternativerweise kann das physische Dokument den anonymisierten Dateinamen und den kryptografischen Schlüssel in Form eines optoelektronisch lesbaren Codes umfassen, welchen das Nutzercomputersystem unter Verwendung eines optoelektronischen Sensors erfassen kann. In Block 702 baut das Nutzercomputersystem eine Verbindung über ein Netzwerk zu dem Server auf. Bei der entsprechenden Verbindung handelt es sich beispielsweise um eine verschlüsselte Kommunikationsverbindung, insbesondere eine Ende-zu-Ende verschlüsselte Kommunikationsverbindung. Der Verbindungsaufbau kann beispielsweise nach dem Empfang des anonymisierten Dateinamens und des kryptografischen Schlüssels erfolgen. Dies kann beispielsweise der Fall sein, falls ein optoelektronischer Code des physischen Dokuments gelesen wird, welcher ferner einen Identifikator des Servers zum Adressieren des Servers umfasst. Alternativerweise kann der Verbindungsaufbau vor dem Empfang des anonymisierten Dateinamens und des kryptografischen Dokumentenschlüssels erfolgen. Dies ist beispielsweise der Fall, wenn zunächst eine von dem Server bereitgestellte Webseite aufgerufen wird, welche eine grafische Nutzeroberfläche umfasst mit Eingabefeldern, in welchen von dem Nutzer des Nutzercomputersystems der anonymisierte Dateiname und /oder der kryptografische Schlüssel einzugeben ist. Falls eine Entschlüsselung des verschlüsselten digitalen Dokuments auf dem Nutzercomputersystem nach Empfang des verschlüsselten digitalen Dokuments von dem Server erfolgt, kann eine Eingabe des Dokumentenschlüssels beispielsweise auch erst unmittelbar vor dem Entschlüsseln des digitalen Dokuments erfolgen, d.h. direkt vor Block 708. In Block 704 wird eine Leseanfrage mit dem Dateinamen über ein Netzwerk an den Server gesendet. In Antwort auf die gesendete Leseranfrage empfängt das Nutzercomputersystem in Block 706 das angefragte verschlüsselte digitale Dokument, welches in Block 708 unter Verwendung das zuvor empfangenen kryptografischen Schlüssels des Dokuments entschlüsselt wird. In Block 710 wird schließlich das entschlüsselte digitale Dokument auf dem Nutzercomputersystem bereitgestellt.

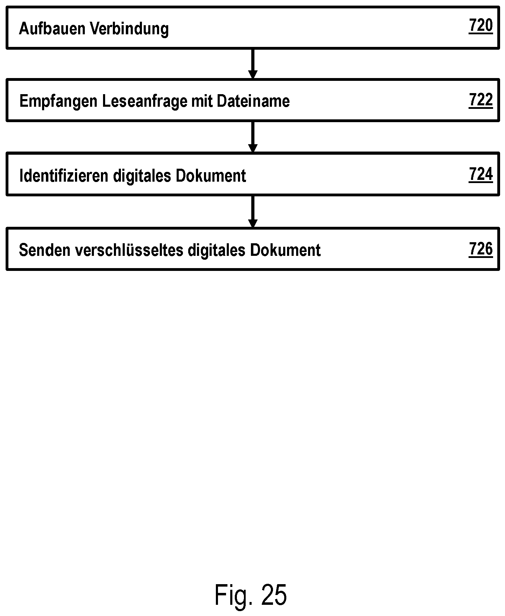

Figur 25 zeigt das Verfahren der Figur 24 aus Sicht des Servers. In Block 720 wird eine Verbindung über das Netzwerk zwischen dem Nutzercomputersystem und dem Server aufgebaut. In Block 722 empfängt der Server eine Leseanfrage des Nutzercomputersystems mit dem anonymisierten Dateinamen zum Identifizieren des auszulesenden digitalen Dokuments. In Block 724 identifiziert der Server das auszulesende digitale Dokument und sendet dieses in Block 726 in Antwort auf die in Block 722 empfangene Leseanfrage in verschlüsselter Form an das Nutzercomputersystem.

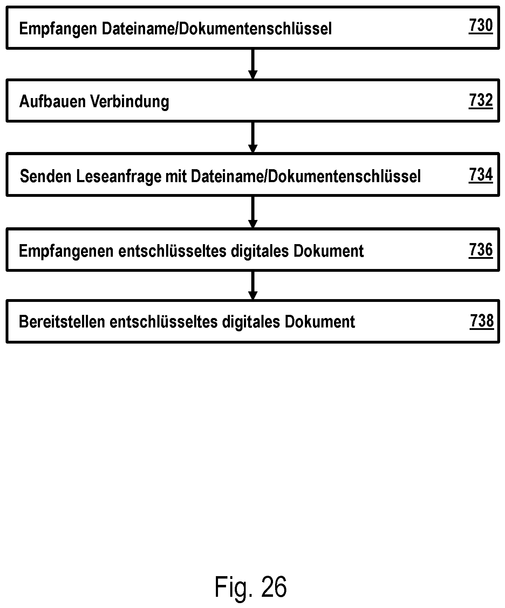

Figur 26 zeigt ein schematisches Flussdiagramm eines weiteren exemplarischen Verfahrens zum Bereitstellen eines digitalen Dokuments. Im Falle der Figur 26 erfolgt die Entschlüsselung des verschlüsselten digitalen Dokuments auf dem Server, im Gegensatz zu den Verfahren in Figur 24, bei welchem die Entschlüsselung auf dem Nutzercomputersystem erfolgt. Die Blöcke 730 und 732 der Figur 26 sind identisch zu den Blöcken 700 und 702 der Figur 24. Der Block 734 der Figur 26 entspricht dem Block 704 der Figur 24 mit dem Unterschied, dass die Leseanfrage zusätzlich zu dem anonymisierten Dateinamen, den kryptografischen Schlüssel des Dokuments umfasst. In diesem Fall handelt es sich bei der Verbindung zwischen dem Nutzercomputersystem und dem Server um eine verschlüsselte Kommunikationsverbindung, insbesondere eine Ende-zu-Ende verschlüsselte Kommunikationsverbindung. Der Block 736 der Figur 26 entspricht dem Block 706 der Figur 24 mit dem Unterschied, dass das Nutzercomputersystem das digitale Dokument in entschlüsselter Form empfängt. Der Server verwendet den Block 734 vom kryptografischen Schlüssel zum Entschlüsseln des unter dem anonymisierten Dateinamen gespeicherten digitalen Dokuments. In Block 738 stellt das Nutzercomputersystem das empfangene entschlüsselte digitale Dokument zur weiteren Verwendung bereit.

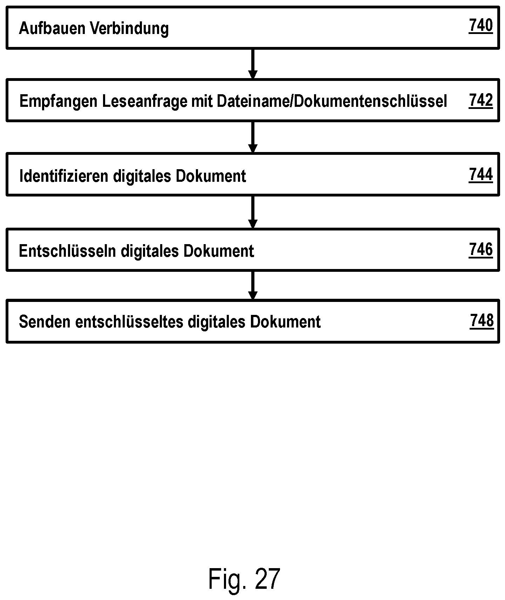

Figur 27 zeigt ein schematisches Flussdiagramm des exemplarischen Verfahrens der Figur 26 aus Sicht des Servers. In Block 740 wird eine verschlüsselte Kommunikationsverbindung zwischen dem Nutzercomputersystem und dem Server aufgebaut. In Block 742 empfängt der Server eine Leseanfrage von dem Nutzercomputersystem, welche anonymisierten Dateinamen zum Identifizieren eines auszulesenden digitalen Dokuments sowie einen kryptografischen Schlüssel zum Entschlüsseln des auszulesenden digitalen Dokuments umfassen. In Block 744 identifiziert der Server das auszulesende digitale Dokument unter Verwendung des empfangenen anonymisierten Dateinamens. In Block 746 entschlüsselt der Server das identifizierte digitale Dokument und sendet dieses entschlüsselte digitale Dokument in Block 748 in Antwort auf die Leseanfrage aus Block 742 an das anfragende Nutzercomputersystem.

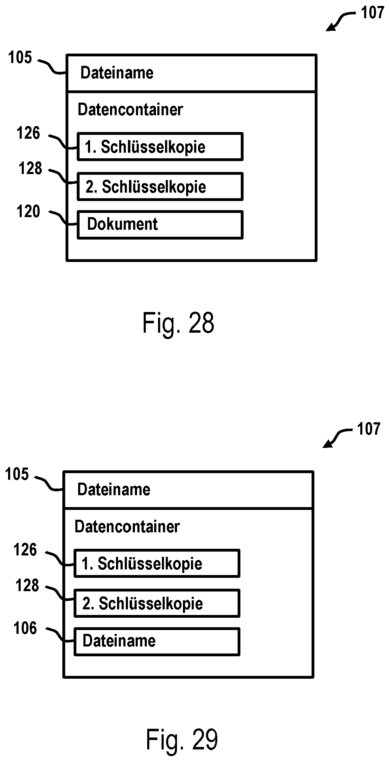

Figur 28 zeigt einen exemplarischen Datencontainer 107. Der Datencontainer 107 dient einem Bereitstellen ein oder mehrerer verschlüsselter Kopien des kryptografischen Schlüssels zum Entschlüsseln des digitalen Dokuments. Die entsprechenden Kopien ermöglichen eine Wiederherstellung des kryptografischen Schlüssels zum Entschlüsseln des digitalen Dokuments. Beispielsweise umfasst der Datencontainer 107 eine erste verschlüsselte Kopie 126 des kryptografischen Schlüssels zum Entschlüsseln des digitalen Dokuments und/oder eine zweite verschlüsselte Kopie 128 des kryptografischen Schlüssels zum Entschlüsseln des digitalen Dokuments. Die erste Kopie 126 ist beispielsweise mit einem öffentlichen kryptografischen Schlüssel eines Ausstellercomputersystems eines Ausstellers des digitalen Dokuments verschlüsselt. Somit ist beispielsweise nur das Austellercomputersystem, welches sich im Besitz eines zu dem entsprechenden öffentlichen kryptografischen Schlüssel passenden privaten kryptografischen Schlüssels befindet, dazu in der Lage die erste verschlüsselte Kopie 126 zu entschlüsseln und so den kryptografischen Schlüssel zum Entschlüsseln des digitalen Dokuments wiederherzustellen. Die zweite Kopie 128 ist beispielsweise mit einem öffentlichen kryptografischen Schlüssel eines Verwaltungscomputersystems einer Verwaltungsinstanz. Somit ist beispielsweise nur das Verwaltungscomputersystem, welches sich im Besitz eines zu dem entsprechenden öffentlichen kryptografischen Schlüssel passenden privaten kryptografischen Schlüssels befindet, dazu in der Lage die zweite verschlüsselte Kopie 128 zu entschlüsseln und so den kryptografischen Schlüssel zum Entschlüsseln des digitalen Dokuments wiederherzustellen.

Der Datencontainer 107 ist auf dem Server unter einem anonymisierten Dateinamen 105 gespeichert. Bei dem anonymisierten Dateinamen 105 handelt es sich beispielsweise um einen aus dem Dokument zugeordneten Daten ableitbaren Dateinamen. Beispielsweise umfassen die Daten personenbezogene Attribute und/oder Daten des Dokuments. Beispielsweise ist der Dateiname unter Verwenden einer Hashfunktion aus einer Kombination dem Dokument zugeordneten Daten ableitbar. Beispielsweise umfassen die Daten ferner Daten, welche dem Ausstellercomputersystem und/oder dem Verwaltungscomputersystem zugeordnet sind. Beispielsweise umfassen die Daten ferner Daten, welche nur dem Ausstellercomputersystem und/oder dem Verwaltungscomputersystem bekannt sind.

Beispielsweise handelt es sich bei dem anonymisierten Dateinamen 105 um einen Hash-Wert der Kombination von Inhabervorname, Inhabernachname, Inhabergeburtsdatum, Aussteller, Ausstellungjahr und einer laufenden Nummer. Die laufende Nummer kann beispielsweise notwendig sein, falls in demselben Jahre mehrere Dokumente für denselben Inhaber von demselben Aussteller ausgestellt werden. Andernfalls kann die laufende Nummer beispielsweise weggelassen werden. Soll nach einem passenden Dokument bzw. nach einer passenden Kopie zum Entschlüsseln eines digitalen Dokuments gesucht werden, werden beispielsweise verschiedene Kombinationen durchgeprüft bis ein passendes Dokument zw. eine Kopie eines passenden kryptografischen Schlüssels gefunden wird oder eine vordefinierte maximale laufende Nummer erreicht wird. Exemplarische Kombinationen sind: Hashfunktion(Vorname.Nachname.Geburtsdatum.Aussteller.Jahr), Hashfunktion(Vorname.Nachname.Geburtsdatum. Aussteller.Jahr.01), Hashfunktion(Vorname.Nachname.Geburtsdatum.Aussteller.Jahr.02), usw.

Es ist mithin möglich den anonymisierten Dateinamen 105 bei ausreichender Kenntnis der dafür notwendigen Daten abzuleiten, d.h. zu ermitteln. Somit kann beispielsweise das Ausstellercomputersystem und/oder des Verwaltungscomputersystem Zugriff auf den Datencontainer 107 und somit auf die verschlüsselten Kopien des kryptografischen Schlüssels zum Entschlüsseln des digitalen Dokuments erlagen. Beispielsweise kann das Ausstellercomputersystem unter Verwendung des anonymisierten Dateinamens 105 Zugriff auf die verschlüsselte erste Kopie 126 erlangen und diese mit einem privaten kryptografischen Schlüssel des Ausstellercomputersystems entschlüsseln. Somit erhält das Ausstellercomputersystem Zugriff auf den kryptografischen Schlüssel zum Entschlüsseln des verschlüsselten digitalen Dokuments. Beispielsweise kann das Verwaltungscomputersystem unter Verwendung des anonymisierten Dateinamens 105 Zugriff auf die verschlüsselte zweite Kopie 128 erlangen und diese mit einem privaten kryptografischen Schlüssel des Verwaltungscomputersystems entschlüsseln. Somit erhält das Verwaltungscomputersystem Zugriff auf den kryptografischen Schlüssel zum Entschlüsseln des verschlüsselten digitalen Dokuments.

Umfasst der Datencontainer 107 nur eine Kopie des kryptografischen Schlüssels zum Entschlüsseln des verschlüsselten digitalen Dokuments, so kann die Verschlüsselung der ersten Kopie auch in einer Verschlüsselung des Datencontainer 107 bestehen. Beispielsweise kann der Datencontainer 107 mit der Kopie unter Verwendung eines öffentlichen kryptografischen Schlüssels eines Ausstellercomputersystems oder eines Verwaltungscomputersystems verschlüsselt sein.

Beispielsweise umfasst der Dateicontainer 107 ferner eine das verschlüsselte digitale Dokument 120. Somit kann das Ausstellercomputersystem oder das Verwaltungscomputersystem das verschlüsselte digitale Dokument 120 entschlüsseln unter Verwendung des zuvor erlangten kryptografischen Schlüssels zum Entschlüsseln. Mithin kann das entschlüsselnde Ausstellercomputersystem oder Verwaltungscomputersystem Zugriff auf das digitale Dokument in unverschlüsselter Form erlangen.

Figur 29 zeigt eine alternative Ausführungsform eines exemplarischen Datencontainers 107. Der Datencontainer 107 in Figur 29 unterscheidet sich von dem Datencontainer 107 in Figur 28 dadurch, dass der Datencontainer 107 in Figur 29 anstelle des digitalen Dokuments 120 einen weiteren anonymisierten Dateinamen 106 umfasst, unter welche das verschlüsselte digitale Dokument 120 auf dem Server gespeichert ist. Das Ausstellercomputersystem oder Verwaltungscomputersystem können den von dem Datencontainer 107 bereitgestellten anonymisierten Dateinamen 106 zum Identifizieren und Herunterladen des digitalen Dokuments 120 von dem Server verwenden. Das verschlüsselte digitale Dokument 120 kann dann entschlüsselt werden unter Verwendung des zuvor erlangten kryptografischen Schlüssels zum Entschlüsseln.

Dies kann den Vorteil haben, dass auf dem Server beispielsweise nur genau eine Kopie des verschlüsselten digitalen Dokuments 120 gespeichert ist. Diese kann beispielsweise unter einem anonymisierten Dateinamen 106 gespeichert sein, welcher nicht aus anderen Daten ableitbar ist. Beispielsweise kann es sich bei diesem um einen Zufallszeichenfolge, etwa eine Zufallszahl, handeln. Dieser Dateiname 106 könnte dann ausschließlich von Teilnehmern verwendet werde, welche Zugriff auf diesen haben. Beispielsweise umfasst die Beschriftung des physischen Dokuments diesen Dateiname 106. Mithin hat ein Nutzer, welchem das physische Dokument vorliegt, Zugriff auf den Dateiname 106 und mithin auf das verschlüsselte digitale Dokument 120. Diesem Nutzer wird durch das physische Dokument zugleich der kryptografische Schlüssel zum Entschlüsseln des verschlüsselte digitale Dokument 120 zur Verfügung gestellt.

Ebenso kann beispielsweise ein Ausstellercomputersystem oder ein Verwaltungscomputersystem den Dateinamen 105 ableiten und somit Zugriff auf den Datencontainer 107 mit dem Dateinamen 106 erlangen. Zugleich stellt der Datencontainer 107 dem Ausstellercomputersystem oder Verwaltungscomputersystem beispielsweise der kryptografische Schlüssel zum Entschlüsseln des verschlüsselte digitale Dokument 120 in Form verschlüsselter Kopien 126, 128 zur Verfügung.

Somit kann beispielsweise ein hohes Maß an Sicherheit gewährleistet werden und zugleich einerseits dem Nutzer des physischen Dokuments ein Zugriff auf das digitale Dokument bereitgestellt werden, wie auch andererseits ein selektiver Zugriff ohne das physische Dokument. Ein solcher selektiver Zugriff ohne das physische Dokument wird beispielsweise einem Ausstellercomputersystem oder Verwaltungscomputersystem zur Verfügung gestellt. Der Zugriff hängt beispielsweise von einem privaten kryptografischen Schlüssel des Ausstellercomputersystems oder Verwaltungscomputersystems ab.

Im Falle der Figur 28 sind beispielsweise zwei Kopien des verschlüsselten digitalen Dokuments auf dem Server gespeichert: Einmal unter einem anonymisierten Dateinamen 106, bei welchem es sich insbesondere um einen nicht ableitbaren Dateinamen, wie etwa eine Zufallszahl, handeln kann, und einmal als Bestandteil des Datencontainers unter einem ableitbaren anonymisierten Dateinamen 105. Die Kopie unter dem Dateinamen 106 stellt der Server für Nutzer bereit, welchen das physische Dokument vorliegt. Die andere Kopie unter dem Dateinamen 105 stellt der Server einem Ausstellercomputersystem oder Verwaltungscomputersystem zur Verfügung, welche keinen Zugriff auf das physische Dokument besitzen.

### Bezugszeichenliste

- 100: erstes physisches Dokument
- 101: physische Zweitschrift
- 102: Dokumentenkörper
- 103: Dokumentenkörper
- 104: Dokumentendaten
- 105: anonymisierter Dateiname
- 106: anonymisierter Dateiname
- 107: Datencontainer
- 108: kryptografischer Schlüssel
- 110: optoelektronisch lesbarer Code
- 112: Zweitschriftdaten
- 114: Zweitschriftvermerk
- 116: anonymisierter Dateiname
- 118: kryptografischer Schlüssel
- 119: optoelektronisch lesbarer Code
- 120: digitales Dokument
- 121: digitale Zweitschrift
- 122: digitale Kopie Dokumentendaten
- 123: digitale Signatur
- 124: digitale Kopie Zweitschriftdaten
- 125: digitale Signatur
- 126: Schlüsselkopie
- 128: Schlüsselkopie
- 150: System
- 160: Netzwerk
- 180: zweites physisches Dokument
- 181: physische Zweitschrift
- 182: Dokumentenkörper
- 183: Dokumentenkörper
- 184: Dokumentendaten
- 186: Zweitschriftdaten
- 190: drittes physisches Dokument
- 192: dritter Dokumentenkörper
- 194: dritte Dokumentendaten
- 200: Nutzercomputersystem
- 202: Speicher
- 204: Prozessor
- 206: Programminstruktionen
- 208: optoelektronischer Sensor
- 210: Kommunikationsschnittstelle
- 300: Server
- 302: Speicher
- 304: Prozessor
- 306: Programminstruktionen
- 308: Kommunikationsschnittstelle
- 400: Ausstellercomputersystem
- 402: Speicher
- 404: geschützter Speicherbereich
- 406: privater kryptografischer Schlüssel
- 408: öffentlicher kryptografischer Schlüssel
- 410: Prozessor
- 412: Programminstruktionen
- 414: Kommunikationsschnittstelle
- 500: Verwaltungscomputersystem
- 502: Speicher
- 504: geschützter Speicherbereich
- 506: privater kryptografischer Schlüssel
- 508: öffentlicher kryptografischer Schlüssel
- 510: Prozessor
- 512: Programminstruktionen
- 514: Kommunikationsschnittstelle

## Patentansprüche

1. Verfahren zum Wiederherstellen eines ersten kryptografischen Schlüssels (108) zum Entschlüsseln eines verschlüsselten digitalen Dokuments (120) durch ein Ausstellercomputersystem (400) eines Ausstellers des digitalen Dokuments (120),
wobei das digitale Dokument (120), bei welchem es sich um eine digitale Kopie (122) von Daten (104) eines physischen Dokuments (100, 180) handelt, in verschlüsselter Form unter einem ersten anonymisierten Dateinamen (106) auf einem Server (300) gespeichert ist, wobei auf dem Server (300) ferner eine erste Kopie (126) des ersten kryptografischen Schlüssels (108) in verschlüsselter Form unter einem zweiten anonymisierten Dateinamen (105) gespeichert ist, wobei das verschlüsselte digitale Dokument (120) unter Verwendung des ersten kryptografischen Schlüssels (108) entschlüsselbar ist, wobei die erste Kopie (126) des ersten kryptografischen Schlüssels (108) mit einem zweiten öffentlichen kryptografischen Schlüssel (408) eines dem Aussteller des digitalen Dokuments (120) zugeordneten zweiten asymmetrischen Schlüsselpaars verschlüsselt ist,
wobei der zweite anonymisierte Dateiname (105) unter Verwendung einer Kombination von personenbezogenen Attributen des Inhabers des digitalen Dokuments (120) berechnet ist, auf die eine Einwegfunktion angewendet ist,
wobei in einem geschützten Speicherbereich eines Speichers des Ausstellercomputersystems (400) ein zweiter privater kryptografischer Schlüssel (406) des zweiten asymmetrischen Schlüsselpaars des Ausstellers gespeichert ist, wobei das Verfahren umfasst:
• Bestimmen des zweiten anonymisierten Dateinamens (105) unter Verwendung der Kombination von personenbezogenen Attributen des Inhabers des digitalen Dokuments (120) durch das Ausstellercomputersystem (400),
• Aufbauen einer ersten Verbindung über ein Netzwerk (160) zwischen dem Ausstellercomputersystem (400) und dem Server (300),
• Senden einer Leseanfrage zum Lesen der verschlüsselten ersten Kopie (126) des ersten kryptografischen Schlüssels (108) von dem Ausstellercomputersystem (400) über die erste Verbindung an den Server (300), wobei die Leseanfrage den bestimmten zweiten anonymisierten Dateinamen (105) zum Identifizieren der verschlüsselten ersten Kopie (126) des ersten kryptografischen Schlüssels (108) auf dem Server (300) umfasst,
• in Antwort auf das Senden der Leseanfrage, Empfangen der verschlüsselten ersten Kopie (126) des ersten kryptografischen Schlüssels (108) durch das Ausstellercomputersystem (400) von dem Server (300) über die erste Verbindung,
• Entschlüsseln der verschlüsselten ersten Kopie (126) des ersten kryptografischen Schlüssels (108) durch das Ausstellercomputersystem (400) unter Verwendung des zweiten privaten kryptografischen Schlüssels (406).

2. Verfahren nach Anspruch 1, wobei die Daten (104) des physischen Dokuments (100) den ersten anonymisierten Dateinamen (106), unter welchem das digitale Dokument (120) in verschlüsselter Form auf einem Server (300) gespeichert ist, und den ersten kryptografischen Schlüssel (108) zum Entschlüsseln des verschlüsselten digitalen Dokuments (120) umfassen.

3. Verfahren nach einem der vorangehenden Ansprüche, wobei das Wiederherstellen des ersten kryptografischen Schlüssels (108) auf einen Empfang einer Verlustmeldung über einen Verlust des physischen Dokuments (100, 180) durch das Ausstellercomputersystem (400) von einem Nutzercomputersystem (200) hin erfolgt und/oder
wobei es sich bei der ersten Verbindung um eine verschlüsselte Kommunikationsverbindung handelt und/oder
wobei das Ausstellercomputersystem (400) die entschlüsselte erste Kopie (126) des ersten kryptografischen Schlüssels (108) über eine zweite Verbindung an das Nutzercomputersystem (200) sendet, wobei es sich bei der zweiten Verbindung um eine verschlüsselte Kommunikationsverbindung handelt.

4. Verfahren nach einem der vorangehenden Ansprüche, wobei mit der gesendeten Leseanfrage ferner ein Lesen des verschlüsselten digitalen Dokuments (120) angefragt wird, wobei das verschlüsselte digitale Dokument (120) zusammen mit der verschlüsselten ersten Kopie (126) des ersten kryptografischen Schlüssels (108) von dem Ausstellercomputersystem (400) empfangen wird.

5. Verfahren nach Anspruch 4, wobei das verschlüsselte digitale Dokument (120) zusammen mit der entschlüsselten ersten Kopie des ersten kryptografischen Schlüssels (108) an das Nutzercomputersystem (200) gesendet wird.

6. Verfahren nach Anspruch 4, wobei das verschlüsselte digitale Dokument (120) durch das Ausstellercomputersystem (400) unter Verwendung der entschlüsselten ersten Kopie (126) des ersten kryptografischen Schlüssels (108) entschlüsselt wird.

7. Verfahren nach Anspruch 6, wobei das Verfahren ferner ein Erstellen einer physischen Zweitschrift (101, 181) des digitalen Dokuments (120) umfasst, welche einen Dokumentenkörper (103, 183) umfasst, wobei das Erstellen der physischen Zweitschrift (101, 181) ein Beschriften des Dokumentenkörpers (103, 183) mit Daten (112, 186) der physischen Zweitschrift (101, 181) umfasst, welche bereitgestellt werden unter Verwendung der von dem entschlüsselten digitalen Dokument (120) bereitgestellten digitalen Datenkopie (122).

8. Verfahren nach Anspruch 7, wobei der Dokumentenkörper (103) der physischen Zweitschrift (101) zusätzlich zu den Daten der digitalen Datenkopie (122) ferner mit einem dritten anonymisierten Dateinamen (116) und einem dritten kryptografischen Schlüssel (118) beschriftet ist, oder
wobei das Verfahren ferner ein Erstellen eines dritten physischen Dokuments (190) umfasst, welches einen Dokumentenkörper (192) umfasst, wobei das Erstellen des dritten physischen Dokuments (190) ein Beschriften des Dokumentenkörpers (192) des dritten physischen Dokuments (190) mit Daten (194) umfasst, welche den dritten anonymisierten Dateinamen (116) und den dritten kryptografischen Schlüssel (118) umfassen.

9. Verfahren nach Anspruch 8, wobei das Verfahren ferner umfasst:
• Erstellen einer digitalen Zweitschrift (121) durch das Ausstellercomputersystem (400), wobei es sich bei der digitalen Zweitschrift (121) um eine digitale Kopie (124) der Daten (112, 186) der physischen Zweitschrift (101, 181) handelt,
• Verschlüsseln der digitalen Zweitschrift (121) durch das Ausstellercomputersystem (400), wobei die verschlüsselte digitale Zweitschrift (121) unter Verwendung des dritten kryptografischen Schlüssels (118) entschlüsselbar ist,
• Aufbauen einer dritten Verbindung über das Netzwerk (160) zwischen dem Ausstellercomputersystem (400) und dem Server (300),
• Senden einer Speicheranfrage mit der verschlüsselten digitalen Zweitschrift (121) zum Speichern der verschlüsselten digitalen Zweitschrift (121) auf dem Server (300) von dem Ausstellercomputersystem (400) über die dritte Verbindung an den Server (300), wobei die Speicheranfrage den dritten anonymisierten Dateinamen (116) zur Verwendung durch den Server (300) bei Speichern der verschlüsselten digitalen Zweitschrift (121) umfasst.

10. Verfahren nach einem der vorangehenden Ansprüche, wobei die personenbezogenen Attribute umfassen: einen Vornamen, einen Nachnamen, ein Geburtsdatum und/oder einen Geburtsort des Inhabers des digitalen Dokuments (120) und/oder
wobei die Kombination von personenbezogenen Attributen des Inhabers des digitalen Dokuments (120) vor der Anwendung der Einwegfunktion ferner um einen Dokumenten-ID-Wert ergänzt wird. und/oder
wobei die Kombination von Attributen des Inhabers des digitalen Dokuments (120) vor der Anwendung der Einwegfunktion ferner um ein Geheimnis des Ausstellers ergänzt wird und/oder
wobei die Leseanfrage ferner eine Aussteller-ID und/oder eine Angabe eines Ausstellungszeitraums, innerhalb dessen das physische Dokument (100, 180) ausgestellt wurde, zum Identifizieren des digitalen Dokuments (120) auf dem Server (300) umfasst.

11. Verfahren nach einem der vorangehenden Ansprüche, wobei unter dem zweiten anonymisierten Dateinamen (105) auf dem Server (300) ferner eine zweite Kopie (128) des ersten kryptografischen Schlüssels (108) gespeichert ist, wobei die zweite Kopie (128) des ersten kryptografischen Schlüssels (108) mit einem vierten öffentlichen kryptografischen Schlüssel (508) eines einer Verwaltungsinstanz zugeordneten vierten asymmetrischen Schlüsselpaars verschlüsselt gespeichert ist, wobei das Verfahren ferner ein Wiederherstellen des ersten kryptografischen Schlüssels (108) durch ein Verwaltungscomputersystem der Verwaltungsinstanz umfasst, wobei in einem geschützten Speicherbereich eines Speichers des Verwaltungscomputersystems ein vierter privater kryptografischer Schlüssel (506) des vierten asymmetrischen Schlüsselpaars der Verwaltungsinstanz gespeichert ist, wobei das Wiederherstellen umfasst:
• Bestimmen des zweiten anonymisierten Dateinamens (105) unter Verwendung der Kombination von personenbezogenen Attributen des Inhabers des digitalen Dokuments (120) durch das Verwaltungscomputersystem,
• Aufbauen einer vierten Verbindung über das Netzwerk (160) zwischen dem Verwaltungscomputersystem und dem Server (300),
• Senden einer Leseanfrage zum Lesen der verschlüsselten zweiten Kopie (128) des ersten kryptografischen Schlüssels (108) von dem Verwaltungscomputersystem über die vierte Verbindung an den Server (300), wobei die Leseanfrage den bestimmten zweiten anonymisierten Dateinamen (105) zum Identifizieren der verschlüsselten zweiten Kopie (128) des ersten kryptografischen Schlüssels (108) auf dem Server (300) umfasst,
• in Antwort auf das Senden der Leseanfrage, Empfangen der verschlüsselten zweiten Kopie (128) des ersten kryptografischen Schlüssels (108) durch das Verwaltungscomputersystem von dem Server (300) über die vierte Verbindung,
• Entschlüsseln der verschlüsselten zweiten Kopie (128) des ersten kryptografischen Schlüssels (108) durch das Verwaltungscomputersystem unter Verwendung des vierten privaten kryptografischen Schlüssels (506).

12. Verfahren nach einem der vorangehenden Ansprüche, wobei das Verfahren ferner ein Bereitstellen des digitalen Dokuments (120) auf dem Nutzercomputersystem (200) unter Verwendung des physischen Dokuments in Form eines ersten physischen Dokuments (100) umfasst, wobei das erste physische Dokument (100) einen mit Daten (104) beschrifteten Dokumentenkörper (102) umfasst, wobei die Daten (104), mit denen der Dokumentenkörper (102) des ersten Dokuments (100) beschriftet ist, den ersten anonymisierten Dateinamen (106) und den ersten kryptografischen Schlüssel (108) umfassen,
wobei das Bereitstellen umfasst:
• Empfangen des von dem ersten physischen Dokument (100) bereitgestellten ersten anonymisierten Dateinamens (106) und ersten kryptografischen Schlüssels (108) durch das Nutzercomputersystem (200),
• Aufbauen einer weiteren Verbindung über ein Netzwerk (160) zwischen dem Nutzercomputersystem (200) und dem Server (300),
• Senden einer Leseanfrage zum Lesen des digitalen Dokuments (120) von dem Nutzercomputersystem (200) über die weitere Verbindung an den Server (300), wobei die Leseanfrage den empfangenen ersten anonymisierten Dateinamen (106) zum Identifizieren des digitalen Dokuments (120) auf dem Server (300) umfasst,
• in Antwort auf das Senden der Leseanfrage, Empfangen des digitalen Dokuments (120) durch das Nutzercomputersystem (200) von dem Server (300) über die weitere Verbindung,
• Bereitstellen des digitalen Dokuments (120) in entschlüsselter Form auf dem Nutzercomputer (200), wobei die Entschlüsselung des digitalen Dokuments (120) unter Verwendung des empfangenen ersten kryptografischen Schlüssels (108) erfolgt.

13. Ausstellercomputersystem (400) eines Ausstellers eines digitalen Dokuments (120) zum Wiederherstellen eines kryptografischen Schlüssels (108) zum Entschlüsseln des verschlüsselten digitalen Dokuments (120), wobei das Ausstellercomputersystem (400) einen Prozessor (410), eine Kommunikationsschnittstelle (414) zur Kommunikation über das Netzwerk (160) und einen Speicher (402) umfasst, wobei in dem Speicher (402) des Ausstellercomputersystems (400) Programminstruktionen (412) gespeichert sind,
wobei das digitale Dokument (120), bei welchem es sich um eine digitale Kopie (122) von Daten (104) eines physischen Dokuments (100, 180) handelt, in verschlüsselter Form unter einem ersten anonymisierten Dateinamen (106) auf einem Server (300) gespeichert ist, wobei auf dem Server (300) ferner eine erste Kopie (126) des kryptografischen Schlüssels (108) zum Entschlüsseln des digitalen Dokuments (120) in verschlüsselter Form unter einem zweiten anonymisierten Dateinamen (105) gespeichert ist, wobei das verschlüsselte digitale Dokument (120) unter Verwendung des kryptografischen Schlüssels (108) entschlüsselbar ist, wobei die erste Kopie (126) des kryptografischen Schlüssels (108) zum Entschlüsseln des digitalen Dokuments (120) mit einem öffentlichen kryptografischen Schlüssel (408) eines dem Aussteller des digitalen Dokuments (120) zugeordneten asymmetrischen Schlüsselpaars verschlüsselt ist,
wobei der zweite anonymisierte Dateiname (105) unter Verwendung einer Kombination von personenbezogenen Attributen des Inhabers des digitalen Dokuments (120) berechnet ist, auf die eine Einwegfunktion angewendet ist,
wobei in einem geschützten Speicherbereich (404) des Speichers (402) des Ausstellercomputersystems (400) ein privater kryptografischer Schlüssel (406) des asymmetrischen Schlüsselpaars des Ausstellers gespeichert ist,
wobei ein Ausführen der Programminstruktionen (412) durch den Prozessor (410) des Ausstellercomputersystems (400) das Ausstellercomputersystem (400) steuert ein Verfahren auszuführen, welches umfasst:
• Bestimmen des zweiten anonymisierten Dateinamens (105) unter Verwendung der Kombination von personenbezogenen Attributen des Inhabers des digitalen Dokuments (120),
• Aufbauen einer Verbindung über das Netzwerk (160) mit dem Server (300),
• Senden einer Leseanfrage zum Lesen der verschlüsselten ersten Kopie (126) des kryptografischen Schlüssels (108) zum Entschlüsseln des digitalen Dokuments (120) über die Verbindung an den Server (300), wobei die Leseanfrage den bestimmten zweiten anonymisierten Dateinamen (105) zum Identifizieren der verschlüsselten ersten Kopie (126) des kryptografischen Schlüssels (108) zum Entschlüsseln des digitalen Dokuments (120) auf dem Server (300) umfasst,
• in Antwort auf das Senden der Leseanfrage, Empfangen der verschlüsselten ersten Kopie (126) des kryptografischen Schlüssels (108) zum Entschlüsseln des digitalen Dokuments (120) über die Verbindung,
• Entschlüsseln der verschlüsselten ersten Kopie (126) des kryptografischen Schlüssels (108) zum Entschlüsseln des digitalen Dokuments (120) unter Verwendung des privaten kryptografischen Schlüssels (406).

14. System (150) zum Wiederherstellen eines kryptografischen Schlüssels (108) zum Entschlüsseln eines verschlüsselten digitalen Dokuments (120), wobei das System (150) ein Austellercomputersystem nach Anspruch 13 und einen Server (300) umfasst, wobei der Server (300) einen Prozessor (304), eine Kommunikationsschnittstelle (308) zur Kommunikation über das Netzwerk (160) und einen Speicher (302) umfasst, wobei in dem Speicher (302) des Servers (300) Programminstruktionen (306) gespeichert sind,
wobei ein Ausführen der Programminstruktionen (306) durch den Prozessor (304) des Servers (300) den Server (300) steuert ein Verfahren auszuführen, welches umfasst:
• Aufbauen einer Verbindung über das Netzwerk (160) mit dem Server (300),
• Empfangen der Leseanfrage des Ausstellercomputersystems (400) zum Lesen der verschlüsselten ersten Kopie (126) des kryptografischen Schlüssels (108) zum Entschlüsseln des digitalen Dokuments (120) über die Verbindung, wobei die Leseanfrage den bestimmten zweiten anonymisierten Dateinamen (105) zum Identifizieren der verschlüsselten ersten Kopie (126) des kryptografischen Schlüssels (108) zum Entschlüsseln des digitalen Dokuments (120) auf dem Server (300) umfasst,
• Identifizieren der verschlüsselten ersten Kopie (126) des kryptografischen Schlüssels (108) zum Entschlüsseln des digitalen Dokuments (120) auf dem Server (300) unter Verwendung des zweiten anonymisierten Dateinamens (105),
• in Antwort auf den Empfang der Leseanfrage, Senden der verschlüsselten ersten Kopie (126) des kryptografischen Schlüssels (108) zum Entschlüsseln des digitalen Dokuments (120) über die Verbindung an das Ausstellercomputersystem (400).

15. System (150) nach Anspruch 14, wobei das System (150) ferner ein Verwaltungscomputersystem (500) einer Verwaltungsinstanz umfasst, wobei das Verwaltungscomputersystem (500) einen Prozessor (510), eine Kommunikationsschnittstelle (514) zur Kommunikation über das Netzwerk (160) und einen Speicher (502) umfasst, wobei in dem Speicher (502) des Verwaltungscomputersystems (500) Programminstruktionen (512) gespeichert sind,
wobei unter dem zweiten anonymisierten Dateinamen (105) auf dem Server (300) ferner eine zweite Kopie (128) des kryptografischen Schlüssels (108) zum Entschlüsseln des digitalen Dokuments (120) gespeichert ist, wobei die zweite Kopie (128) des kryptografischen Schlüssels (108) zum Entschlüsseln des digitalen Dokuments (120) mit einem öffentlichen kryptografischen Schlüssel (508) eines asymmetrischen Schlüsselpaars einer Verwaltungsinstanz verschlüsselt gespeichert ist, wobei in einem geschützten Speicherbereich (504) eines Speichers (502) des Verwaltungscomputersystems (500) ein privater kryptografischer Schlüssel (506) des asymmetrischen Schlüsselpaars der Verwaltungsinstanz gespeichert ist,
wobei ein Ausführen der Programminstruktionen (512) durch den Prozessor (510) des Verwaltungscomputersystems (500) das Verwaltungscomputersystem (500) steuert ein Verfahren auszuführen, welches umfasst:
• Bestimmen des zweiten anonymisierten Dateinamens (105) unter Verwendung der Kombination von personenbezogenen Attributen des Inhabers des digitalen Dokuments (120),
• Aufbauen einer Verbindung über das Netzwerk (160) mit dem Server (300),
• Senden einer Leseanfrage zum Lesen der verschlüsselten zweiten Kopie (128) des kryptografischen Schlüssels (108) zum Entschlüsseln des digitalen Dokuments (120) über die Verbindung an den Server (300), wobei die Leseanfrage den bestimmten zweiten anonymisierten Dateinamen (105) zum Identifizieren der verschlüsselten zweiten Kopie des (128) kryptografischen Schlüssels (108) zum Entschlüsseln des digitalen Dokuments (120) auf dem Server (300) umfasst,
• in Antwort auf das Senden der Leseanfrage, Empfangen der verschlüsselten zweiten Kopie (128) des kryptografischen Schlüssels (108) zum Entschlüsseln des digitalen Dokuments (120) durch das Verwaltungscomputersystem (500) über die Verbindung,
• Entschlüsseln der empfangenen verschlüsselten zweiten Kopie (128) des kryptografischen Schlüssels (108) zum Entschlüsseln des digitalen Dokuments (120) unter Verwendung des privaten kryptografischen Schlüssels (506) der Verwaltungsinstanz, und/oder
wobei das System (150) ferner ein Nutzercomputersystem (200) zum Bereitstellen des digitalen Dokuments (120) unter Verwendung des physischen Dokuments in Form eines ersten physischen Dokuments (100) umfasst, wobei das Nutzercomputersystem (200) einen Prozessor (204), eine Kommunikationsschnittstelle (210) zur Kommunikation über ein Netzwerk (160) und einen Speicher (202) umfasst, wobei in dem Speicher (202) des Nutzercomputersystems (200) Programminstruktionen (206) gespeichert sind,
wobei das erste physische Dokument (100) einen mit Daten (104) beschrifteten Dokumentenkörper (102) umfasst, wobei die Daten (104), mit denen der Dokumentenkörper (102) des ersten physischen Dokuments (100) beschriftet ist, den anonymisierten Dateinamen (106) und den kryptografischen Schlüssel (108) umfassen,
wobei ein Ausführen der Programminstruktionen (206) durch den Prozessor (204) des Nutzercomputersystems (200) das Nutzercomputersystem (200) steuert ein Verfahren auszuführen, welches umfasst:
• Empfangen des anonymisierten Dateinamens (106), unter welchem das digitale Dokument (120) in verschlüsselter Form auf dem Server (300) gespeichert ist, und des kryptografischen Schlüssels (108) zum Entschlüsseln des digitalen Dokuments (120) zum Entschlüsseln des verschlüsselten digitalen Dokuments (120), welche als Teil der Daten (104) bereitstellt, mit denen der Dokumentenkörper (102) des ersten physischen Dokuments (100) beschriftet ist,
• Aufbauen einer Verbindung über ein Netzwerk (160) mit dem Server (300),
• Senden einer Leseanfrage zum Lesen des digitalen Dokuments (120) über die Verbindung an den Server (300), wobei die Leseanfrage den empfangenen anonymisierten Dateinamen (106) zum Identifizieren des digitalen Dokuments (120) auf dem Server (300) umfasst,
• in Antwort auf das Senden der Leseanfrage, Empfangen des digitalen Dokuments (120) von dem Server (300) über die Verbindung,
• Bereitstellen des digitalen Dokuments (120) in entschlüsselter Form auf dem Nutzercomputer (200), wobei die Entschlüsselung des digitalen Dokuments (120) unter Verwendung des empfangenen kryptografischen Schlüssels (108) zum Entschlüsseln des digitalen Dokuments (120) erfolgt.

## Claims

1. A method for recovering a first cryptographic key (108) for decrypting an encrypted digital document (120) by an issuer computer system (400) of an issuer of the digital document (120),
wherein the digital document (120), which is a digital copy (122) of data (104) of a physical document (100, 180), is saved in encrypted form under a first anonymised file name (106) on a server (300), wherein a first copy (126) of the first cryptographic key (108) is further saved in encrypted form under a second anonymised file name (105) on the server (300), wherein the encrypted digital document (120) is decryptable with use of the first cryptographic key (108), wherein the first copy (126) of the first cryptographic key (108) is encrypted with a second public cryptographic key (408) of a second asymmetric key pair assigned to the issuer of the digital document (120),
wherein the second anonymised file name (105) is calculated with use of a combination of personal attributes of the owner of the digital document (120), to which a one-way function is applied,
wherein a second private cryptographic key (406) of the second asymmetric key pair of the issuer is saved in a protected memory area of a memory of the issuer computer system (400), wherein the method comprises:
• determining the second anonymised file name (105) with use of the combination of personal attributes of the owner of the digital document (120) by the issuer computer system (400),
• establishing a first connection via a network (160) between the issuer computer system (400) and the server (300),
• sending a read request to read the encrypted first copy (126) of the first cryptographic key (108) from the issuer computer system (400) via the first connection to the server (300), wherein the read request comprises the determined second anonymised file name (105) for identification of the encrypted first copy (126) of the first cryptographic key (108) on the server (300),
• in response to the sending of the read request, receiving the encrypted first copy (126) of the first cryptographic key (108) by the issuer computer system (400) from the server (300) via the first connection,
• decrypting the encrypted first copy (126) of the first cryptographic key (108) by the issuer computer system (400) with use of the second private cryptographic key (406) .

2. The method according to claim 1, wherein the data (104) of the physical document (100) comprise the first anonymised file name (106), under which the digital document (120) is saved in encrypted form on a server (300), and the first cryptographic key (108) to decrypt the encrypted digital document (120).

3. The method according to any one of the preceding claims, wherein the first cryptographic key (108) is recovered (200) upon receipt, by the issuer computer system (400) from a user computer system, of a loss report concerning a loss of the physical document (100, 180), and/or
wherein the first connection is an encrypted communications connection and/or
wherein the issuer computer system (400) sends the decrypted first copy (126) of the first cryptographic key (108) via a second connection to the user computer system (200), wherein the second connection is an encrypted communications connection.

4. The method according to any one of the preceding claims, wherein a reading of the encrypted digital document (120) is also requested with the sent read request, wherein the encrypted digital document (120) together with the encrypted first copy (126) of the first cryptographic key (108) is received by the issuer computer system (400).

5. The method according to claim 4, wherein the encrypted digital document (120) together with the decrypted first copy of the first cryptographic key (108) is sent to the user computer system (200).

6. The method according to claim 4, wherein the encrypted digital document (120) is decrypted by the issuer computer system (400) with use of the decrypted first copy (126) of the first cryptographic key (108).

7. The method according to claim 6, wherein the method further comprises the creation of a physical duplicate (101, 181) of the digital document (120), said duplicate comprising a document body (103, 183), wherein the creation of the physical duplicate (101, 181) comprises an inscribing of the document body (103, 183) with data (112, 186) of the physical duplicate (101, 181) which are provided with use of the digital data copy (122) provided from the decrypted digital document (120).

8. The method according to claim 7, wherein the document body (103) of the physical duplicate (101), in addition to the data of the digital data copy (122), is also inscribed with a third anonymised file name (116) and a third cryptographic key (118), or
wherein the method further comprises the creation of a third physical document (190) which comprises a document body (192), wherein the creation of the third physical document (190) comprises an inscribing of the document body (192) of the third physical document (190) with data (194) which comprise the third anonymised file name (116) and the third cryptographic key (118).

9. The method according to claim 8, wherein the method further comprises:
• creating a digital duplicate (121) by the issuer computer system (400), wherein the digital duplicate (121) is a digital copy (124) of the data (112, 186) of the physical duplicate (101, 181),
• encrypting the digital duplicate (121) by the issuer computer system (400), wherein the encrypted digital duplicate (121) is decryptable with use of the third cryptographic key (118),
• establishing a third connection via the network (160) between the issuer computer system (400) and the server (300),
• sending a save request with the encrypted digital duplicate (121) to save the encrypted digital duplicate (121) on the server (300) from the issuer computer system (400) via the third connection to the server (300), wherein the save request comprises the third anonymised file name (116) for use by the server (300) when saving the encrypted digital duplicate (121).

10. The method according to any one of the preceding claims, wherein the personal attributes comprise: a first name, a surname, a date of birth and/or a place of birth of the owner of the digital document (120) and/or
wherein the combination of personal attributes of the owner of the digital document (120), prior to the application of the one-way function, is further supplemented by a document ID value and/or
wherein the combination of attributes of the owner of the digital document (120), prior to the use of the one-way function, is further supplemented by a secret of the issuer and/or
wherein the read request further comprises an issuer ID and/or a specification of an issuing time period, within which the physical document (100, 180) was issued, for identification of the digital document (120) on the server (300) .

11. The method according to any one of the preceding claims, wherein a second copy (128) of the first cryptographic key (108) is also saved under the second anonymised file name (105) on the server (300), wherein the second copy (128) of the first cryptographic key (108) is saved encrypted with a fourth public cryptographic key (508) of a fourth asymmetric key pair assigned to an administrative body, wherein the method further comprises recovery of the first cryptographic key (108) by an administrative computer system of the administrative body, wherein a fourth private cryptographic key (506) of the fourth asymmetric key pair of the administrative body is saved in a protected memory area of a memory of the administrative computer system, wherein the recovery comprises:
• determining the second anonymised file name (105) with use of the combination of personal attributes of the owner of the digital document (120) by the administrative computer system,
• establishing a fourth connection via the network (160) between the administrative computer system and the server (300),
• sending a read request to read the encrypted second copy (128) of the first cryptographic key (108) from the administrative computer system via the fourth connection to the server (300), wherein the read request comprises the determined second anonymised file name (105) for identification of the encrypted second copy (128) of the first cryptographic key (108) on the server (300),
• in response to the sending of the read request, receiving the encrypted second copy (128) of the first cryptographic key (108) by the administrative computer system from the server (300) via the fourth connection,
• decrypting the encrypted second copy (128) of the first cryptographic key (108) by the administrative computer system with use of the fourth private cryptographic key (506) .

12. The method according to any one of the preceding claims, wherein the method further comprises providing the digital document (120) on the user computer system (200) with use of the physical document in the form of a first physical document (100), wherein the first physical document (100) comprises a document body inscribed with data (104), wherein the data (104) with which the document body (102) of the first document (100) is inscribed comprise the first anonymised file name (106) and the first cryptographic key (108),
wherein the provision of the digital document comprises:
• receiving, by the user computer system (200), the first anonymised file name (106) and first cryptographic key (108) provided by the first physical document (100),
• establishing a further connection via a network (160) between the user computer system (200) and the server (300),
• sending a read request to read the digital document (120) from the user computer system (200) via the further connection to the server (300), wherein the read request comprises the received first anonymised file name (106) for identification of the digital document (120) on the server (300),
• in response to the sending of the read request, receiving the digital document (120) by the user computer system (200) from the server (300) via the further connection,
• providing the digital document (120) in decrypted form on the user computer (200), wherein the digital document (120) is decrypted with use of the received first cryptographic key (108).

13. An issuer computer system (400) of an issuer of a digital document (120) for recovering a cryptographic key (108) for decrypting the encrypted digital document (120), wherein the issuer computer system (400) comprises a processor (410), a communications interface (414) for communication via the network (160) and a memory (402), wherein program instructions (412) are saved in the memory (402) of the issuer computer system (400),
wherein the digital document (120), which is a digital copy (122) of data (104) of a physical document (100, 180), is saved in encrypted form under a first anonymised file name (106) on a server (300), wherein a first copy (126) of the cryptographic key (108) for decrypting the digital document (120) is further saved in encrypted form under a second anonymised file name (105) on the server (300), wherein the encrypted digital document (120) is decryptable with use of the cryptographic key (108), wherein the first copy (126) of the cryptographic key (108) for decrypting the digital document (120) is encrypted with a public cryptographic key (408) of an asymmetric key pair assigned to the issuer of the digital document (120),
wherein the second anonymised file name (105) is calculated with use of a combination of personal attributes of the owner of the digital document (120), to which a one-way function is applied,
wherein a private cryptographic key (406) of the asymmetric key pair of the issuer is saved in a protected memory area (404) of the memory (402) of the issuer computer system (400),
wherein an execution of the program instructions (412) by the processor (410) of the issuer computer system (400) controls the issuer computer system (400) to carry out a method which comprises:
• determining the second anonymised file name (105) with use of the combination of personal attributes of the owner of the digital document (120),
• establishing a connection via the network (160) to the server (300),
• sending a read request to read the encrypted first copy (126) of the cryptographic key (108) for decrypting the digital document (120) via the connection to the server (300), wherein the read request comprises the determined second anonymised file name (105) for identification of the encrypted first copy (126) of the cryptographic key (108) for decrypting the digital document (120) on the server (300),
• in response to the sending of the read request, receiving the encrypted first copy (126) of the cryptographic key (108) for decrypting the digital document (120) via the connection,
• decrypting the encrypted first copy (126) of the cryptographic key (108) for decrypting the digital document (120) with use of the private cryptographic key (406) .

14. A system (150) for recovering a cryptographic key (108) for decrypting an encrypted digital document (120), wherein the system (150) comprises an issuer computer system according to claim 13 and a server (300), wherein the server (300) comprises a processor (304), a communications interface (308) for communication via the network (160) and a memory (302), wherein program instructions (306) are saved in the memory (302) of the server (300),
wherein an execution of the program instructions (306) by the processor (304) of the server (300) controls the server (300) to carry out a method which comprises:
• establishing a connection via the network (160) to the server (300),
• receiving the read request of the issuer computer system (400) to read the encrypted first copy (126) of the cryptographic key (108) for decrypting the digital document (120) via the connection, wherein the read request comprises the determined second anonymised file name (105) for identification of the encrypted first copy (126) of the cryptographic key (108) for decrypting the digital document (120) on the server (300),
• identifying the encrypted first copy (126) of the cryptographic key (108) for decrypting the digital document (120) on the server (300) with use of the second anonymised file name (105),
• in response to the receipt of the read request, sending the encrypted first copy (126) of the cryptographic key (108) for decrypting the digital document (120) via the connection to the issuer computer system (400).

15. The system (150) according to claim 14, wherein the system (150) further comprises an administrative computer system (500) of an administrative body, wherein the administrative computer system (500) comprises a processor (510), a communications interface (514) for communication via the network (160) and a memory (502), wherein program instructions (512) are saved in the memory (502) of the administrative computer system (500),
wherein a second copy (128) of the cryptographic key (108) for decrypting the digital document (120) is also saved under the second anonymised file name (105) on the server (300), wherein the second copy (128) of the cryptographic key (108) for decrypting the digital document (120) is saved encrypted with a public cryptographic key (508) of an asymmetric key pair of an administrative body, wherein a private cryptographic key (506) of the asymmetric key pair of the administrative body is saved in a protected memory area (504) of a memory (502) of the administrative computer system (500),
wherein an execution of the program instructions (512) by the processor (510) of the administrative computer system (500) controls the administrative computer system (500) to carry out a method which comprises:
• determining the second anonymised file name (105) with use of the combination of personal attributes of the owner of the digital document (120),
• establishing a connection via the network (160) to the server (300),
• sending a read request to read the encrypted second copy (128) of the cryptographic key (108) for decrypting the digital document (120) via the connection to the server (300), wherein the read request comprises the determined second anonymised file name (105) for identification of the encrypted second copy (128) of the cryptographic key (108) for decrypting the digital document (120) on the server (300),
• in response to the sending of the read request, receiving the encrypted second copy (128) of the cryptographic key (108) for decrypting the digital document (120) by the administrative computer system (500) via the connection,
• decrypting the received encrypted second copy (128) of the cryptographic key (108) for decrypting the digital document (120) with use of the private cryptographic key (506) of the administrative body, and/or
wherein the system (150) further comprises a user computer system (200) for providing the digital document (120) with use of the physical document in the form of a first physical document (100), wherein the user computer system (200) comprises a processor (204), a communications interface (210) for communication via a network (160) and a memory (202), wherein program instructions (206) are saved in the memory (202) of the user computer system (200),
wherein the first physical document (100) comprises a document body (102) inscribed with data (104), wherein the data (104) with which the document body (102) of the first document (100) is inscribed comprise the anonymised file name (106) and the cryptographic key (108),
wherein an execution of the program instructions (206) by the processor (204) of the user computer system (200) controls the user computer system (200) to carry out a method which comprises:
• for decrypting the encrypted digital document (120), receiving the anonymised file name (106), under which the digital document (120) is saved in encrypted form on the server (300), and the cryptographic key (108) for decrypting the digital document (120), provided as part of the data (104) with which the document body (102) of the first physical document (100) is inscribed,
• establishing a connection via a network (160) to the server (300),
• sending a read request to read the digital document (120) via the connection to the server (300), wherein the read request comprises the received anonymised file name (106) for identification of the digital document (120) on the server (300),
• in response to the sending of the read request, receiving the digital document (120) from the server (300) via the connection,
• providing the digital document (120) in decrypted form on the user computer (200), wherein the digital document (120) is decrypted with use of the received cryptographic key (108) for decrypting the digital document (120).

## Revendications

1. Procédé de récupération d'une première clé cryptographique (108) permettant de déchiffrer un document numérique (120) chiffré par un système informatique émetteur (400) d'un émetteur du document numérique (120),
dans lequel le document numérique (120), dans le cas duquel il s'agit d'une copie numérique (122) de données (104) d'un document physique (100, 180), est enregistré sous forme chiffrée sous un premier nom de fichier anonymisé (106) sur un serveur (300), dans lequel une première copie (126) de la première clé cryptographique (108) est en outre enregistrée sous forme chiffrée sous un deuxième nom de fichier anonymisé (105) sur le serveur (300), dans lequel le document numérique (120) chiffré peut être déchiffré moyennant l'emploi de la première clé cryptographique (108), dans lequel la première copie (126) de la première clé cryptographique (108) est chiffrée avec une deuxième clé cryptographique publique (408) d'une deuxième paire de clés asymétrique associée à l'émetteur du document numérique (120),
dans lequel le deuxième nom de fichier anonymisé (105) est calculé moyennant l'emploi d'une combinaison d'attributs relatifs à la personne du propriétaire du document numérique (120), sur lesquels est appliquée une fonction unidirectionnelle,
dans lequel une deuxième clé cryptographique privée (406) de la deuxième paire de clés asymétrique de l'émetteur est enregistrée dans une zone de mémoire protégée d'une mémoire du système informatique émetteur (400), le procédé comprenant :
• la détermination du deuxième nom de fichier anonymisé (105) moyennant l'emploi de la combinaison d'attributs relatifs à la personne du propriétaire du document numérique (120) par le système informatique émetteur (400),
• l'établissement d'une première liaison entre le système informatique émetteur (400) et le serveur (300) par le biais d'un réseau (160),
• l'envoi d'une demande de lecture pour la lecture de la première copie (126) chiffrée de la première clé cryptographique (108) à partir du système informatique émetteur (400) vers le serveur (300) par le biais de la première liaison, dans lequel la demande de lecture comprend le deuxième nom de fichier anonymisé (105) déterminé pour l'identification de la première copie (126) chiffrée de la première clé cryptographique (108) sur le serveur (300),
• en réponse à l'envoi de la demande de lecture, la réception de la première copie (126) chiffrée de la première clé cryptographique (108) par le système informatique émetteur (400) à partir du serveur (300) par le biais de la première liaison,
• le déchiffrement de la première copie (126) chiffrée de la première clé cryptographique (108) par le système informatique émetteur (400) moyennant l'emploi de la deuxième clé cryptographique privée (406).

2. Procédé selon la revendication 1, dans lequel les données (104) du document physique (100) comprennent le premier nom de fichier anonymisé (106), sous lequel le document numérique (120) est enregistré sous forme chiffrée sur un serveur (300), et la première clé cryptographique (108) destinée à déchiffrer le document numérique (120) chiffré.

3. Procédé selon l'une des revendications précédentes, dans lequel la récupération de la première clé cryptographique (108) a lieu suite à la réception d'une déclaration de perte concernant une perte du document physique (100, 180) par le système informatique émetteur (400) à partir d'un système informatique d'utilisateur (200), et/ou
dans lequel, dans le cas de la première liaison, il s'agit d'une liaison de communication chiffrée, et/ou
dans lequel le système informatique émetteur (400) envoie la première copie (126) déchiffrée de la première clé cryptographique (108) au système informatique d'utilisateur (200) par le biais d'une deuxième liaison, dans lequel, dans le cas de la deuxième liaison, il s'agit d'une liaison de communication chiffrée.

4. Procédé selon l'une des revendications précédentes, dans lequel une lecture du document numérique (120) chiffré est également demandée avec la demande de lecture envoyée, dans lequel le document numérique (120) chiffré est reçu conjointement avec la première copie (126) chiffrée de la première clé cryptographique (108) par le système informatique émetteur (400).

5. Procédé selon la revendication 4, dans lequel le document numérique (120) chiffré est envoyé conjointement avec la première copie déchiffrée de la première clé cryptographique (108) au système informatique d'utilisateur (200).

6. Procédé selon la revendication 4, dans lequel le document numérique (120) chiffré est déchiffré par le système informatique émetteur (400) moyennant l'emploi de la première copie (126) déchiffrée de la première clé cryptographique (108).

7. Procédé selon la revendication 6, dans lequel le procédé comprend en outre la création d'une reproduction physique (101, 181) du document numérique (120), laquelle reproduction comprend un corps de document (103, 183), dans lequel la création de la reproduction physique (101, 181) comprend une inscription dans le corps de document (103, 183) de données (112, 186) de la reproduction physique (101, 181), lesquelles sont fournies moyennant l'emploi de la copie de données (122) numérique fournie à partir du document numérique (120) déchiffré.

8. Procédé selon la revendication 7, dans lequel le corps de document (103) de la reproduction physique (101), en plus des données de la copie de données (122) numérique, a également, inscrits dans celui-ci, un troisième nom de fichier anonymisé (116) et une troisième clé cryptographique (118), ou
dans lequel le procédé comprend en outre la création d'un troisième document physique (190), lequel comprend un corps de document (192), dans lequel la création du troisième document physique (190) comprend une inscription dans le corps de document (192) du troisième document physique (190) de données (194), lesquelles comprennent le troisième nom de fichier (116) anonymisé et la troisième clé cryptographique (118).

9. Procédé selon la revendication 8, dans lequel le procédé comprend en outre :
• la création d'une reproduction numérique (121) par le système informatique émetteur (400), dans lequel, dans le cas de la reproduction numérique (121), il s'agit d'une copie numérique (124) des données (112, 186) de la reproduction physique (101, 181),
• le chiffrement de la reproduction numérique (121) par le système informatique émetteur (400), dans lequel la reproduction numérique (121) chiffrée peut être déchiffrée moyennent l'emploi de la troisième clé cryptographique (118),
• la mise en place d'une troisième liaison entre le système informatique émetteur (400) et le serveur (300) par le biais du réseau (160),
• l'envoi d'une demande d'enregistrement avec la reproduction numérique (121) chiffrée pour enregistrer la reproduction numérique (121) chiffrée sur le serveur (300) à partir du système informatique émetteur (400) vers le serveur (300) par le biais de la troisième liaison, dans lequel la demande d'enregistrement comprend le troisième nom de fichier anonymisé (116) pour l'emploi par le serveur (300) lors de l'enregistrement de la reproduction numérique (121) chiffrée.

10. Procédé selon l'une des revendications précédentes, dans lequel les attributs relatifs à la personne comprennent : un prénom, un nom, une date de naissance et/ou un lieu de naissance du propriétaire du document numérique (120), et/ou
dans lequel la combinaison d'attributs relatifs à la personne du propriétaire du document numérique (120) est en outre complétée par une valeur d'ID de document avant l'application de la fonction unidirectionnelle, et/ou
dans lequel la combinaison d'attributs du propriétaire du document numérique (120) est en outre complétée par un secret de l'émetteur avant l'application de la fonction unidirectionnelle, et/ou
dans lequel la demande de lecture comprend en outre un ID d'émetteur et/ou une indication d'une période d'émission pendant laquelle le document physique (100, 180) a été émis, pour l'identification du document numérique (120) sur le serveur (300).

11. Procédé selon l'une des revendications précédentes, dans lequel une deuxième copie (128) de la première clé cryptographique (108) est également enregistrée sous le deuxième nom de fichier anonymisé (105) sur le serveur (300), dans lequel la deuxième copie (128) de la première clé cryptographique (108) est enregistrée chiffrée avec une quatrième clé cryptographique publique (508) d'une quatrième paire de clés asymétrique associée à une instance de gestion, dans lequel le procédé comprend en outre la récupération de la première clé cryptographique (108) par un système informatique de gestion de l'instance de gestion, dans lequel une quatrième clé cryptographique privée (506) de la quatrième paire de clés asymétrique de l'instance de gestion est enregistrée dans une zone de mémoire protégée d'une mémoire du système informatique de gestion, dans lequel la récupération comprend :
• la détermination du deuxième nom de fichier anonymisé (105) moyennant l'emploi de la combinaison d'attributs relatifs à la personne du propriétaire du document numérique (120) par le système informatique de gestion,
• la mise en place d'une quatrième liaison entre le système informatique de gestion et le serveur (300) par le biais du réseau (160),
• l'envoi d'une demande de lecture pour lire la deuxième copie (128) chiffrée de la première clé cryptographique (108) à partir du système informatique de gestion vers le serveur (300) par le biais de la quatrième liaison, dans lequel la demande de lecture comprend le deuxième nom de fichier anonymisé (105) déterminé pour l'identification de la deuxième copie (128) chiffrée de la première clé cryptographique (108) sur le serveur (300),
• en réponse à l'envoi de la demande de lecture, la réception de la deuxième copie (128) chiffrée de la première clé cryptographique (108) par le système informatique de gestion à partir du serveur (300) par le biais de la quatrième liaison,
• le déchiffrement de la deuxième copie (128) chiffrée de la première clé cryptographique (108) par le système informatique de gestion moyennant l'emploi de la quatrième clé cryptographique privée (506).

12. Procédé selon l'une des revendications précédentes, dans lequel le procédé comprend en outre une fourniture du document numérique (120) sur le système informatique d'utilisateur (200) moyennant l'emploi du document physique sous la forme d'un premier document physique (100), dans lequel le premier document physique (100) comprend un corps de document (102) où sont inscrites des données (104), dans lequel les données (104), inscrites dans le corps de document (102) du premier document (100), comprennent le premier nom de fichier anonymisé (106) et la première clé cryptographique (108),
dans lequel la fourniture comprend :
• la réception du premier nom de fichier anonymisé (106) et de la première clé cryptographique (108) fournis à partir du premier document physique (100) par le système informatique d'utilisateur (200),
• la mise en place d'une liaison supplémentaire par le biais d'un réseau (160) entre le système informatique d'utilisateur (200) et le serveur (300),
• l'envoi d'une demande de lecture pour lire le document numérique (120) à partir du système informatique d'utilisateur (200) par le biais de la liaison supplémentaire vers le serveur (300), dans lequel la demande de lecture comprend le premier nom de fichier anonymisé (106) reçu pour l'identification du document numérique (120) sur le serveur (300),
• en réponse à l'envoi de la demande de lecture, la réception du document numérique (120) par le système informatique d'utilisateur (200) à partir du serveur (300) par le biais de la liaison supplémentaire,
• la fourniture du document numérique (120) sous forme déchiffrée sur l'ordinateur d'utilisateur (200), dans lequel le document numérique (120) est déchiffré moyennant l'emploi de la première clé cryptographique (108) reçue.

13. Système informatique émetteur (400) d'un émetteur d'un document numérique (120) destiné à récupérer une clé cryptographique (108) pour déchiffrer le document numérique (120) chiffré, dans lequel le système informatique émetteur (400) comprend un processeur (410), une interface de communication (414) permettant la communication par le biais du réseau (160), et une mémoire (402), dans lequel des instructions de programme (412) sont enregistrées dans la mémoire (402) du système informatique émetteur (400),
dans lequel le document numérique (120), chez lequel il s'agit d'une copie numérique (122) de données (104) d'un document physique (100, 180), est enregistré sous forme chiffrée sous un premier nom de fichier anonymisé (106) sur un serveur (300), dans lequel une première copie (126) de la clé cryptographique (108) permettant le déchiffrement du document numérique (120) est en outre enregistrée sous forme chiffrée sous un deuxième nom de fichier anonymisé (105) sur le serveur (300), dans lequel le document numérique (120) chiffré peut être déchiffré moyennant l'emploi de la clé cryptographique (108), dans lequel la première copie (126) de la clé cryptographique (108) pour déchiffrer le document numérique (120) est chiffrée avec une clé cryptographique publique (408) d'une paire de clés asymétrique associée à l'émetteur du document numérique (120),
dans lequel le deuxième nom de fichier anonymisé (105) est calculé moyennant l'emploi d'une combinaison d'attributs relatifs à la personne du propriétaire du document numérique (120), sur lesquels est appliquée une fonction unidirectionnelle,
dans lequel une clé cryptographique privée (406) de la paire de clés asymétrique de l'émetteur est enregistrée dans une zone de mémoire (404) protégée de la mémoire (402) du système informatique émetteur (400),
dans lequel une exécution des instructions de programme (412) par le processeur (410) du système informatique émetteur (400) commande au système informatique émetteur (400) d'exécuter un procédé, lequel comprend :
• la détermination du deuxième nom de fichier anonymisé (105) moyennant l'emploi de la combinaison d'attributs relatifs à la personne du propriétaire du document numérique (120),
• la mise en place d'une liaison avec le serveur (300) par le biais du réseau (160),
• l'envoi d'une demande de lecture pour la lecture de la première copie (126) chiffrée de la clé cryptographique (108) permettant le déchiffrement du document numérique (120) par le biais de la liaison vers le serveur (300), dans lequel la demande de lecture comprend le deuxième nom de fichier anonymisé (105) déterminé pour l'identification de la première copie (126) chiffrée de la clé cryptographique (108) permettant le déchiffrement du document numérique (120) sur le serveur (300),
• en réponse à l'envoi de la demande de lecture, la réception de la première copie (126) chiffrée de la clé cryptographique (108) pour déchiffrer le document numérique (120) par le biais de la liaison,
• le déchiffrement de la première copie (126) chiffrée de la clé cryptographique (108) permettant le déchiffrement du document numérique (120) moyennant l'emploi de la deuxième clé cryptographique privée (406).

14. Système (150) destiné à récupérer une clé cryptographique (108) pour déchiffrer un document numérique (120) chiffré, dans lequel le système (150) comprend un système informatique émetteur selon la revendication 13 et un serveur (300), dans lequel le serveur (300) comprend un processeur (304), une interface de communication (308) permettant la communication par le biais du réseau (160), et une mémoire (302), dans lequel des instructions de programme (306) sont enregistrées dans la mémoire (302) du serveur (300),
dans lequel une exécution des instructions de programme (306) par le processeur (304) du serveur (300) commande le serveur (300) pour exécuter un procédé, lequel comprend :
• la mise en place d'une liaison avec le serveur (300) par le biais du réseau (160),
• la réception de la demande de lecture du système informatique émetteur (400) pour lire la première copie (126) chiffrée de la clé cryptographique (108) permettant de déchiffrer le document numérique (120) par le biais de la liaison, dans lequel la demande de lecture comprend le deuxième nom de fichier anonymisé (105) déterminé permettant l'identification de la première copie (126) chiffrée de la clé cryptographique (108) pour déchiffrer le document numérique (120) sur le serveur (300),
• l'identification de la première copie (126) chiffrée de la clé cryptographique (108) pour déchiffrer le document numérique (120) sur le serveur (300) moyennant l'emploi du deuxième nom de fichier anonymisé (105),
• en réponse à la réception de la demande de lecture, l'envoi de la première copie (126) chiffrée de la clé cryptographique (108) pour déchiffrer le document numérique (120) vers le système informatique émetteur (400) par le biais de la liaison.

15. Système (150) selon la revendication 14, dans lequel le système (150) comprend en outre un système informatique de gestion (500) d'une instance de gestion, dans lequel le système informatique de gestion (500) comprend un processeur (510), une interface de communication (514) permettant la communication par le biais du réseau (160), et une mémoire (502), dans lequel des instructions de programme (512) sont enregistrées dans la mémoire (502) du système informatique de gestion (500),
dans lequel une deuxième copie (128) de la clé cryptographique (108) pour déchiffrer le document numérique (120) est également enregistrée sur le serveur (300) sous le deuxième nom de fichier anonymisé (105), dans lequel la deuxième copie (128) de la clé cryptographique (108) pour déchiffrer le document numérique (120) est enregistrée chiffrée avec une clé cryptographique publique (508) d'une paire de clés asymétrique d'une instance de gestion, dans lequel une clé cryptographique privée (506) de la paire de clés cryptographiques asymétrique de l'instance de gestion est enregistrée dans une zone de mémoire protégée (504) d'une mémoire (502) d'un système informatique de gestion (500),
dans lequel une exécution des instructions de programme (512) par le processeur (510) du système informatique de gestion (500) commande au système informatique de gestion (500) d'exécuter un procédé, lequel comprend :
• la détermination du deuxième nom de fichier anonymisé (105) moyennant l'emploi de la combinaison d'attributs relatifs à la personne du propriétaire du document numérique (120),
• la mise en place d'une liaison avec le serveur (300) par le biais d'un réseau (160),
• l'envoi d'une demande de lecture pour la lecture de la deuxième copie (128) chiffrée de la clé cryptographique (108) pour déchiffrer le document numérique (120) vers le serveur (300) par le biais de la liaison, dans lequel la demande de lecture comprend le deuxième nom de fichier anonymisé (105) déterminé pour identifier la deuxième copie (128) chiffrée de la clé cryptographique (108) pour déchiffre le document numérique (120) sur le serveur (300),
• en réponse à l'envoi de la demande de lecture, la réception de la deuxième copie (128) chiffrée de la clé cryptographique (108) pour déchiffrer le document numérique (120) par le système informatique de gestion (500) par le biais de la liaison,
• le déchiffrement de la deuxième copie (128) chiffrée reçue de la clé cryptographique (108) pour déchiffrer le document numérique (120) moyennant l'emploi de la clé cryptographique privée (506) de l'instance de gestion, et/ou
dans lequel le système (150) comprend en outre un système informatique d'utilisateur (200) pour fournir le document numérique (120) moyennant l'emploi du document physique sous la forme d'un premier document physique (100), dans lequel le système informatique d'utilisateur (200) comprend un processeur (204), une interface de communication (210) permettant la communication par le biais d'un réseau (160), et une mémoire (202), dans lequel des instructions de programme (206) sont enregistrées dans la mémoire (202) du système informatique d'utilisateur (200),
dans lequel le premier document physique (100) comprend un corps de document (102) où sont inscrites des données (104), dans lequel les données (104) inscrites dans le corps de document (102) du premier document (100), comprennent le nom de fichier anonymisé (106) et la clé cryptographique (108),
dans lequel une exécution des instructions de programme (206) par le processeur (204) du système informatique d'utilisateur (200) commande le système informatique d'utilisateur (200) pour exécuter un procédé, lequel comprend :
• la réception du nom de fichier anonymisé (106), sous lequel le document numérique (120) est enregistré sous forme chiffrée sur le serveur (300), et de la clé cryptographique (108) permettant le déchiffrement du document numérique (120) pour déchiffrer le document numérique (120) chiffré, fourni sous la forme d'une partie des données (104) inscrites dans le corps de document (102) du premier document physique (100),
• la mise en place d'une liaison avec le serveur (300) par le biais d'un réseau (160),
• l'envoi d'une demande de lecture pour lire le document numérique (120) par le biais de la liaison vers le serveur (300), dans lequel la demande de lecture comprend le nom de fichier anonymisé (106) reçu pour l'identification du document numérique (120) sur le serveur (300),
• en réponse à l'envoi de la demande de lecture, la réception du document numérique (120) à partir du serveur (300) par le biais de la liaison,
• la fourniture du document numérique (120) sous forme déchiffrée sur l'ordinateur d'utilisateur (200), dans lequel le document numérique (120) est déchiffré moyennant l'emploi de la clé cryptographique (108) reçue pour déchiffrer le document numérique (120).
